# EUROPEAN PATENT APPLICATION

(11) **EP 4 530 022 A2**
(43) Date of publication of application: **02.04.2025**
(21) Application number: 24202416.4
(22) Date of filing: 25.09.2024
(51) Int. Cl.: B25F 5/00, B25F 5/02

(54) **POWER TOOL APPARATUS**

(30) Priority: 26.09.2023 CN 202311248458; 12.10.2023 CN 202322751507 U; 12.10.2023 CN 202322771986 U; 12.10.2023 CN 202322747317 U; 12.10.2023 CN 202311324114; 27.12.2023 CN 202323588567 U
(71) Applicant: Greenworks (Jiangsu) Co., Ltd., Changzhou, Jiangsu 213023 (CN)
(72) Inventor: SHEN, Jun, Changzhou, 213023 (CN); LI, Jingshan, Changzhou, 213023 (CN); ZHANG, Lingao, Changzhou, 213023 (CN); HUO, Xiaohui, Changzhou, 213023 (CN); FENG, Yan, Changzhou, 213023 (CN); YU, Xinxin, Changzhou, 213023 (CN); HUANG, Shu, Changzhou, 213023 (CN)
(74) Representative: Bergenstråhle & Partners AB

(57) **Abstract**

A power tool apparatus includes a housing, a control board, a working part, a motor and a fan. The housing has a battery pack cavity. The battery pack cavity is configured to install a battery pack. The control board is disposed within the housing. The working part is disposed on the housing. The motor is disposed within the housing. The motor drives the working part to operate. The air duct is disposed within the housing. The air duct is configured for heat dissipation of the power tool apparatus. The fan is fixedly connected to an output shaft of the motor. The fan is configured to drive air to flow along the air duct when rotating. The housing has at least two air inlets and at least one first air outlet. The air duct is disposed between the air inlets and the first air outlet.

## Description

### Technical field

The present invention is related to a power tool apparatus, and more particularly related to a power tool apparatus powered by battery.

### Background art

Cutting tools are essential implements in gardening and landscaping, allowing users to trim, prune, and shape various plants with precision and efficiency. Traditionally, many of these tools have been powered by small internal combustion engines, which use fuel such as gasoline or a mixture of gasoline and oil. These fuel-powered tools have long been favored for their portability and ability to deliver high power output for extended periods.

However, fuel-powered cutting tools come with several drawbacks that have become increasingly problematic in recent years. One of the most noticeable issues is the strong odor produced by the combustion of fuel. This smell can be unpleasant for the user and may linger in the garden area long after the work is completed. Moreover, the emissions from these engines contribute to air pollution, raising environmental concerns particularly in urban and suburban areas where gardens are often in close proximity to living spaces.

Noise pollution is another significant issue associated with fuel-powered cutting tools. The loud, persistent noise produced by these tools can be disruptive to both the user and surrounding neighbors. In many residential areas, there are restrictions on the times when such noisy equipment can be operated, limiting the flexibility of when gardening tasks can be performed.

In response to these challenges, there has been a growing shift towards electrically powered cutting tools. These tools, powered by either corded electricity or rechargeable batteries, offer several advantages over their fuel-powered counterparts. They produce no direct emissions, operate much more quietly, and don't generate the unpleasant odors associated with fuel combustion.

However, electrically powered tools come with their own set of challenges. Battery-powered tools, while offering greater portability, may have limited run times and require frequent recharging. This can be inconvenient for users working on larger gardens or for extended periods. Additionally, the batteries themselves have environmental implications in terms of production and disposal.

One of the most significant challenges with electrically powered cutting tools is heat management. The electric motors in these tools can generate substantial heat during operation, especially when used for prolonged periods or under heavy loads. Without proper heat dissipation, this can lead to reduced performance, shortened tool lifespan, and potential discomfort for the user holding the tool.

Given these various challenges, there is a clear need for innovative approaches in the design of power tools for gardening and landscaping. Ideal solutions would address the environmental and user comfort issues associated with both fuel-powered and electric tools, while maintaining or improving performance and usability.

Power tools generally refer to tools that use electricity as their power source, such as electric drills, electric wrenches, electric screwdrivers, electric scissors, electric hammers, electric planers, electric grinders, and electric saws. In the field of gardening, power tools typically refer to electrically driven tools used in gardening, such as electric shears, chainsaws, and hedge trimmers.

Power tools have advantages such as low vibration, low noise, and low pollution. However, power tools require relatively good heat dissipation capabilities. The heat dissipation capacity of existing power tools is relatively poor. When working under high outdoor temperatures, the machines can easily trigger high-temperature protection, affecting the user's work. In particular, existing power tools often have a single air inlet. Once the air inlet is blocked by debris or foreign objects, it can quickly lead to a temperature rise in the power tool, triggering high-temperature protection and affecting the user's work.

Therefore, it is beneficial for engineers and designers to focus on detailed improvements and novel designs for power tool devices used in cutting machines and other gardening equipment. This could involve developing more efficient electric motors, improving battery technology, enhancing heat dissipation systems, or even exploring alternative power sources. By addressing these challenges, manufacturers can provide gardeners and landscaping professionals with tools that are not only more environmentally friendly and user-friendly but also more efficient and effective in their primary cutting tasks.

### Summary of invention

In some embodiments, a power tool apparatus includes a housing, a control board, a working part, a motor and a fan.

The housing has a battery pack cavity.

The battery pack cavity is configured to install a battery pack.

The control board is disposed within the housing.

The working part is disposed on the housing.

The motor is disposed within the housing.

The motor drives the working part to operate.

The air duct is disposed within the housing.

The air duct is configured for heat dissipation of the power tool apparatus.

The fan is fixedly connected to an output shaft of the motor.

The fan is configured to drive air to flow along the air duct when rotating.

The housing has at least two air inlets and at least one first air outlet.

The air duct is disposed between the air inlets and the first air outlet.

In some embodiments, the air duct has a confluence opening.

Air flows from at least two of the air inlets converge into the confluence opening.

In some embodiments, the confluence opening is disposed between the battery pack cavity and the control board.

In some embodiments, heat dissipation columns are disposed on the back side of the control board.

A first air guide plate is disposed below the confluence opening.

A second air guide plate is disposed on the side of the control board near the confluence opening.

The second air guide plate extends in a direction away from the heat dissipation columns.

Both the first air guide plate and the second air guide plate direct air flow towards the heat dissipation columns.

In some embodiments, a filtering device is disposed at the air inlets.

In some embodiments, a guiding part covering the motor is disposed within the housing.

The guiding part is disposed between the confluence opening and the first air outlet of the air duct.

In some embodiments, the guiding part has a guiding inlet.

The guiding inlet and the confluence opening are disposed on opposite sides of the control board.

In some embodiments, the housing includes a first housing, a second housing, and an upper housing.

The upper housing is disposed above the battery pack cavity.

The air inlets include two or more, e.g. a first air inlet disposed on the side wall of the housing, a second air inlet disposed at the bottom of the battery pack cavity, a third air inlet disposed at the connection between the first housing and the upper housing, a fourth air inlet disposed at the connection between the second housing and the upper housing, and a fifth air inlet disposed at the top of the side wall of the battery pack cavity.

In some embodiments, a recessed groove that dents inward to the housing is disposed at the connection between the first housing and the upper housing.

The third air inlet is disposed at the inner top of the recessed groove.

In some embodiments, the housing includes a first housing and a second housing.

The power tool apparatus has several wire connecting parts for connecting wire harnesses.

All the wire connecting parts are disposed on a visible surface of the power tool apparatus after the first housing is removed.

In some embodiments, the battery pack cavity is fixed on the housing.

The wire connecting parts are disposed on the side wall of the battery pack cavity near the second housing.

In some embodiments, the motor has a motor housing.

The fan has fan blades.

The outer diameter of the fan blades is larger than the outer diameter of the motor housing.

In some embodiments, the power tool apparatus further includes a volute casing.

The volute casing is fitted over the fan.

The volute casing has a spiral passage.

The spiral passage gradually widens along the rotation direction of the fan.

The volute casing has a second air outlet.

The second air outlet is disposed at the first air outlet.

In some embodiments, a wind-closing plate is disposed at the second air outlet.

The wind-closing plate extends from the second air outlet of the volute casing in the direction opposite to the fan's rotation direction.

In some embodiments, a perpendicular line passing through the end face of the wind-closing plate passes through the center of the fan.

In some embodiments, the working part includes a cutting assembly..

The power tool apparatus further includes: a lubrication device disposed within the housing.

The lubrication device includes an oil pump and an oil bottle.

One end of the oil pump is connected to the oil bottle and the other end is connected to the cutting assembly..

The oil pump includes a pump body.

The pump body has a first positioning member and a second positioning member.

A center line connecting the first positioning member and the second positioning member is offset from the center line of the pump body..

The pump body also has at least one mounting hole.

In some embodiments, the first positioning member and the second positioning member are positioning pins protruding from the surface of the pump body.

Corresponding positioning holes that mate with the positioning pins are disposed on the housing.

In some embodiments, the oil pump further includes a transmission piece and a worm.

The transmission piece is coaxially fixed with the output shaft of the motor.

The worm is coaxially arranged with the transmission piece and is meshed with a driving turbine inside the pump body.

A transmission device for driving the worm to rotate is disposed between the worm and the transmission piece.

In some embodiments, the first positioning member and the second positioning member are symmetrically distributed with respect to the perpendicular line of the center of the worm to the center line of the pump body.

In some embodiments, the ratio of the total cross-sectional area of the air inlets to the total cross-sectional area of the first air outlet is 0.8~2.0.

Given the shortcomings of the existing technology mentioned above, this invention provides a power tool to address technical issues such as poor heat dissipation in existing power tools and the tendency to trigger high-temperature protection.

To achieve the above-mentioned purpose and other related objectives, this invention provides a power tool. The power tool includes:

A housing, on which a battery pack cavity is arranged. The battery pack cavity is configured to install a battery pack.

A control board, located within the housing.

A working part, mounted on the housing.

A motor, located within the housing. The motor drives the working part to operate.

An air duct, set within the housing, for heat dissipation of the power tool.

A fan, fixed to the output shaft of the motor, to drive air flow along the air duct when rotating.

The housing has at least two air inlets and at least one first air outlet. The air duct is arranged between the air inlets and the first air outlet.

In an exemplary embodiment of this application, the air duct has a confluence opening, where airflows from at least two air inlets converge into the confluence opening.

In an exemplary embodiment of this application, the confluence opening is arranged between the battery pack cavity and the control board.

In an exemplary embodiment of this application, heat dissipation columns are arranged on the back side of the control board. A first air guide plate is arranged below the confluence opening. A second air guide plate is arranged on the side of the control board near the confluence opening. The second air guide plate extends in a direction away from the heat dissipation columns. The first air guide plate and the second air guide plate work together to direct airflow towards the heat dissipation columns.

In an exemplary embodiment of this application, a filtering device is arranged at the air inlets.

In an exemplary embodiment of this application, a guiding part covering the motor is arranged inside the housing. The guiding part is arranged between the confluence opening of the air duct and the first air outlet.

In an exemplary embodiment of this application, the guiding part has a guiding inlet. The guiding inlet and the confluence opening are arranged on opposite sides of the control board.

In an exemplary embodiment of this application, the housing includes a first housing, a second housing, and an upper housing. The upper housing is arranged above the battery pack cavity. The air inlets include one or more of the following: a first air inlet arranged on the side wall of the housing, a second air inlet arranged at the bottom of the battery pack cavity, a third air inlet arranged at the connection between the first housing and the upper housing, a fourth air inlet arranged at the connection between the second housing and the upper housing, and a fifth air inlet arranged at the top of the side wall of the battery pack cavity.

In an exemplary embodiment of this application, a recessed groove that dents inward to the housing is arranged at the connection between the first housing and the upper housing. The third air inlet is arranged at the inner top of the recessed groove.

In an exemplary embodiment of this application, the housing includes a first housing and a second housing. The power tool has several wire connecting parts for connecting wire harnesses. All the wire connecting parts are arranged on a visible surface of the power tool after the first housing is removed.

In an exemplary embodiment of this application, the battery pack cavity is fixed on the housing. The wire connecting parts are arranged on the side wall of the battery pack cavity near the second housing.

In an exemplary embodiment of this application, the motor has a motor housing, and the fan has fan blades. The outer diameter of the fan blades is larger than the outer diameter of the motor housing.

In an exemplary embodiment of this application, the power tool also includes a volute casing. The volute casing is fitted over the fan. The volute casing has a spiral passage that gradually widens along the rotation direction of the fan. The volute casing has a second air outlet, which is arranged at the location of the first air outlet.

In an exemplary embodiment of this application, a wind-closing plate is arranged at the second air outlet. The wind-closing plate extends from the second air outlet of the volute casing in the direction opposite to the fan's rotation direction.

In an exemplary embodiment of this application, a perpendicular line passing through the end face of the wind-closing plate passes through the center of the fan.

In an exemplary embodiment of this application, the working part includes a cutting assembly. The power tool also includes:

A lubrication device, arranged within the housing. The lubrication device includes an oil pump and an oil bottle. One end of the oil pump is connected to the oil bottle, and the other end is connected to the cutting assembly. The oil pump includes a pump body. The pump body has a first positioning member and a second positioning member. The center line connecting the first positioning member and the second positioning member is offset from the center line of the pump body. The pump body also has at least one mounting hole.

In an exemplary embodiment of this application, the first positioning member and the second positioning member are positioning pins protruding from the surface of the pump body. Corresponding positioning holes that mate with the positioning pins are arranged on the housing.

In an exemplary embodiment of this application, the oil pump also includes a transmission piece and a worm. The transmission piece is coaxially fixed with the output shaft of the motor. The worm is coaxially arranged with the transmission piece and is meshed with a driving turbine inside the pump body. A transmission device for driving the worm to rotate is arranged between the worm and the transmission piece.

In an exemplary embodiment of this application, the first positioning member and the second positioning member are symmetrically distributed with respect to the perpendicular line of the center of the worm to the center line of the pump body.

In an exemplary embodiment of this application, the ratio of the total cross-sectional area of the air inlets to the total cross-sectional area of the first air outlet is 0.8~2.0.

The beneficial effects of this invention are as follows:

Existing power tools have poor heat dissipation effects. This application, by arranging an air duct and at least two air inlets on the housing, provides more air inlets, which is more conducive to air intake into the housing, thereby improving heat dissipation capacity. At the same time, setting up multiple air inlets ensures that when one air inlet is partially or fully blocked by debris or weeds, the remaining air inlets can still allow air to flow through the air duct, thus meeting the cooling needs of the power tool and reducing the occurrence of overheating protection due to excessively high temperatures in the power tool.

Chainsaws are commonly used gardening tools, but they often experience oil leakage issues during use. The main cause of oil leakage is temperature differences. For example, when a chainsaw is moved from a cold environment to a warm one, the oil expands, significantly increasing the internal pressure of the oil tank. In this situation, even when not running, pressure is applied to the oil through the pump assembly, leading to leaks.

Given this, it is necessary to propose improvements to existing oil tanks to address the aforementioned problem.

The purpose of this invention is to provide an anti-leak oil tank that can balance the pressure inside the oil tank using a pressure balancing component in situations with temperature differences, thus solving the oil leakage problem.

To achieve this goal, this invention provides an anti-leak oil tank. It includes an oil tank body with an internal cavity for storing oil, a cover that can be detachably connected to the top of the oil tank body to seal the cavity, an oil pump assembly connected to the bottom of the oil tank body configured to pump oil from the cavity, and a pressure balancing component. This pressure balancing component consists of a deformable member and a pipe connected to it, with one end of the pipe connected to the internal cavity of the deformable member.

The deformable member is designed to change shape when the pressure in the cavity increases or decreases, thus balancing the pressure in the cavity. It can be placed either inside or outside the cavity. When inside, one end of the pipe connects to its internal cavity while the other end connects to external air. As oil levels or temperatures change within the tank, causing pressure fluctuations, the deformable member expands or contracts accordingly, either expelling air to the outside or allowing it in, thus maintaining pressure balance.

When placed outside the cavity, the pipe connects the deformable member to the cavity directly. In this configuration, oil or gas from the cavity flows into the deformable member's cavity through the pipe when pressure increases, and back into the main cavity when pressure decreases.

The oil tank body features an installation hole in its side wall for the pipe, which is sealed to the tank body and extends towards the top inside the cavity. This positions the deformable member near the top of the oil tank body. The cavity itself is designed to have a variable volume to maintain pressure balance with external air.

The oil pump assembly includes an oil pump and a delivery channel extending from the bottom of the oil tank body into the tank. This delivery channel is positioned lower than the pipe. Both the delivery channel and the pipe are placed on the same side of the oil tank body.

The beneficial effect of this invention is clear: By incorporating a pressure balancing component with a deformable member, the anti-leak oil tank can effectively manage internal pressure changes, preventing oil leakage under various conditions.

In view of the shortcomings of the prior art mentioned above, this utility model provides an electric chain saw to improve the poor heat dissipation effect of existing electric chain saws and address the technical problem of the motor easily overheating.

To achieve the above-mentioned purpose and other related purposes, this utility model provides an electric chain saw, comprising:

A housing, wherein the housing is provided with a first air inlet and a first air outlet;

A cutting tool, mounted on the housing, and including a saw chain and a guide bar for supporting the saw chain;

A motor, fixed inside the housing, used to drive the cutting tool to operate, the motor including a motor casing;

A fan, fixed to the output shaft of the motor, the fan discharging the airflow entering the housing through the first air outlet, the fan including fan blades;

Wherein the outer diameter of the fan blades is larger than the outer diameter of the motor casing.

In an exemplary embodiment of this application, it further comprises:

A volute casing, fitted outside the fan, the volute casing is provided with a second air outlet, the second air outlet is located at the first air outlet.

In an exemplary embodiment of this application, the volute casing has a spiral passage, the spiral passage gradually widens along the rotation direction of the fan.

In an exemplary embodiment of this application, at least a portion of the spiral passage gradually deepens towards the motor along the rotation direction of the fan, and the deepening of the spiral passage terminates at the second air outlet.

In an exemplary embodiment of this application, a wind closure plate is provided at the second air outlet, the wind closure plate extends from the second air outlet of the volute casing in the opposite direction of the fan rotation.

In an exemplary embodiment of this application, the gap between the end of the wind closure plate near the fan blades and the outer diameter of the fan blades is 1~8mm.

In an exemplary embodiment of this application, the outer diameter of the fan blades is 1.2~2.0 times the outer diameter of the motor casing.

In an exemplary embodiment of this application, a filter screen is provided at the first air inlet.

In an exemplary embodiment of this application, a control board is provided inside the housing, the control board is close to the first air inlet.

This application also provides a gardening tool, comprising:

A housing, wherein the housing is provided with a first air inlet and a first air outlet;

A working component, mounted on the housing;

A motor, fixed inside the housing, used to drive the working component to operate, the motor including a motor casing;

A fan, fixed to the output shaft of the motor, the fan discharging the airflow entering the housing through the first air outlet, the fan including fan blades;

Wherein the outer diameter of the fan blades is larger than the outer diameter of the motor casing.

The beneficial effects of this utility model are as follows:

Existing electric chain saws have poor heat dissipation effects, especially for the motor that generates more heat on the electric chain saw, resulting in easy overheating protection of the machine and affecting its use. In this application, the fan is fixed to the output shaft of the motor, and the outer diameter of the fan blades is larger than the outer diameter of the motor casing, thereby effectively improving the air volume of the fan, increasing the ratio between the fan's heat dissipation and the heat generated by the motor, ensuring heat dissipation effect, reducing the temperature rise of the motor, and reducing overheating protection of the motor and machine. When selecting the motor, a smaller and lighter motor can be chosen that can output greater power and have a greater load capacity, thus achieving a more ideal energy efficiency ratio.

In view of the shortcomings of the above prior art, this utility model provides a gardening tool to improve the problem of a single display mode for gardening tools, where users cannot quickly understand the product's usage status, leading to longer maintenance times.

To achieve the above purpose and other related purposes, this utility model provides a gardening tool, which includes a housing, a drive device, a cutting assembly, a battery pack, a control board, and an integrated display module. The housing has a handle; the drive device is set inside the housing; the cutting assembly is connected to the drive device; the battery pack is set inside the housing and electrically connected to the drive device; the control board is electrically connected to both the drive device and the battery pack; the integrated display module is set on the outside of the housing and electrically connected to the control board. The integrated display module includes a handle heating switch and a display panel. The handle heating switch is used to turn on and off handle heating, and the display panel has multiple indicator lights for displaying the status of various functions of the gardening tool.

In one example of this utility model, the handle includes a first handle and a second handle. The first handle is set on the side of the housing away from the cutting assembly, and the second handle is set on the side of the housing towards the cutting assembly.

In one example of this utility model, the housing has a battery pack compartment for installing the battery pack, and the integrated display module is set on the outer surface of the housing between the battery pack compartment and the first handle.

In one example of this utility model, the housing has a first cavity and a second cavity corresponding to the position of the integrated display module. The handle heating switch is installed in the first cavity, and the display panel is installed in the second cavity.

In one example of this utility model, the integrated display module also includes a light shield and a transparent cover, which are successively covered on the outside of the display panel.

In one example of this utility model, the handle heating switch is a button switch, which when turned on, heats the first handle and/or the second handle.

In one example of this utility model, the handle heating switch is set beside the display panel.

In one example of this utility model, the multiple indicator lights include a power indicator light, an oil level indicator light, a fault alarm indicator light, and a power adapter light. The oil level indicator light illuminates when the oil level is normal or low; or the oil level indicator light displays different colored lights when the oil level is normal and low.

Given the above shortcomings of the prior art, the present utility model provides an electric tool to improve the problem of poor positioning accuracy during the installation of the oil pump, which affects the performance and service life of the oil pump.

To achieve the above objective and other related objectives, the present utility model provides an electric tool that includes a housing, a cutting assembly, a drive device, and a lubrication device. The drive device is arranged inside the housing, and the cutting assembly is connected to the drive device for transmission. The lubrication device is arranged inside the housing and includes an oil pump and an oil can, one end of the oil pump communicates with the oil can, and the other end communicates with the cutting assembly. The oil pump includes a pump body, with a first positioning member and a second positioning member arranged on the pump body. The centerline connecting the first and second positioning members is offset from the centerline of the pump body, and the pump body is further provided with at least one mounting hole.

In one exemplary embodiment of the present utility model, the first positioning member and the second positioning member are positioning pins protruding from the surface of the pump body, and the housing is correspondingly provided with positioning holes that cooperate with the positioning pins.

In another exemplary embodiment, the oil pump further includes a transmission plate and a worm. The transmission plate is coaxially fixed to the transmission shaft of the drive device, and the worm is coaxially arranged with the transmission plate and meshes with the drive turbine inside the pump body. A transmission device is arranged between the worm and the transmission plate to drive the worm to rotate.

In yet another exemplary embodiment, the first positioning member and the second positioning member are symmetrically distributed relative to the center of the worm and the perpendicular centerline of the pump body.

In an exemplary embodiment, the transmission device includes a first protrusion and a second protrusion, where the first protrusion is set on the end face of the worm facing the transmission plate, and the second protrusion is set on the end face of the transmission plate facing the worm, with the first and second protrusions arranged in a staggered configuration.

In one exemplary embodiment, a flat-position connection surface is arranged at the connection point between the transmission shaft and the transmission plate, and the transmission plate is provided with a connection hole that cooperates with the flat-position connection surface.

In another exemplary embodiment, an arc-shaped transition surface is arranged at the corner of the connection hole corresponding to the flat-position connection surface.

In one exemplary embodiment, at least one mounting hole includes a first mounting hole and a second mounting hole, symmetrically distributed relative to the center of the worm.

In an exemplary embodiment, the pump body has an inlet port and an outlet port arranged oppositely on one side, with the inlet port communicating with the oil can via an oil inlet pipe and the outlet port communicating with the cutting assembly via an oil outlet pipe.

In yet another exemplary embodiment, the oil pump also includes an adjustment device for regulating the oil output. The adjustment device includes an adjustment chamber, an adjustment rod, a limit rod, and a limiting assembly. The adjustment chamber is arranged on the side of the pump body away from the inlet and outlet ports. The adjustment rod includes a conical adjustment portion, and the adjustment rod passes through the adjustment chamber with the conical adjustment portion located inside the chamber. The limit rod is inserted through one end of the adjustment rod and stops at the housing of the pump body. The limiting assembly includes a limit ring and an elastic member, with the limit ring arranged at the other end of the adjustment rod, and the elastic member sleeved on the limit rod and stopping against the limit ring.

The electric tool of the present utility model arranges the first and second positioning members on the pump body of the oil pump. During installation, the first and second positioning members allow for precise positioning, preventing inaccurate installation of the oil pump and reducing worm and turbine meshing errors. The symmetrical arrangement of the first and second positioning members, with their centerline offset from the pump body's centerline (non-coinciding), improves the stability of the oil pump installation. Additionally, the symmetrically distributed mounting holes relative to the worm's center further enhance the stability and durability of the oil pump, improving the product's professionalism and reliability.

Accordingly, the present utility model provides a cutting tool with a two-in-one knob, which can improve the assembly precision between the cam and the clutch member in the cutting tool, thereby enhancing the stability of the saw chain tension and improving the cutting performance of the tool.

To achieve the above and other related objectives, the present utility model provides a cutting tool with a two-in-one knob. The cutting tool includes: a housing, a side cover, a cutting plate, a driving member, a clutch member, a tensioning block, and a cam; the side cover is detachably mounted on the housing; the cutting plate is arranged between the side cover and the housing, and a saw chain is circumferentially arranged on the cutting plate; the driving member passes through the side cover and connects with the housing, and rotating the driving member tightens the saw chain and presses the cutting plate between the side cover and the housing; the clutch member is arranged between the driving member and the side cover, and during the rotation of the driving member, the clutch member has a first state in which it rotates synchronously with the driving member and a second state in which it disengages from rotation with the driving member; the tensioning block is arranged on the housing and connected to the cutting plate; the cam is fixedly arranged on the side of the clutch member facing the cutting plate and cooperates with the tensioning block to tighten the saw chain, wherein the cam and the clutch member are configured as an integrated part.

In one example of the cutting tool of the present utility model, the integrated part is either a one-piece molded part or an assembled part.

In another example of the cutting tool of the present utility model, the clutch member includes a first ring portion, and along the circumferential direction of the first ring portion, the inner wall of the first ring portion is provided with multiple first slots. The first slots have symmetrically arranged guiding slopes; the driving member is provided with a first protrusion located inside the first ring portion; when the clutch member is in the first state, the first protrusion engages in the first slot, and the first protrusion abuts against at least one of the guiding slopes.

In another example of the cutting tool of the present utility model, the multiple first slots are arranged in a circumferential array along the first ring portion.

In yet another example of the cutting tool of the present utility model, a first tooth portion is arranged between adjacent first slots. The first tooth portion includes a tooth top surface, and the first protrusion includes a hemispherical surface. When the clutch member is in the second state, the hemispherical surface can be tangent to the tooth top surface.

In another example of the cutting tool of the present utility model, along the thickness direction of the first ring portion, the first tooth portion is set with a uniform cross-section.

In another example of the cutting tool of the present utility model, a second tooth portion is circumferentially arranged on the outer wall of the first ring portion, and the driving member and/or side cover are provided with a pawl. The pawl engages with the second tooth portion to achieve unidirectional locking of the clutch member.

In another example of the cutting tool of the present utility model, the side cover is provided with a first rotation shaft, and the pawl is rotatably connected to the first rotation shaft. A first elastic member is arranged on the pawl.

In another example of the cutting tool of the present utility model, the clutch member and the pawl are made from one or more materials, such as metal and plastic.

In another example of the cutting tool of the present utility model, the first ring portion includes a first base wall, and a first abutting portion is arranged on the side of the driving member opposite to the first base wall. A second elastic member is arranged between the first base wall and the first abutting portion.

The cutting tool with a two-in-one knob provided by the present utility model features a clutch member that has a first state in which it rotates synchronously with the driving member, and a second state in which it disengages from rotation with the driving member. In the initial state, when a rotational driving force is applied to the driving member, the clutch member enters the first state, during which the driving member drives the clutch member to rotate. The clutch member drives the cam, which is fixedly connected, to rotate, and the cam moves the tensioning block, which in turn moves the cutting plate, thereby tightening the saw chain on the cutting plate. Simultaneously, the driving member moves towards the side closer to the cutting plate. Continuing to rotate the driving member causes the clutch member to switch to the second state, allowing the driving member to keep rotating while the clutch member no longer rotates until the driving member is fully pressed onto the cutting plate, achieving a secure fit between the cutting plate and the housing. At this point, the rotation of the driving member is stopped, completing both the pressing installation of the cutting plate onto the housing and the tension adjustment of the saw chain.

This operational method allows for both the tension adjustment of the saw chain and the pressing installation of the cutting plate onto the housing to be achieved with a single rotation of the driving member, making the operation simple and convenient, facilitating quick adjustment of the saw chain tension and precise positioning of the cutting plate. Additionally, since the cam and clutch member are integrated into one part, it improves the assembly precision between the cam and the clutch member. As a result, when the knob drives the clutch member to rotate, it enhances the rotation precision of the cam, improving the displacement accuracy of the cutting plate and ensuring the tension level of the saw chain. Furthermore, the integrated cam and clutch member configuration also enhances the assembly efficiency and precision of the cutting tool.

### Brief description of drawings

The invention is now described, by way of example, with reference to the accompanying drawings, in which:
Fig. 1 is a schematic diagram of an exemplary electric chain saw of this application.
Fig. 2 is a front view of an exemplary electric chain saw of this application.
Fig. 3 is a schematic cross-sectional view along B-B in Fig. 2 of this application.
Fig. 4 is a cross-sectional view along B-B in Fig. 2 of this application.
Fig. 5 is a schematic assembly diagram of an exemplary motor and fan of this application.
Fig. 6 is a schematic diagram of an exemplary volute casing and fan structure of this application.
Fig. 7 is another angle view of an exemplary volute casing and fan after installation of this application.
Fig. 8 is a front view of an exemplary volute casing and fan after installation of this application.
Fig. 9 is a top view of partial structure of an exemplary electric chain saw of this application.
Fig. 10 is a schematic cross-sectional view along A-A in Fig. 9 of this application.
Fig. 11 is a schematic cross-sectional view along C-C in Fig. 9 of this application.
Fig. 12 is an enlarged view of area D in Fig. 11 of this application.
Fig. 13 is a schematic diagram of partial internal structure of an exemplary electric chain saw of this application.
Fig. 14 is a schematic diagram of an exemplary partial housing structure of this application.
Fig. 15 is a schematic diagram of an exemplary air guiding part of this application.
Fig. 16 is a schematic diagram of partial structure after removal of the first housing of this application.
Fig. 17 is a schematic diagram of partial structure after removal of the upper housing of this application.
Fig. 18 is a structural schematic diagram of the power tool in one embodiment of this application.
Fig. 19 is a schematic diagram showing the cooperation of the working part, motor, and lubrication device in one embodiment of the power tool of this application.
Fig. 20 is another angle view of the cooperation of the working part, drive device, and lubrication device in one embodiment of the power tool of this application.
Fig. 21 is a partial structural schematic diagram of the power tool in one embodiment of this application.

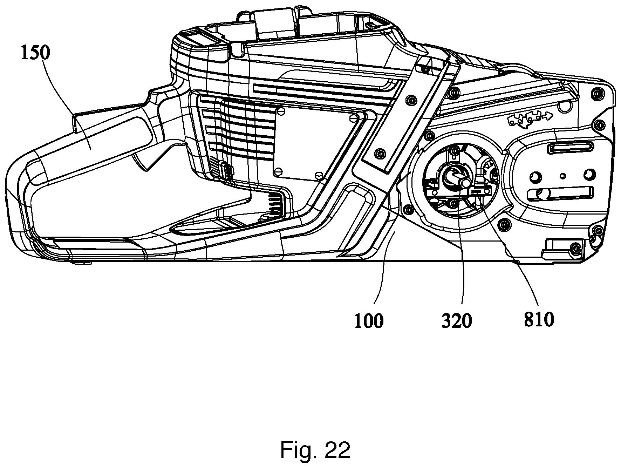

Fig. 22 is a partial structural schematic diagram of the power tool in one embodiment of this application.
Fig. 23 is a structural schematic diagram of the oil pump in one embodiment of the power tool of this application.
Fig. 24 is another angle view of the structural schematic diagram of the oil pump in one embodiment of the power tool of this application.
Fig. 25 is a structural schematic diagram of the oil pump after removal of the outer casing in one embodiment of the power tool of this application.
Fig. 26 is a front view schematic diagram of the oil pump in one embodiment of the power tool of this application.
Fig. 27 is a cross-sectional view along E-E of Fig. 26.
Fig. 28 is a schematic diagram showing the cooperation of the transmission piece and output shaft in one embodiment of the power tool of this application.
Fig. 29 is a structural schematic diagram of the transmission piece in one embodiment of the power tool of this application.
Fig. 30 is another angle view of the structural schematic diagram of the transmission piece in one embodiment of the power tool of this application.
Fig. 31 is a structural schematic diagram of the worm in one embodiment of the power tool of this application.
Fig. 32 is a cross-sectional view along F-F of Fig. 26.
Fig. 33 is a cross-sectional view along G-G of Fig. 26.
Fig. 34 is a schematic diagram of the electrical connections between the control board and various structures in one embodiment of the gardening tool of this application.
Fig. 35 is a partial structural schematic diagram of the gardening tool in one embodiment of this application.
Fig. 36 is an enlarged partial view of area I in Fig. 34.
Fig. 37 is an axonometric cross-sectional view along the center line of the integrated display module of the gardening tool of this application.
Fig. 38 is a perspective view of the anti-leak oil tank of this invention.
Fig. 39 is an exploded view of the anti-leak oil tank shown in Fig. 38.
Fig. 40 is a cross-sectional view of the anti-leak oil tank shown in Fig. 38.
Fig. 41 is a perspective view of the oil tank body shown in Fig. 39.
Fig. 42 is another angle view of the oil tank body shown in Fig. 41.
Fig. 43 is a perspective view of the delivery channel shown in Fig. 39.
Fig. 44 is a perspective view of the pressure balancing component shown in Fig. 39.
Fig. 45 is a perspective view of the cover shown in Fig. 39.
Fig. 46 is another angle view of the cover shown in Fig. 45.
Fig. 47 is a perspective view of another embodiment of the anti-leak oil tank of this invention.
Fig. 48 is a schematic view of an exemplary electric chain saw of this application;
Fig. 49 is a front view of an exemplary electric chain saw of this application;
Fig. 50 is a schematic cross-sectional view along B-B in Fig. 49 of this application;
Fig. 51 is a cross-sectional view along B-B in Fig. 49 of this application;

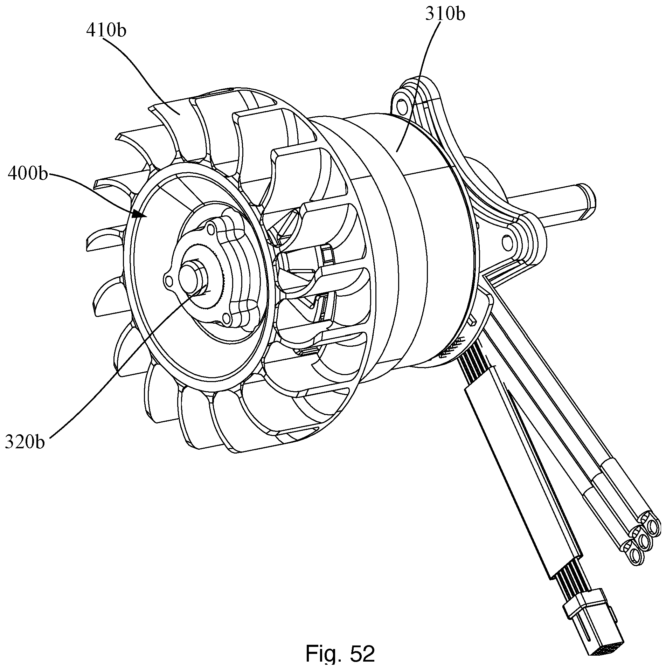

Fig. 52 is a schematic assembly view of an exemplary motor and fan of this application;
Fig. 53 is a schematic view of an exemplary volute casing and fan structure of this application;
Fig. 54 is another angle view of an exemplary volute casing and fan after installation of this application;
Fig. 55 is a front view of an exemplary volute casing and fan after installation of this application;

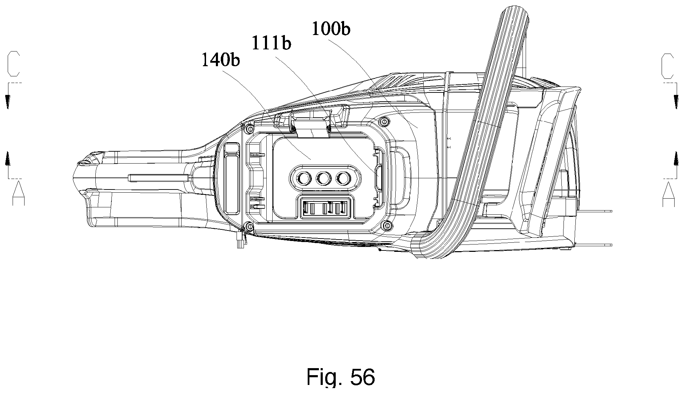

Fig. 56 is a top view of partial structure of an exemplary electric chain saw of this application;
Fig. 57 is a schematic cross-sectional view along A-A in Fig. 56 of this application;
Fig. 58 is a schematic cross-sectional view along C-C in Fig. 56 of this application;
Fig. 59 is an enlarged view of area D in Fig. 58 of this application;

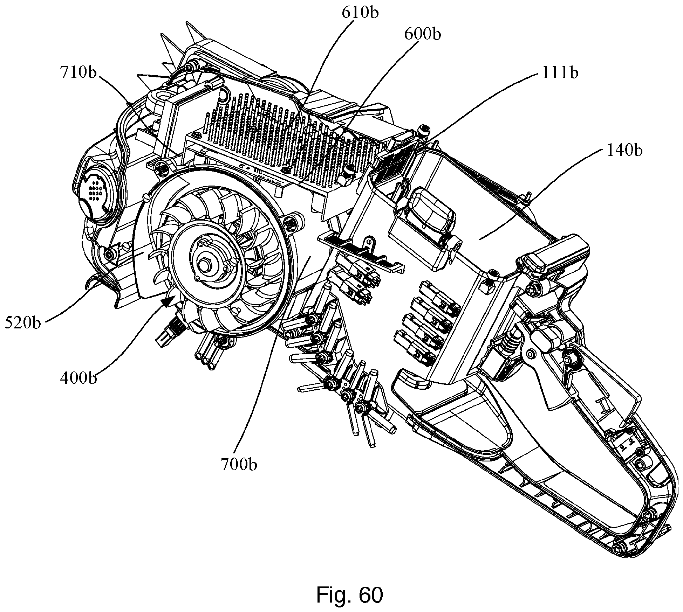

Fig. 60 is a schematic view of partial internal structure of an exemplary electric chain saw of this application;
Fig. 61 is a schematic view of an exemplary partial housing structure of this application;
Fig. 62 is a schematic view of an exemplary air guide part of this application.
Fig. 63 is a schematic diagram of the structure of the gardening tool in one embodiment of this utility model.
Fig. 64 is a schematic diagram of the structure of the gardening tool in one embodiment of this utility model with the housing removed.
Fig. 65 is a schematic diagram illustrating the cooperation between the cutting assembly, drive device, and lubrication device in one embodiment of this utility model.
Fig. 66 is a schematic diagram of the circuit connection between the control board and various structures in one embodiment of this utility model.
Fig. 67 is a schematic diagram of a partial structure in one embodiment of this utility model.
Fig. 68 is an enlarged view of area I in Fig. 67.
Fig. 69 is an axonometric sectional view along the centerline of the integrated display module of this utility model.
Fig. 70 is a schematic diagram of the structure of the electric tool in one embodiment of the present utility model.
Fig. 71 is a schematic diagram showing the cooperation of the cutting assembly, drive device, and lubrication device in one embodiment of the electric tool.
Fig. 72 is a schematic diagram from another angle showing the cooperation of the cutting assembly, drive device, and lubrication device in one embodiment of the electric tool.
Fig. 73 is a partial structural schematic diagram of the electric tool in one embodiment.
Fig. 74 is a partial structural schematic diagram of the electric tool in one embodiment.
Fig. 75 is a schematic diagram of the structure of the oil pump in one embodiment of the electric tool.
Fig. 76 is a schematic diagram from another angle of the oil pump in one embodiment of the electric tool.
Fig. 77 is a schematic diagram of the oil pump with the outer shell removed in one embodiment of the electric tool.
Fig. 78 is a front view schematic diagram of the oil pump in one embodiment of the electric tool.
Fig. 79 is a sectional view along A-A of Fig. 78.
Fig. 80 is a schematic diagram showing the cooperation of the transmission plate and the transmission shaft in one embodiment of the electric tool.
Fig. 81 is a schematic diagram of the structure of the transmission plate in one embodiment of the electric tool.
Fig. 82 is a schematic diagram from another angle of the structure of the transmission plate in one embodiment of the electric tool.
Fig. 83 is a schematic diagram of the structure of the worm in one embodiment of the electric tool.
Fig. 84 is a sectional view along B-B of Fig. 78.
Fig. 85 is a sectional view along C-C of Fig. 78.
Fig. 86 is a schematic diagram of the overall structure of one embodiment of the cutting tool of the present utility model.
Fig. 87 is a schematic diagram of the structure of the cutting tool from another angle in one embodiment of the present utility model.
Fig. 88 is a partial structural schematic diagram of the driving member in one embodiment of the cutting tool of the present utility model.
Fig. 89 is a schematic diagram of the installation position of the clutch member on the driving member in one embodiment of the cutting tool of the present utility model.
Fig. 90 is a partial cross-sectional view of the installation position of the clutch member and the driving member in one embodiment of the cutting tool of the present utility model.
Fig. 91 is a schematic diagram of the installation position of the tensioning block on the first housing in one embodiment of the cutting tool of the present utility model.
Fig. 92 is a three-dimensional schematic diagram of the clutch member in one embodiment of the cutting tool of the present utility model.
Fig. 93 is a schematic diagram of the structure of the clutch member from another angle in one embodiment of the cutting tool of the present utility model.
Fig. 94 is a schematic diagram of the installation position of the tensioning block and the cam in one embodiment of the cutting tool of the present utility model.
Fig. 95 is a schematic diagram of the installation position between the cutting plate and the tensioning block in one embodiment of the cutting tool of the present utility model.
Fig. 96 is a partial schematic diagram of the installation structure of the clutch member on the driving member in one embodiment of the cutting tool of the present utility model.
Fig. 97 is a partial enlarged view of the installation position of the first protrusion and the first slot in one embodiment of the cutting tool of the present utility model.
Fig. 98 is a schematic diagram of the installation position of the first protrusion on the knob in one embodiment of the cutting tool of the present utility model.
Fig. 99 is a schematic diagram of the installation position of the first protrusion on the boss body in one embodiment of the cutting tool of the present utility model.
Fig. 100 is a partial enlarged view of the engagement between the pawl and the second tooth portion in one embodiment of the cutting tool of the present utility model.
Fig. 101 is a schematic diagram of the installation position between the clutch member and the second rotation shaft in one embodiment of the cutting tool of the present utility model.
Fig. 102 is a schematic diagram of the installation position of the second elastic member and the first abutting portion in one embodiment of the cutting tool of the present utility model.
Fig. 103 is a schematic diagram of the handle snapped into the annular groove in one embodiment of the cutting tool of the present utility model.
Fig. 104 is a schematic diagram of the handle disengaging from the annular groove in one embodiment of the cutting tool of the present utility model.

### Description of embodiments

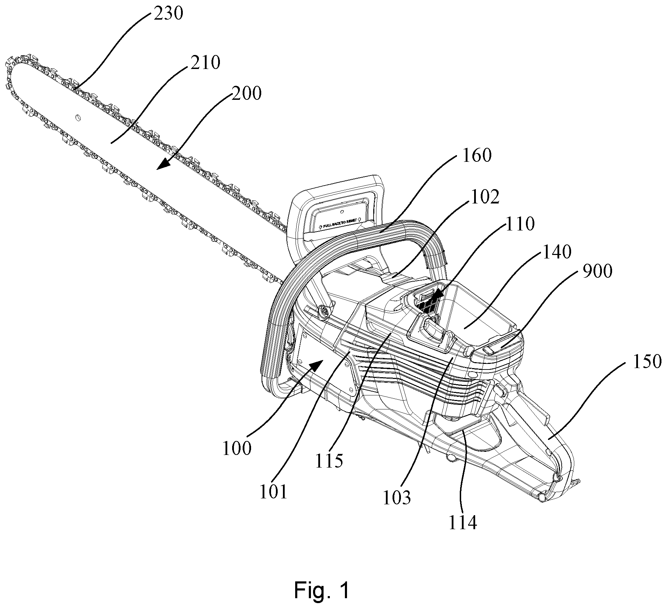

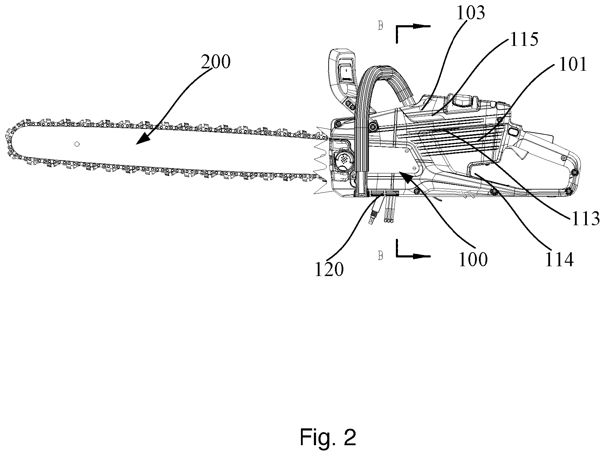

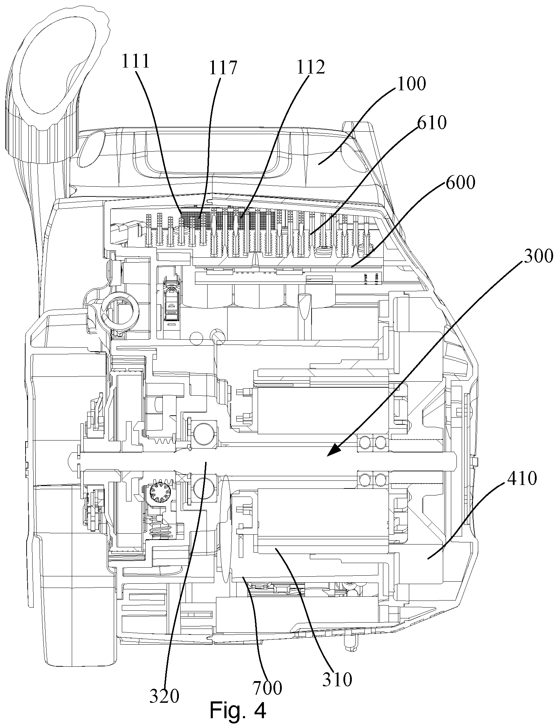

Please refer to Fig. 1 to Fig. 4 and Fig. 10. The power tool includes a housing 100, a control board 600, a working part 200, a motor 300, an air duct 11, and a fan 400. The housing 100 is equipped with a battery pack cavity 140, which is configured to install a battery pack. The control board 600 is located within the housing 100. The working part 200 is mounted on the housing 100. The motor 300 is set inside the housing 100 and drives the working part 200 to operate. The air duct 11 is located within the housing 100 and is used to guide air. Airflow moves along the air duct 11, carrying away heat generated by various components inside the housing 100, thus achieving heat dissipation for the power tool. The housing 100 has at least two air inlets 110 and at least one first air outlet 120. By setting up multiple air inlets 110, the channels for air intake can be effectively increased. This avoids situations where the power tool cannot effectively dissipate heat due to air inlets 110 being blocked by debris or accidentally sealed, thus preventing overheating protection or malfunction of the power tool. The fan 400 is fixed to the output shaft 320 of the motor 300, and when rotating, it drives air to flow along the air duct 11. Cool air flows in through the air inlets 110, passes by components inside the housing 100 that need heat dissipation, and then flows out through the first air outlet 120, thus achieving heat dissipation for the power tool, controlling the temperature rise of the power tool, and reducing instances of overheating protection.

In one embodiment of this power tool application, the ratio of the total cross-sectional area of the air inlets 110 to the total cross-sectional area of the first air outlet 120 is 0.8~2.0. For example, the ratio can be any value between 0.8~2.0, such as 0.8, 1.0, 1.5, 2.0, etc. This allows airflow to quickly enter through the air inlets 110 and exit through the first air outlet 120, ensuring the heat dissipation capability of the power tool. Preferably, the ratio of the total cross-sectional area of the air inlets 110 to the total cross-sectional area of the first air outlet 120 is 1.2~1.4. The ratio can be any value between 1.2~1.4, such as 1.2, 1.3, 1.4, etc., which can ensure rapid airflow.

Please refer to Fig. 1. In one embodiment of this power tool application, the housing 100 includes a first housing 101, a second housing 102, and an upper housing 103. The first housing 101 and the second housing 102 are set on both sides of the power tool and extend towards the top center of the power tool to achieve the interlocking of the first housing 101 and the second housing 102. The upper housing 103 is set on the upper rear side of the first housing 101 and the second housing 102, with the battery pack cavity 140 located below the upper housing 103.

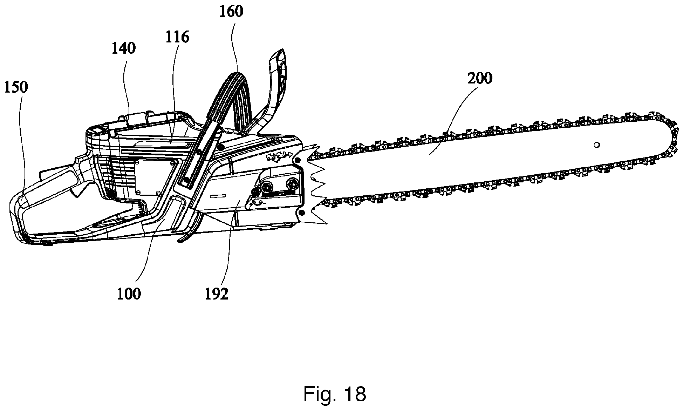

Please refer to Fig. 1 and Fig. 18. In one embodiment of this power tool application, the end of the housing 100 away from the working part 200 is designed with a hollow structure, forming the main handle 150 at this location. The length direction of the main handle 150 is roughly parallel to the extension direction of the working part 200. An auxiliary handle 160 is fixed on the housing 100 where the working part 200 extends out of the housing 100. The design of the main handle 150 and the auxiliary handle 160 ensures the convenience for operators to hold the power tool, and the two-handed grip ensures stability.

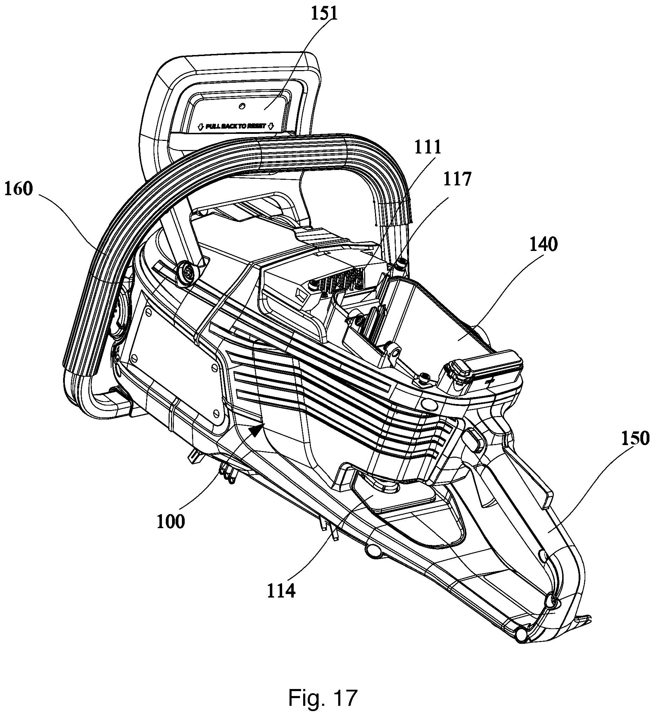

Please refer to Fig. 17. In one embodiment of this power tool application, the housing 100 is equipped with a brake handle 151. The brake handle 151 is located on the side of the auxiliary handle 160 away from the main handle 150. The brake handle 151 is used to brake the working part 200 of the power tool. The brake handle 151 rotates relative to the housing 100. When the brake handle 151 is in the braking state, the working part 200 cannot start or stops working; when the brake handle 151 is in the released state, the working part 200 can start or continue working. For example, when the power tool is an electric chainsaw, with the brake handle 151 in the braking state, the cutting assembly of the electric chainsaw cannot start or stops cutting; with the brake handle 151 in the released state, the cutting assembly of the electric chainsaw can start or continue cutting. The brake handle 151 and the housing 100 are equipped with an indicator group component to allow the operator to more clearly observe the state of the brake handle 151. In one embodiment, the brake handle 151 is equipped with an indicator mark, and the housing 100 is equipped with symbol marks. The indicator mark can also be a raised indicator mark in the shape of a triangle, arrow, or other shapes. The symbol marks include a brake symbol and a release symbol. The indicator mark points to different symbol marks, corresponding to different states of the brake handle 151, for easy observation by the operator. In another embodiment, the brake handle 151 is equipped with symbol marks, and the housing 100 is equipped with an indicator mark. The indicator mark can also be a raised indicator mark in the shape of a triangle, arrow, or other shapes. The symbol marks include a brake symbol and a release symbol. The indicator mark points to different symbol marks, corresponding to different states of the brake handle 151, making it easier for the operator to clearly identify the state of the brake handle 151. Preferably, the brake handle 151 is equipped with an indicator mark, and the housing 100 is equipped with symbol marks. The housing 100 has a larger space, which can accommodate larger symbol marks for easier observation by the operator.

Please refer to Fig. 1, Fig. 2, and Fig. 18. As an example, the air inlets 110 include two or more of the first air inlet 113, the second air inlet 114, the third air inlet 115, the fourth air inlet 116, and the fifth air inlet 117. The housing 100 can be simultaneously equipped with the first air inlet 113, the second air inlet 114, the third air inlet 115, the fourth air inlet 116, and the fifth air inlet 117, or it can be equipped with only two or three of them. The first air inlet 113 is set on the side wall of the housing 100, the second air inlet 114 is set at the bottom side wall of the battery pack cavity 140, the third air inlet 115 is set at the connection between the first housing 101 and the upper housing 103, the fourth air inlet 116 is set at the connection between the second housing 102 and the upper housing 103, and the fifth air inlet 117 is set at the top of the side wall of the battery pack cavity 140 near the control board 600. The fifth air inlet 117 and the second air inlet 114 are set on opposite side walls of the battery pack cavity 140. By setting multiple air inlets 110, appropriate air inlets 110 can be selected according to actual needs. At the same time, it can prevent situations where the power tool cannot dissipate heat normally, leading to overheating protection or malfunction, due to debris or grass clippings blocking the air inlets 110.

In one embodiment of this power tool application, a recessed groove that dents inward to the housing 100 is set at the connection between the first housing 101 and the upper housing 103. The third air inlet 115 is set at the inner top of the recessed groove, facing towards the bottom of the power tool or basically towards the bottom of the power tool. The upper housing 103 can form a shield for the third air inlet 115, preventing rain water from entering the housing 100 through the third air inlet 115, thus protecting the electrical components inside the housing 100. On one hand, this allows the power tool to be suitable for more usage environments, meeting different usage needs. On the other hand, it can reduce corrosion of the power tool's electrical components by rain water or moisture, improving the service life of the power tool. As an example, the fourth air inlet has a similar structure to the third air inlet. The second housing 102 also has a recessed groove that dents inward to the housing 100, with the fourth air inlet 116 set at the inner top of the recessed groove, thus forming a protective shield for the fourth air inlet.

In one embodiment of this power tool application, the side wall of the first housing 101 is set with a recess that dents inward to the housing 100. The first air inlet 113 is set at the top of this recess, facing towards the bottom of the power tool or basically towards the bottom of the power tool. The side wall of the first housing 101 forms a protective shield for the first air inlet 113, thus avoiding rain water or debris from entering the housing 100 through the first air inlet 113, improving the water and debris resistance of the power tool, and extending the service life of the power tool.

As an example, the second air inlet 114 is set at the bottom side wall of the battery pack cavity 140. After passing through the battery pack cavity 140, the airflow then enters the housing 100 through the confluence opening 110, which can dissipate heat from the battery pack in the battery pack cavity 140, thus avoiding situations such as overheating protection or damage to the battery pack. The second air inlet is also equipped with a shielded area to reduce the entry of rain water or debris into the housing 100, improving the water and debris resistance of the power tool.

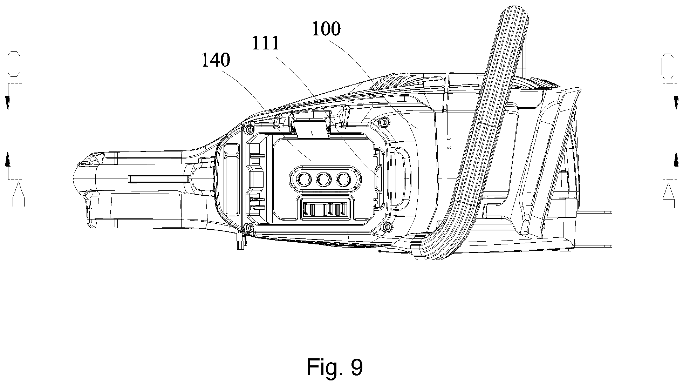

Please refer to Fig. 9, Fig. 10, and Fig. 18. In one embodiment of this power tool application, the air duct 11 has a confluence opening 111, where airflows from at least two air inlets 110 converge. This ensures that when a single air inlet 110 is blocked, there is still a certain airflow entering the housing 100 through the confluence opening 111, ensuring heat dissipation capability and reducing instances of power tool overheating protection. In one embodiment, the housing 100 is equipped with five air inlets 110: the first air inlet 113, the second air inlet 114, the third air inlet 115, the fourth air inlet 116, and the fifth air inlet 117. All five air inlets 110 converge at the confluence opening 111, effectively ensuring that the airflow inside the housing 100 flows along the preset air duct 11, reducing the occurrence of turbulence and ensuring rapid air flow inside the housing 100.

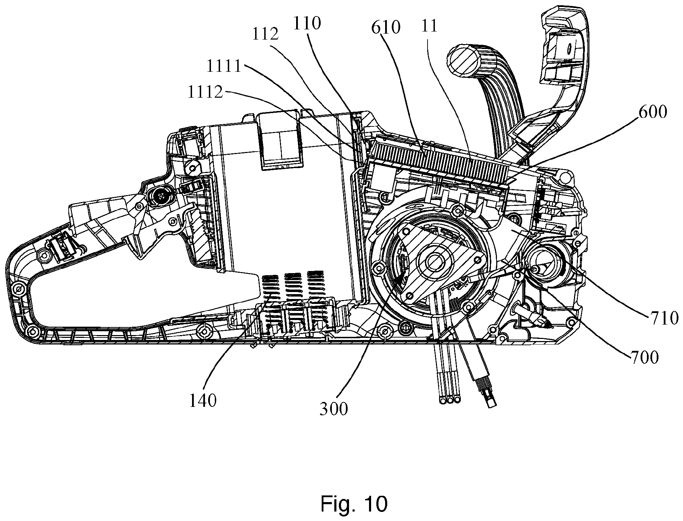

Please refer to Fig. 10 and Fig. 18. In one embodiment of this power tool application, the confluence opening 111 is set between the battery pack cavity 140 and the control board 600. The airflow passing through the battery pack cavity 140 can dissipate heat from the battery, preventing battery pack overheating faults. With the confluence opening 111 set at the control board 600, the lower temperature airflow can effectively carry away heat from the control board 600, effectively controlling the temperature rise of the control board 600 and avoiding faults caused by excessive temperatures of electronic components on the control board 600.

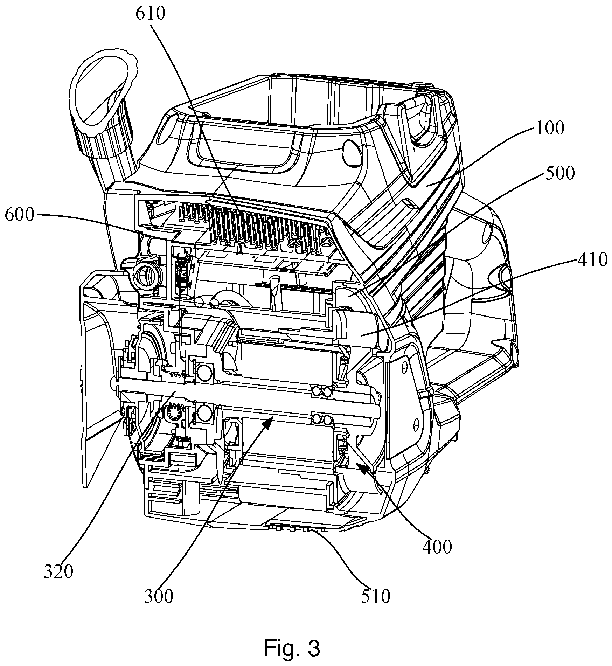

Please refer to Fig. 3, Fig. 4, Fig. 10, and Fig. 13. In one embodiment of this power tool application, heat dissipation columns 610 are set on the back side of the control board 600. The heat dissipation columns 610 are fixed on the control board 600, increasing the heat dissipation area. The gaps between the heat dissipation columns 610 allow airflow to pass through, ensuring the heat dissipation effect.

Please refer to Fig. 10. In one embodiment of this power tool application, a second air guide plate 1112 is set on the side of the control board 600 near the battery pack cavity 140. The second air guide plate extends in a direction away from the heat dissipation columns 610. The heat dissipation columns 610 are set above the control board 600, while electronic components are installed on the side away from the heat dissipation columns 610. The second air guide plate 1112 guides the airflow at the confluence opening 111, causing the airflow to move along the second air guide plate 1112 towards the direction of the heat dissipation columns 610. This not only provides timely heat dissipation for the control board 600 but also effectively protects the electronic components, reducing the accumulation of dust entering the housing 100 with the airflow on the electronic components of the control board 600, thus reducing the failure rate of electronic components and improving the service life of the power tool. Preferably, the second air guide plate 1112 is set at an incline, sloping from bottom to top towards the control board 600, which is conducive to the rapid movement of air along the second air guide plate 1112. A first air guide plate 1111 is set below the side of the fifth air inlet 117 near the control board 600. The first air guide plate 1111 slopes from bottom to top from the fifth air inlet 1117 towards the control board 60, facilitating the movement of airflow along the first air guide plate 1111 towards the top heat dissipation columns 610 of the control board 600.

In one embodiment of this power tool application, a filtering device 112 is set at the air inlets 110. The filtering device 112 can be a filter mesh, filter cotton, etc. For convenient maintenance, a quick-release structure is set on the housing 100 to facilitate the disassembly and assembly of the filtering device 112, as well as the cleaning and reuse of the filtering device 112 after dust removal. Preferably, the filtering device 112 is a filter mesh for easy cleaning. By setting up the filtering device 112, weeds, debris, etc. can be effectively filtered, avoiding problems caused by foreign objects entering the housing 100 and leading to power tool failures.

In another embodiment of this power tool application, a filtering device 112 is set at the confluence opening 111. The filtering device 112 can be a filter mesh, filter cotton, etc., preferably a filter mesh for easy cleaning. For convenient maintenance, a quick-release structure is set on the housing 100 to facilitate the disassembly and assembly of the filtering device 112, as well as the cleaning and reuse of the filtering device 112 after dust removal. By setting up the filtering device 112, weeds, debris, etc. can be effectively filtered, avoiding problems such as control board failures or motor failures caused by foreign objects entering the housing 100 through the confluence opening 111. As an example, filtering devices 112 can be set at both the confluence opening 111 and the air inlets 110 to further ensure the filtering effect.

Please refer to Fig. 10, Fig. 13, and Fig. 15. In one embodiment of this power tool application, a guiding part 700 covering the motor 300 is set inside the housing 100. The guiding part 700 is set between the confluence opening 111 of the air duct 11 and the first air outlet 120. The guiding part 700 works in conjunction with the housing 100 to isolate the motor 300 from other components inside the housing 100. This can prevent the heat from the motor 300 from affecting other components of the power tool, ensuring that the airflow passes through the guiding part 700, flows over the motor 300, and then flows out through the first air outlet 120.

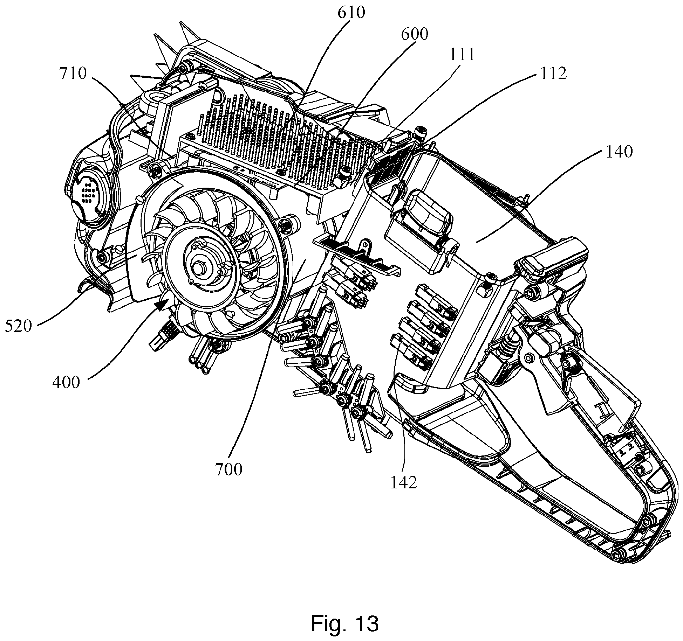

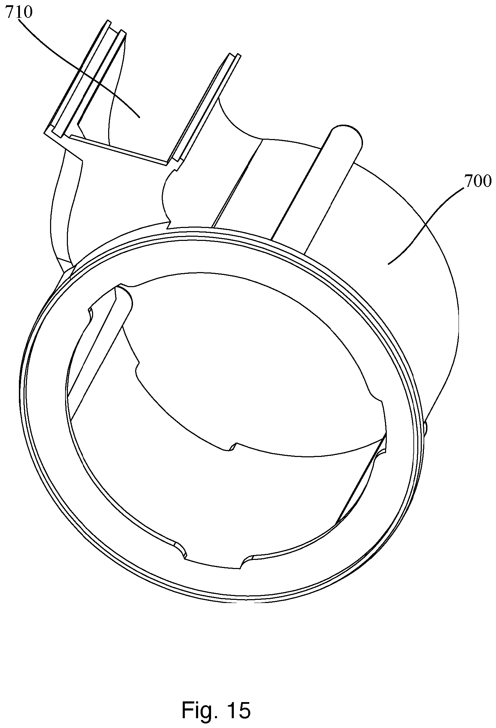

Please refer to Fig. 13 and Fig. 15. As an example, a guiding inlet 710 is set on the guiding part 700. The guiding inlet 710 and the confluence opening 111 are set on opposite sides of the control board 600. After passing through the confluence opening 111, the airflow carries away the heat from the control board 600, then enters the guiding part 700 through the guiding inlet 710, and finally flows out of the housing 100 through the first air outlet 120.

In one embodiment of this power tool application, a handle heating board is also set inside the housing 100. The guiding inlet 710 is set at the handle heating board, which can quickly carry away the heat from the handle heating board, thereby reducing the impact of heat dissipated from the handle heating board into the housing 100 on other components inside the housing 100.

Please refer to Fig. 10. After the airflow enters the housing 100 through the air inlets 110, it converges at the confluence opening 111, then passes through the control board 600 and the handle heating board in sequence before entering the guiding part 700. It then passes through the motor 300 inside the guiding part 700, and the fan 400 causes the airflow to flow out through the first air outlet 120, effectively controlling the temperature inside the housing 100 and avoiding instances of power tool overheating protection.

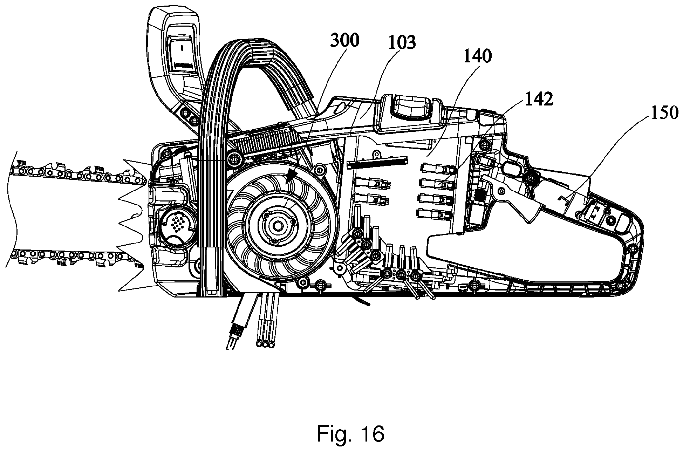

Please refer to Fig. 13 and Fig. 16. In one embodiment of this power tool application, several wire connecting parts 142 for connecting wire harnesses are set on the power tool. The wire connecting parts 142 are all set on the visible surface of the power tool after the first housing 101 is removed. In other words, after removing the first housing 101 from the power tool, the wire connecting parts 142 inside the power tool can be observed. On one hand, during the assembly process, the wiring of the wire connecting parts 142 can be quickly and accurately checked for completeness and accuracy. On the other hand, during maintenance, wiring connection faults can be quickly inspected, thus quickly determining the cause of faults and improving maintenance and repair efficiency. Preferably, wire bundle clips are also fixed on the visible surface, and the wire connecting parts 142 are fixed at fixed positions on the visible surface, making assembly inspection more convenient.

Please refer to Fig. 13 and Fig. 16. As an example, the battery pack cavity 140 is fixed on the housing 100, and the wire connecting parts 142 are set on the side wall of the battery pack cavity 140 near the second housing 102. There are many components inside the housing 100, but the side wall of the battery pack cavity 140 is relatively flat and usually does not have other components fixed to it. By fixing the wire connecting parts 142 on the side wall of the battery pack cavity 140, it's convenient to observe the wiring, facilitating assembly inspection and fault repair.

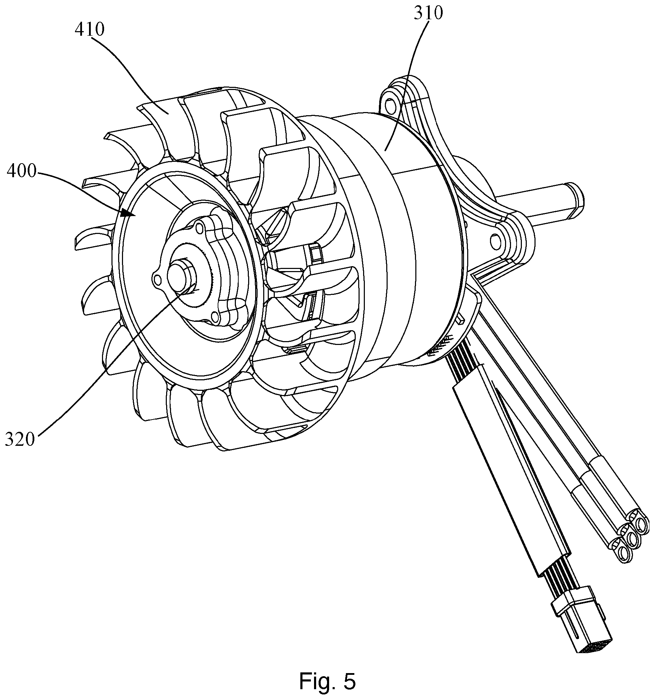

Please refer to Fig. 5. In one exemplary embodiment of this application, the motor 300 includes a motor housing 310, and the fan 400 includes fan blades 410. The outer diameter of the fan blades 410 is larger than the outer diameter of the motor housing 310, which increases the ratio of the fan's 400 heat dissipation capacity to the motor's 300 heat generation, effectively controlling the operating temperature rise of the motor 300. The larger outer diameter of the fan blades 410 drives a larger volume of air, thereby improving the heat dissipation effect of the power tool, effectively controlling the operating temperature rise of the power tool, and reducing instances of overheating protection. This allows for the selection of a smaller and lighter motor that can output greater power and stronger load capacity, thus achieving a more ideal energy efficiency ratio.

In one embodiment of this power tool application, the outer diameter range of the motor housing 310 is 25~75mm. The outer diameter of the motor housing 310 can be any value between 25~75mm, such as 25mm, 40mm, 50mm, 75mm, etc., which can effectively ensure that the power of the motor 300 meets the usage requirements. In one embodiment of this power tool application, the ratio of the outer diameter of the fan blades 410 to the outer diameter of the motor housing 310 is 1.2~2.0. This effectively improves the heat dissipation effect of the power tool and reduces overheating protection, while avoiding excessive energy consumption caused by an overly large fan blade diameter. It reduces fan 400 energy consumption while ensuring heat dissipation capacity. The ratio can be any value between 1.2~2.0, such as 1.2, 1.5, 1.8, 2.0, etc. Preferably, the ratio of the outer diameter of the fan blades 410 to the outer diameter of the motor housing 310 is 1.3~1.5, which effectively reduces the temperature rise of the motor 300 while effectively controlling fan 400 energy consumption. The ratio can be any value between 1.3~1.5, such as 1.3, 1.4, 1.5, etc.

As an example, the fan 400 can be either radial or axial, or a combination of radial and axial styles. The shape of the fan blades 410 can be any one of forward-curved blades, straight blades, or backward-curved blades, or any other existing fan blade shape.

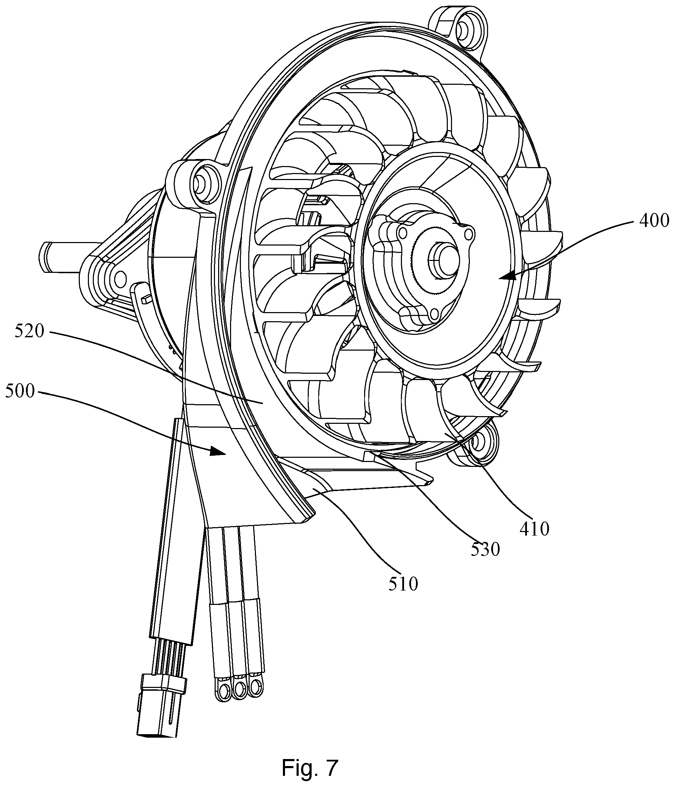

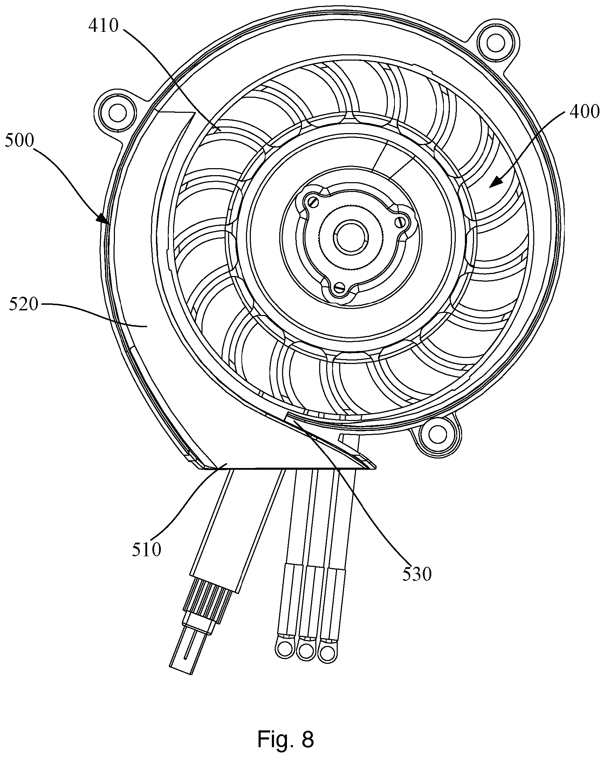

Please refer to Fig. 3, Fig. 4, and Fig. 6~8. In one embodiment of this power tool application, the power tool also includes a volute casing 500. The volute casing 500 is fitted over the fan 400. The volute casing 500 is equipped with a second air outlet 510. The second air outlet 510 is set at the location of the first air outlet 120. The volute casing 500 concentrates and guides the air leaving the fan blades 410, causing the airflow to be discharged outside the housing 100 through the second air outlet 510 and the first air outlet 120.

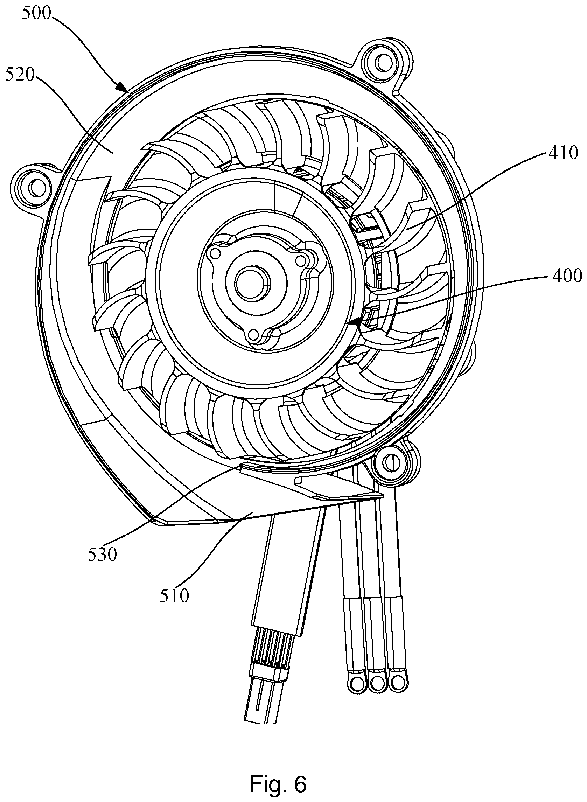

Please refer to Fig. 6~8. As an example, the volute casing 500 has a spiral passage 520. Preferably, the spiral passage 520 of the volute casing 500 is a gradually expanding spiral passage. The spiral passage 520 gradually widens along the rotation direction of the fan 400 through a spiral. By widening the spiral passage 520 along the rotation direction of the fan 400, on one hand, it facilitates the guiding of airflow; on the other hand, it facilitates the rapid outflow of air driven by the fan blades 410, improving ventilation and heat dissipation capacity.

Please refer to Fig. 6~8. In one embodiment of this power tool application, at least part of the spiral passage 520 gradually deepens towards the motor 300 along the rotation direction of the fan 400. The deepening of the spiral passage 520 terminates at the second air outlet 510. By deepening the spiral passage 520 towards the motor 300, on one hand, it can effectively increase the cross-sectional area of the second air outlet 510, facilitating rapid airflow outflow and improving heat dissipation effect; on the other hand, the deepening of the spiral passage 520 towards the motor 300 allows the baffle on the side of the spiral passage 520 near the fan blades 410 to block between the fan blades 410 and the spiral passage 520. Thus, when the airflow flows from inside the spiral passage 520 towards the second air outlet 510, it reduces the airflow entering the fan blades 410, thereby reducing hot air backflow and improving heat dissipation capacity and effect.

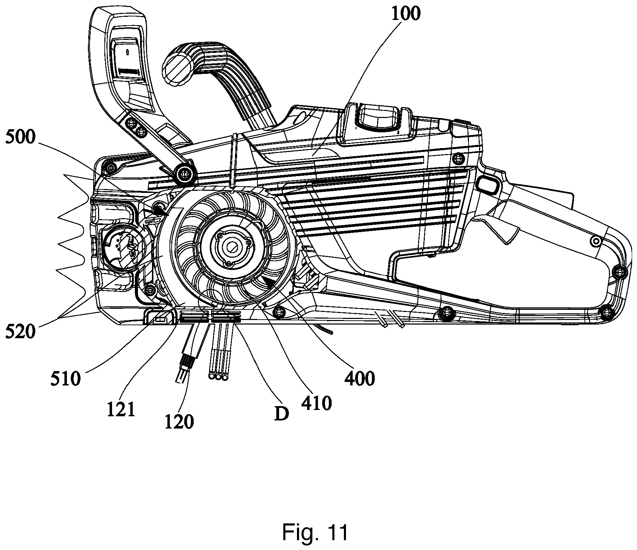

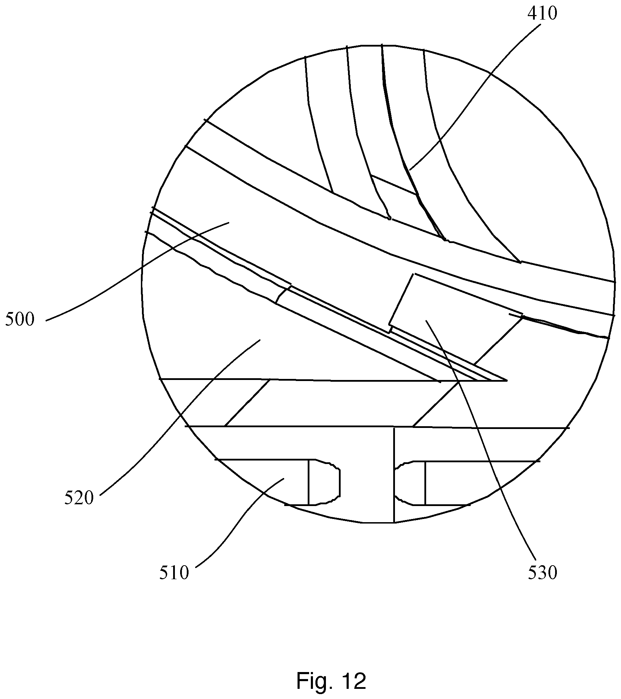

Please refer to Fig. 6~8, Fig. 11~12. In one embodiment of this power tool application, a wind-closing plate 530 is set at the second air outlet 510. The wind-closing plate 530 extends along the volute casing 500 in the direction opposite to the fan 400 rotation. By setting up the wind-closing plate 530, the backflow of cooling air can be reduced, thereby improving heat dissipation capacity. As an example, the wind-closing plate 530 extends towards the housing 100 until it contacts the housing 100, to isolate the spiral passage 520 at the second air outlet 510 from the fan blades 410, which can effectively reduce the hot air being drawn back by the fan blades 410, improving the heat dissipation effect.

As an example, a perpendicular line passing through the end face of the wind-closing plate 530 passes through the center of the fan 400. In other words, the wind-closing plate 530 extends in the opposite direction of the fan 400 rotation to a point near tangent to the fan blades 410, thus effectively ensuring the wind-closing effect of the wind-closing plate 530 and avoiding air being drawn back into the fan 400.

In one embodiment of this power tool application, the gap between the end of the wind-closing plate 530 near the fan blades 410 and the outer diameter of the fan blades 410 is 1~8mm. In other words, the gap between the projection of the wind-closing plate 530 along the rotation axis of the fan blades 410 and the projection of the fan blades 410 along the rotation axis of the fan blades 410 is 1~8mm. This can effectively ensure the wind-closing effect of the wind-closing plate 530 while reserving sufficient assembly clearance to avoid interference between the fan blades 410 and the wind-closing plate 530 due to manufacturing tolerances. The gap can be any value between 1~8mm, such as 1mm, 2mm, 5mm, 8mm, etc.

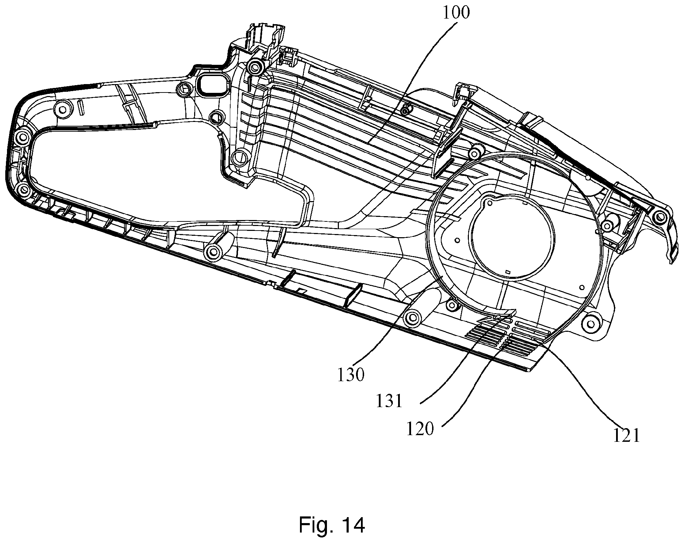

Please refer to Fig. 14. In one embodiment of this power tool application, a closing part 130 is set on the housing 100. The closing part 130 works in conjunction with the volute casing 500 to isolate the spiral passage 520 from other areas inside the housing 100, effectively ensuring that the airflow driven by the fan 400 is discharged through the second air outlet 510 after passing through the spiral passage 520, avoiding hot air re-entering the housing 100 and affecting the heat dissipation effect. A wind-closing part 131 is set on the closing part 130. The wind-closing part 131 works in conjunction with the wind-closing plate 530 to isolate the spiral passage 520 at the second air outlet 510 and the wind-closing plate 530 from the fan blades 410, avoiding the air at the second air outlet 510 being drawn back into the fan 400. This effectively ensures that the airflow can stably flow out through the second air outlet 510 and the first air outlet 120, improving the heat dissipation effect.

Please refer to Fig. 18~20. In one embodiment of this power tool application, the working part 200 includes a cutting assembly. The cutting assembly includes a guide bar 210, a drive sprocket 220, and a saw chain 230. The drive sprocket 220 is coaxially fixed with the output shaft 320 of the motor 300. One end of the guide bar 210 is fixed to the housing 100 and is positioned near the drive sprocket 220, while the other end of the guide bar 210 extends to the outside of the housing 100. For example, a slot hole 211 is opened at the end of the guide bar 210 near the drive sprocket 220. The length direction of the slot hole 211 is parallel to the length direction of the guide bar 210. A bolt passes through the slot hole 211 to fix the guide bar 210 to the housing 100. The saw chain 230 is circumferentially arranged along the outer edge of the guide bar 210, and part of the saw chain 230 meshes with the drive sprocket 220. Under the drive of the drive sprocket 220, the saw chain 230 can rotate at high speed to perform cutting operations. Preferably, a side cover 192 is also fixed to the housing 100 corresponding to the connection position of the guide bar 210. By clamping one end of the guide bar 210 between the housing 100 and the side cover 192, the stability of the guide bar 210 installation is ensured.

The power tool also includes a lubrication device 800. The lubrication device 800 can provide lubricating oil for the cutting assembly 200. The lubricating oil not only lubricates the saw chain, reducing friction heat generation of the saw chain 230, but also carries away some of the heat from the saw chain 230, allowing it to work for a longer time. The lubrication device 800 includes an oil pump 810 and an oil bottle 820. The oil pump 810 is set inside the housing 100. For example, one side of the housing 100 is recessed inward to form a third accommodating cavity 190 for installing the oil pump 810, and the oil pump 810 is fixed in the third accommodating cavity 190. The oil bottle 820 is installed inside the housing 100, located on one side of the oil pump 810. The oil bottle 820 contains lubricating oil or other cooling liquids, and the oil pump 810 can transport the lubricating oil from the oil bottle 820 to the cutting assembly 200 to cool or lubricate its saw chain.

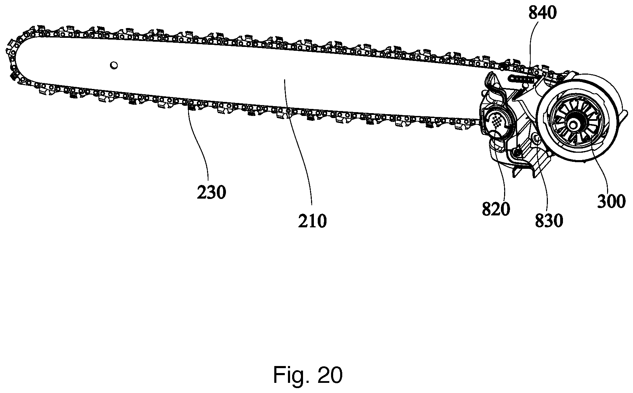

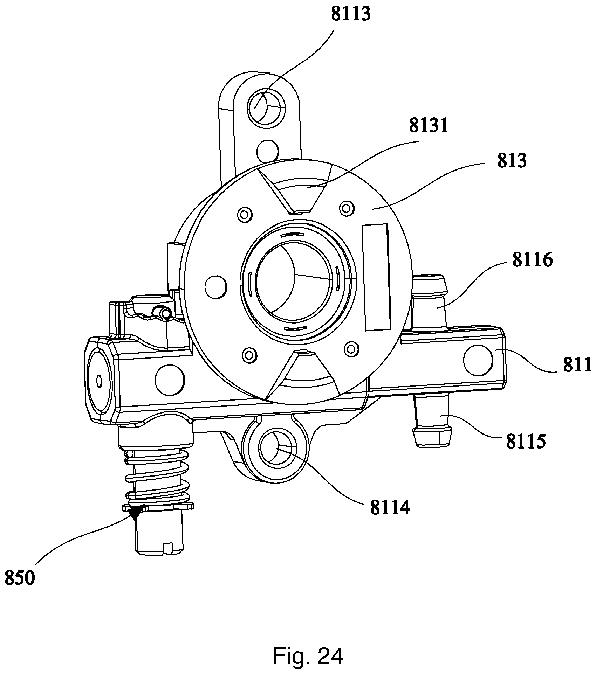

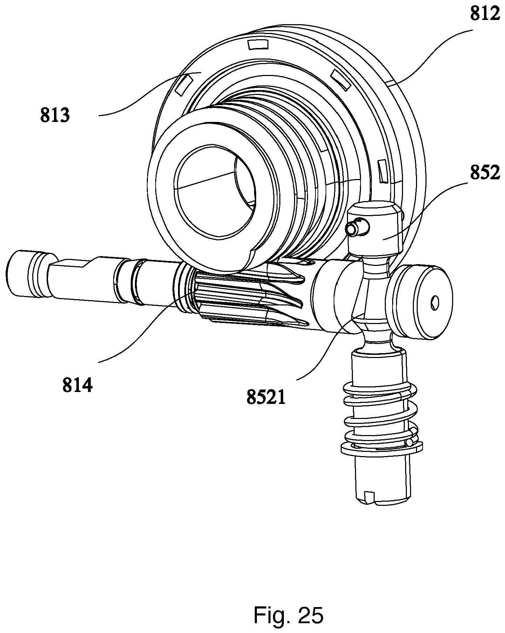

Please refer to Fig. 20, Fig. 23 to Fig. 25. Specifically, the oil pump 810 includes a pump body 811, a transmission piece 812, and a worm 813. Inside the pump body 811, there is a driving turbine 814. On the outer casing of the pump body 811, there are an oil inlet 8115 and an oil outlet 8116 that connect to the interior. The oil inlet 8115 and the oil outlet 8116 are set on the same side of the pump body 811, opposite to each other, and separated by the driving turbine 814. The oil inlet 8115 is connected to the oil bottle 820 through an oil inlet pipe 830, and the oil outlet 8116 is connected to the cutting assembly 200 through an oil outlet pipe 840. The transmission piece 812 and the worm 813 are coaxially set on the output shaft 320. The transmission piece 812 is fixedly connected to the output shaft 320. The worm 813 passes through the upper part of the pump body 811's outer casing and meshes with the driving turbine 814. A transmission device 815 for driving the worm 813 to rotate is set between the worm 813 and the transmission piece 812, so that when the output shaft 320 drives the transmission piece 812 to rotate, it also drives the driving turbine 814 to rotate, transporting the lubricating oil inside the oil bottle 820 to the cutting assembly 200, achieving the oil pumping process. This application fixes the transmission piece 812 coaxially with the output shaft 320 of the motor 300, using the motor 300 to drive the normal operation of the oil pump 810. This structural arrangement, on one hand, can reduce the overall weight and volume of the power tool, thereby reducing manufacturing costs; on the other hand, removing the built-in drive motor of the oil pump 810 can reduce internal heat sources, thus lowering the performance requirements for the heat dissipation device of the power tool.

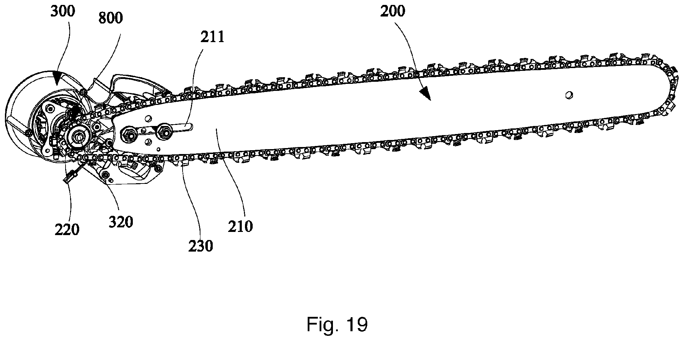

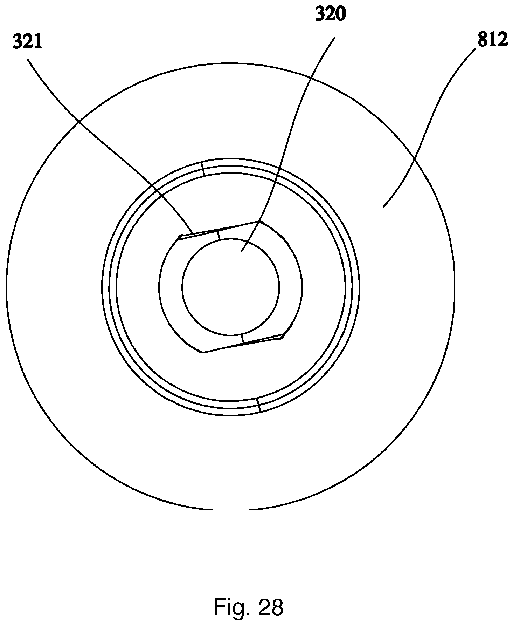

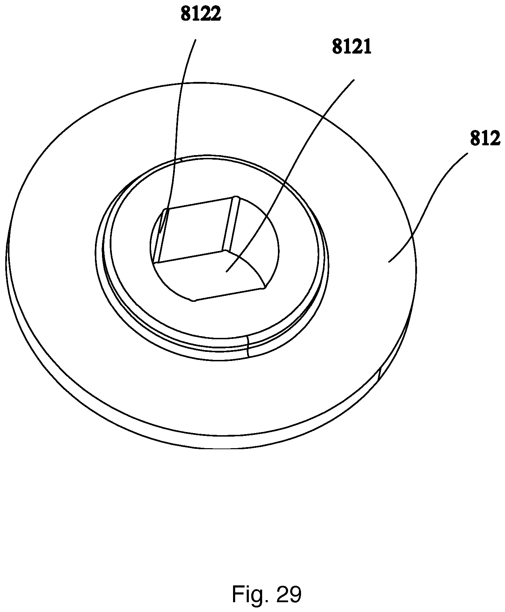

Please refer to Fig. 19, Fig. 26 to Fig. 29. In one embodiment, the transmission piece 812 is set between the drive sprocket 220 and the motor 300, and is coaxially fixed with the output shaft 320. For example, there are two parallel flat connecting surfaces 321 set opposite each other at the connection between the output shaft 320 and the transmission piece 812. A connecting hole 8121 corresponding to the flat connecting surfaces 321 is set on the transmission piece 812. The flat transmission between the output shaft 320 and the transmission piece 812 is achieved through the connecting hole 8121 and the flat connecting surfaces 321. Preferably, arc transition surfaces 8122 are set at the corners of the connecting hole 8121 corresponding to the flat connecting surfaces 321. The side edges of the flat connecting surfaces 321 and the arc surface of the output shaft 320 are engaged within the arc transition surfaces 8122, which can effectively prevent sliding between the transmission piece 812 and the output shaft 320, ensuring synchronous rotation.

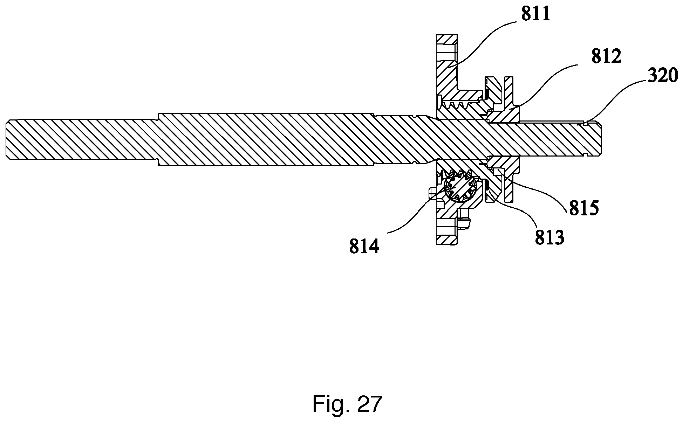

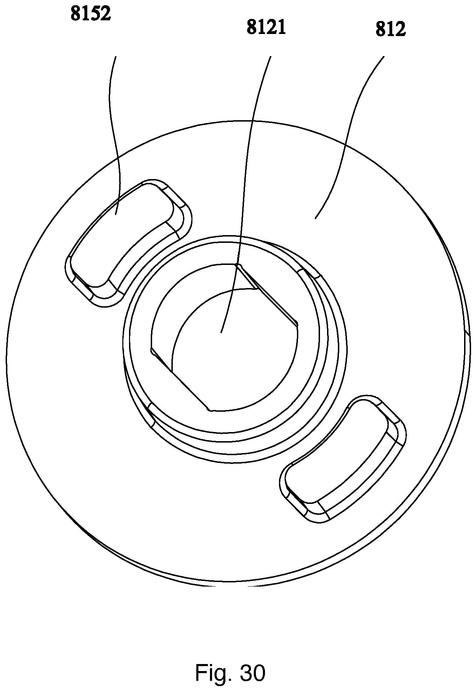

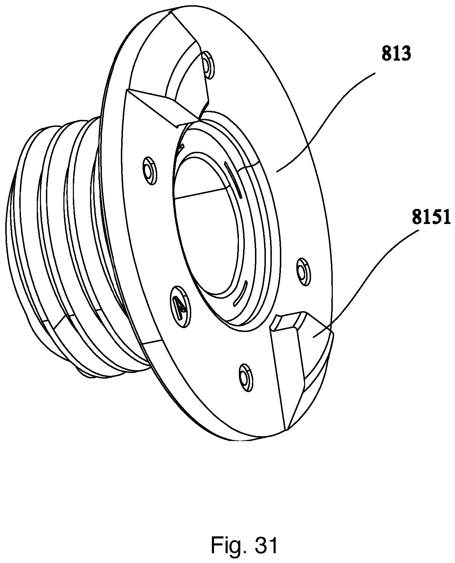

Please refer to Fig. 27, Fig. 30 and Fig. 31. In one embodiment, the transmission device 815 between the transmission piece 812 and the worm 813 includes a first protrusion 8151 and a second protrusion 8152. The first protrusion 8151 is set on the end face of the worm 813 facing the transmission piece 812. The second protrusion 8152 is set on the end face of the transmission piece 812 facing the worm 813. The first protrusion 8151 and the second protrusion 8152 are set in a staggered arrangement. When the transmission piece 812 rotates, the second protrusion 8152 pushes the first protrusion 8151 to rotate, thereby driving the worm 813 to rotate. There is no restriction on the number of first protrusions 8151 and second protrusions 8152 set here. One or multiple can be set, as long as the first protrusion 8151 and the second protrusion 8152 are arranged in a staggered manner and interfere with each other. In this embodiment, two first protrusions 8151 are set opposite each other on the worm 813, and two second protrusions 8152 are set opposite each other on the transmission piece 812. The two first protrusions 8151 and the two second protrusions 8152 are arranged in a cross pattern.

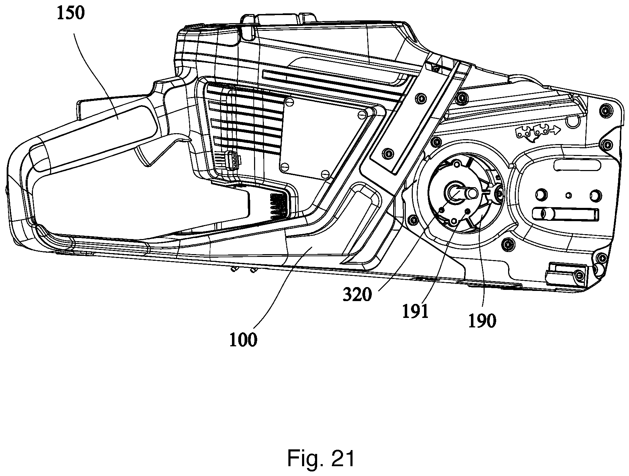

Please refer to Fig. 21, Fig. 25 and Fig. 26. To ensure the meshing precision between the worm 813 and the driving turbine 814, this application sets positioning members on the outer casing of the pump body 811 to precisely position the installation location of the pump body 811.

In one embodiment, a first positioning member 8111 and a second positioning member 8112 are set on the outer casing of the pump body 811. The center line connecting the first positioning member 8111 and the second positioning member 8112 is offset from the center line of the pump body 811. That is, the center line connecting the first positioning member 8111 and the second positioning member 8112 does not coincide with the center line of the pump body 811. This design can make the installation structure of the pump body 811 more stable. Furthermore, the first positioning member 8111 and the second positioning member 8112 are symmetrically distributed with respect to the perpendicular line of the center of the worm 813 to the center line of the pump body 811. The first positioning member 8111 and the second positioning member 8112 can be positioning pins protruding from the surface of the pump body 811. Corresponding positioning holes 191 that match the positioning pins are set on the third accommodating cavity 190. These positioning holes 191 can be through holes or blind holes, which is not restricted here. In other embodiments, the first positioning member 8111 and the second positioning member 8112 can also be grooves recessed into the pump body 811. Corresponding protrusions that match these grooves are set inside the third accommodating cavity 190. The matching of protrusions and grooves can also achieve the positioning effect for the pump body 811.

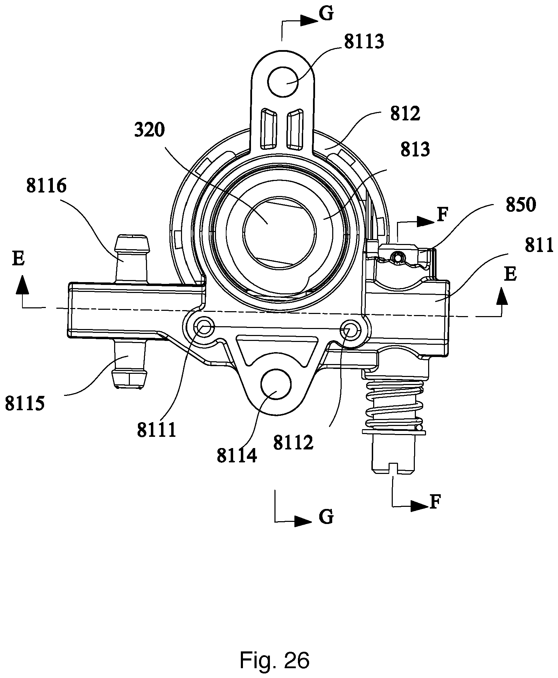

Please refer to Fig. 26. At least one mounting hole is also set on the pump body 811, used to fix the pump body 811 inside the third accommodating cavity 190. In this embodiment, a first mounting hole 8113 and a second mounting hole 8114 are set on the pump body 811. The first mounting hole 8113 and the second mounting hole 8114 are symmetrically distributed with respect to the center of the worm 813. The even distribution of the first mounting hole 8113, the second mounting hole 8114, the first positioning member 8111, and the second positioning member 8112 can improve the defects of combined skew or poor stability and durability of the asymmetric worm center, enhancing the stability of the pump body 811 installation and the reliability of the product.

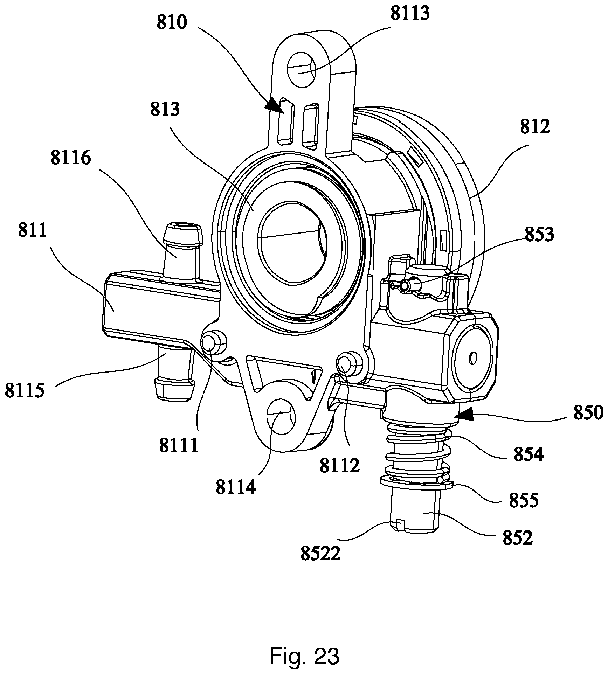

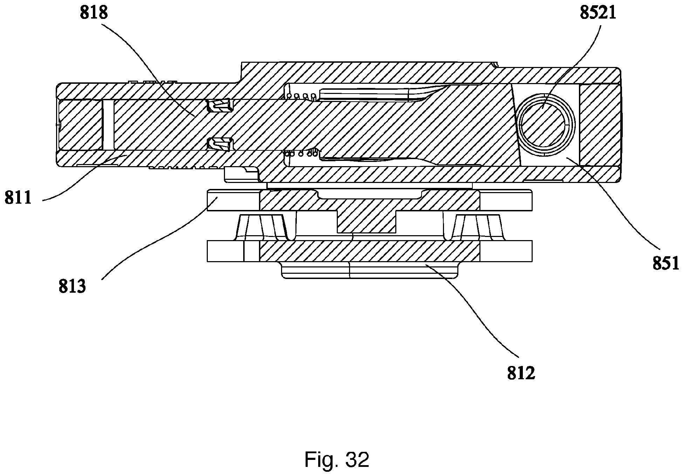

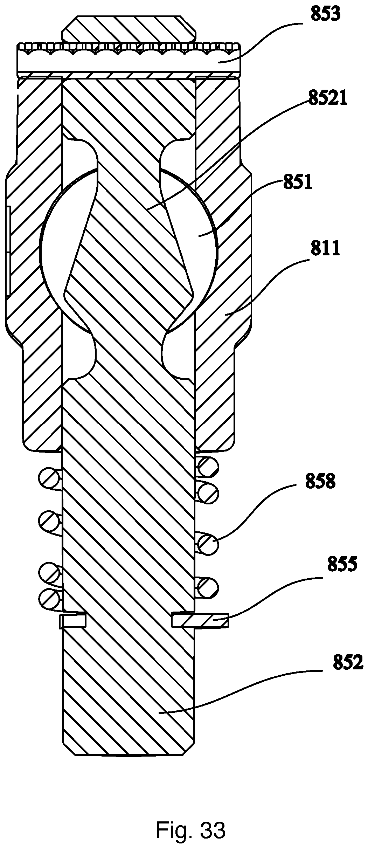

Please refer to Fig. 23, Fig. 25, Fig. 32, Fig. 33. In one embodiment, the oil pump 810 also includes an adjustment device 850 for adjusting the oil output. The adjustment device 850 includes an adjustment chamber 851, an adjustment rod 852, a limit rod 853, and a limiting assembly. The adjustment chamber 851 is set on the side of the pump body 811 away from the oil inlet 8115 and the oil outlet 8116, and is connected to the inner cavity of the pump body 811. The adjustment rod 852 passes through the adjustment chamber 851 from bottom to top. A conical adjustment part 8521 is set on the adjustment rod 852, located inside the adjustment chamber 851 and can be stopped inside the adjustment chamber 851. Rotating the adjustment rod 852 can adjust the gap between the conical adjustment part 8521 and the adjustment chamber 851, thereby adjusting the oil output of the oil pump 810. The limit rod 853 is inserted through the upper end of the adjustment rod 852 and stopped on the pump body 811. Correspondingly, multiple limiting grooves are set circumferentially on the upper surface of the pump body 811 around the adjustment rod 852. The limit rod 853 will engage in one of these limiting grooves each time it rotates, ensuring stability after rotating the adjustment rod 852. The limiting assembly is set at the end of the adjustment rod 852 away from the limit rod 853. It includes a limiting ring 855 and an elastic member 854. The limiting ring 855 is fixedly set on the adjustment rod 852. For example, a circumferential groove is set on the adjustment rod 852, and the limiting ring 855 is installed in this groove. The elastic member 854 is fitted over the adjustment rod 852 and abuts against the limiting ring 853. The limiting ring 855 and the limit rod 852 form an elastic limit for the adjustment rod 852, allowing the adjustment rod 852 to only rotate left and right but not move up and down. The adjustment rod 852 can be adjusted according to the actual required oil output. When rotating the adjustment rod 852, the limit rod 853 will rotate with it and engage with the upper surface of the pump body 811, thus ensuring stability after rotating the adjustment rod 852. The elastic force of the elastic member 854 further enhances this stability.

Please refer to Fig. 23. To facilitate rotation, an adjustment slot 8522 is set on the lower end face of the adjustment rod 852. An adjustment part (not shown in the figure) that matches the adjustment slot 8522 can be set below the adjustment rod 852. The adjustment part, for example, can be an adjustment knob. Inserting the adjustment knob into the adjustment slot 8522 to rotate the adjustment rod 852 can greatly improve its turning force, making it easier for users to adjust the oil output.

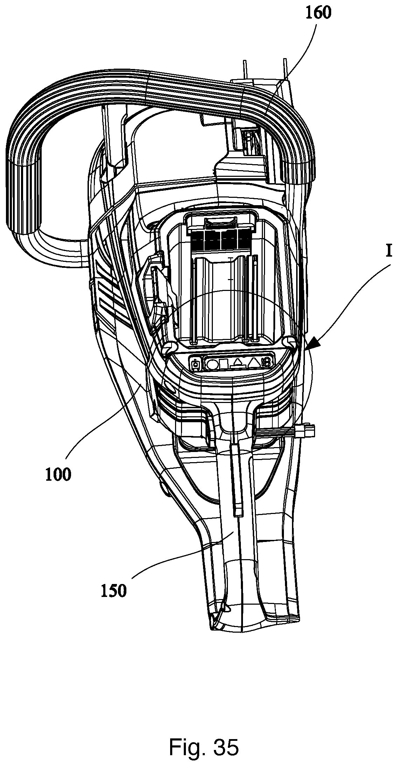

Please refer to Fig. 1 and Fig. 35. In one embodiment, the integrated display module 900 includes a handle heating switch 910 and a display panel 920. The display panel 920 is used to show various functional states of the gardening tool. Multiple indicator lights are set on the display panel 920 to display various functional states of the gardening tool. Users can understand the various functional states of the gardening tool through the display panel 920. For convenient operation and observation, the display panel 920 is set on the outer surface of the housing 100 between the battery pack cavity 140 and the main handle 150. The handle heating switch 910 is a device used to control handle heating. It can be set at any convenient position on the housing 100 for operation, such as on the main handle 150 or on the outer surface of the housing 100 between the battery pack cavity 140 and the main handle 150. Preferably, the handle heating switch 910 is set next to the display panel 920 for convenient synchronous operation with the display panel 920. When the handle heating switch 910 is turned on, it can heat the main handle 150 and/or the auxiliary handle 160.

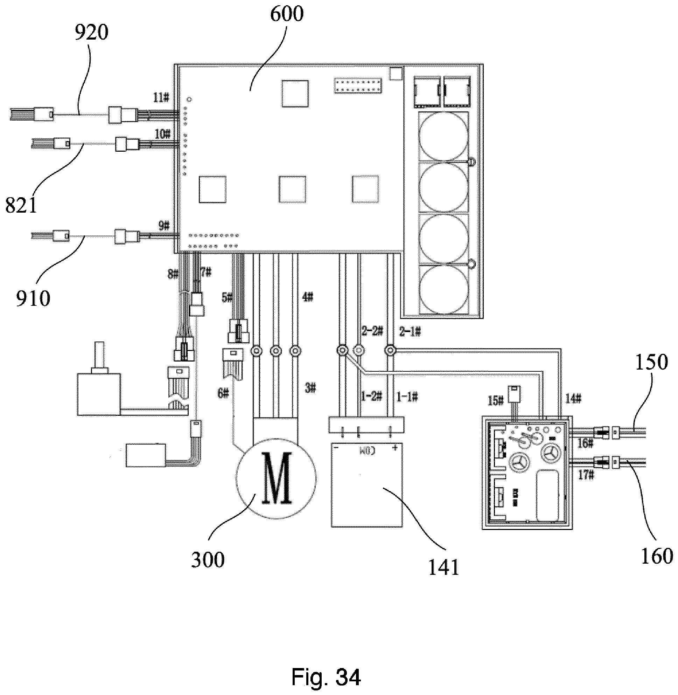

Please refer to Fig. 1, Fig. 34, and Fig. 35. In one embodiment, a first accommodating cavity 170 and a second accommodating cavity 180 are set on the housing 100 corresponding to the position of the integrated display module 900. The handle heating switch 910 is installed in the first accommodating cavity 170, and the display panel 920 is installed in the second accommodating cavity 180. The first accommodating cavity 170 and the second accommodating cavity 180 can be integrated together, that is, one cavity is set on the outer surface of the housing 100, with installation positions for the handle heating switch 910 and the display panel 920 set inside the cavity. The first accommodating cavity 170 and the second accommodating cavity 180 can also be set independently, for example, arranged side by side on the housing 100 between the main handle 150 and the battery pack cavity 140, or set at different positions on the housing 100, which can be determined according to the installation positions of the handle heating switch 910 and the display panel 920.

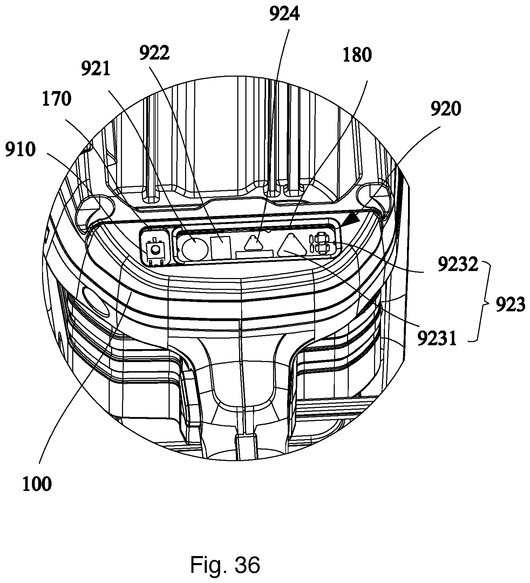

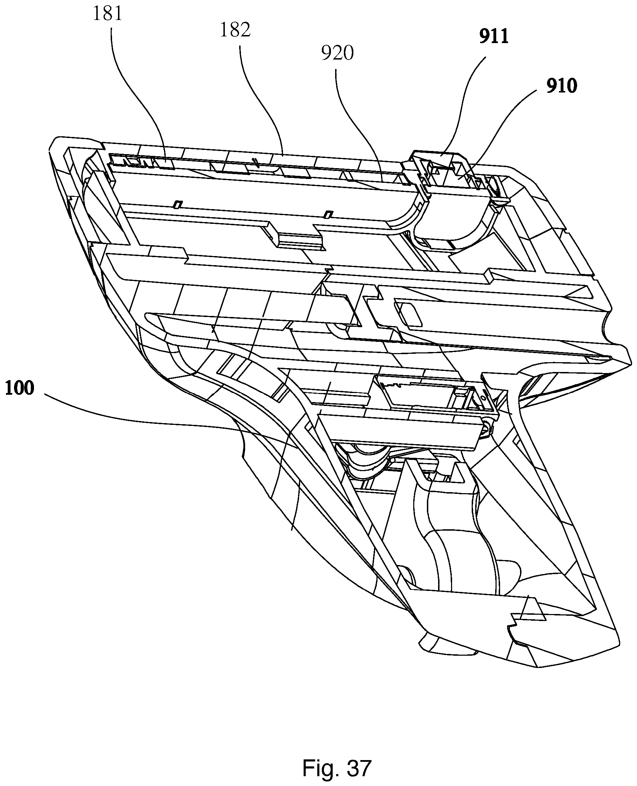

Please refer to Fig. 36~Fig. 38. In one embodiment, the integrated display module 500 also includes a light shield 181 and a transparent cover 182. The light shield 181 covers the outer side of the display panel 920 in sequence, used to block external light sources and prevent the indicator lights on the display panel 920 from being unclear due to interference from external light. The transparent cover 182 is covered on the outer side of the light shield 181, providing a certain protective function to prevent damage to the display panel 920.

Please refer to Fig. 35. In one embodiment, to facilitate the operator's touch of the switch, the handle heating switch 910 is a button-type switch, with its switch button 911 having an elastic self-resetting feature. The switch button 911 can be in the form of a spherical surface, cylinder, or other button forms. In this embodiment, the switch button 911 is a soft button. Pressing the switch button 911 can activate or deactivate the handle heating. Furthermore, the handle heating switch 910 has a first gear, a second gear, and a third gear. When the handle heating switch 910 is in the first gear, it can heat the main handle 150; when the handle heating switch 910 is in the second gear, it can heat the auxiliary handle 160; when the handle heating switch 910 is in the third gear, it can heat both the main handle 150 and the auxiliary handle 160 simultaneously.

Preferably, the handle heating switch 910 also includes a heating indicator light (not shown in the figure). The heating indicator light can be set on the handle heating switch 910 or next to it, or it can be integrated into the display panel 920. When the handle heating switch 910 is turned on, the heating indicator light illuminates. Furthermore, the heating indicator light can use different colored lights to correspond to different gears. For example, a green light corresponds to the first gear, a yellow light corresponds to the second gear, and a red light corresponds to the third gear, and so on. With this setup, the gear of the handle heating switch 910 can be known by observing the color of the light.

Please refer to Fig. 35. In one embodiment, the display panel 920 is equipped with a power indicator light 921, an oil level indicator light 922, and a fault alarm indicator light 923. Among these, the power indicator light 921 is used to display the on/off status of the power source (battery pack). When the power is on, this power indicator light 921 illuminates; when the power is off, this power indicator light 921 does not illuminate. The oil level indicator light 922 is used to display the oil level in the oil bottle 820 of the lubrication device 800. The control board 600 controls the on and off of the oil level indicator light 922 based on the oil level feedback from the oil level sensor 821 on the oil path of the oil bottle 820. The oil level indicator light 922 can illuminate when oil is low, or when oil is not low, or it can display different colored lights when oil is low or not low. For example, when oil is low, the oil level indicator light 922 displays a red light; when oil is not low, the oil level indicator light 922 displays a green light.

The fault alarm indicator light 923 is used to receive corresponding faults sent by the control board 600 and give alarms. The fault alarm indicator light 923 includes a fault warning light 9231 and a fault category digital light 9232. When a fault occurs during product operation, the fault warning light 9231 flashes, and the control board will self-check and issue the fault cause. At this time, the fault category digital light 9232 will display the fault category number. Users can refer to the manual to know the fault type corresponding to different numbers and maintain according to the fault type.

In one embodiment of this power tool application, different numbers of flashes of the fault warning light 9231 correspond to different error codes. For example:
1. If the fault warning light 9231 flashes twice shortly, the fault category digital light 9232 will display the fault category number 2, representing controller self-check failure. The control board fails the self-check, the motor stops and reports an error. The solution is to unplug the battery pack and restart. If the problem persists, replace the controller.
2. If the fault warning light 9231 flashes three times shortly, the fault category digital light 9232 will display the fault category number 3, representing battery pack communication anomaly. The communication between the battery pack and the control board fails to connect, or the normal communication is suddenly interrupted. The solution is to unplug the battery pack and restart. If the problem persists, replace the controller.
3. If the fault warning light 9231 flashes four times shortly, the fault category digital light 9232 will display the fault category number 4, representing overcurrent protection. When the motor is running, the phase line current or the bus current exceeds the set protection value. The solution is to release the trigger and restart the machine.
4. If the fault warning light 9231 flashes five times shortly, the fault category digital light 9232 will display the fault category number 5, representing low input voltage. The battery pack voltage is lower than the motor start voltage, or during motor operation, the battery voltage is less than the minimum operating voltage. The solution is to replace with a fully charged battery pack.
5. If the fault warning light 9231 flashes six times shortly, the fault category digital light 9232 will display the fault category number 6, representing controller high temperature protection. The controller temperature exceeds the set protection value during operation. The solution is to wait for the controller temperature to cool down before using the machine again.
6. If the fault warning light 9231 flashes seven times shortly, the fault category digital light 9232 will display the fault category number 7, representing motor stall. This could be due to motor step loss, motor Hall signal anomaly, or the motor encountering resistance during startup or operation and failing to continue running; or during motor startup or operation, there's a phase change error, and the motor fails to continue running; for motors with Hall sensors, it could be a Hall signal anomaly. The solution is to release the trigger and restart the machine. If the problem persists, replace the controller.
7. If the fault warning light 9231 flashes eight times shortly, the fault category digital light 9232 will display the fault category number 8, representing switch logic anomaly. When starting the machine, the sequence of button presses is incorrect, or some buttons are ineffective. The solution is to release the trigger and restart the machine in the correct sequence. If the problem persists, replace the controller.
8. If the fault warning light 9231 flashes nine times shortly, the fault category digital light 9232 will display the fault category number 9, representing software authentication error. When the software authentication code is running, it detects an MCU anomaly. The solution is to unplug the battery pack and restart. If the problem persists, replace the controller.
9. If the fault warning light 9231 flashes ten times shortly, the fault category digital light 9232 will display the fault category number 10, representing motor over-temperature protection. During motor operation or startup, the motor temperature exceeds the set protection value. The solution is to wait for the motor temperature to cool down before using the machine again.
10. If the fault warning light 9231 flashes once long and once short, the fault category digital light 9232 will display the fault category number 11, representing battery pack high temperature protection. The control board detects that the battery pack temperature exceeds the set protection value. The solution is to wait for the battery pack temperature to cool down, or replace with a new battery pack before using the machine again.
11. If the fault warning light 9231 flashes once long and twice short, the fault category digital light 9232 will display the fault category number 12, representing motor low speed protection. When the actual speed of the motor is less than the set minimum speed, the motor stops and reports an error. The solution is to release the trigger and restart the machine.
12. If the fault warning light 9231 flashes once long and three times short, the fault category digital light 9232 will display the fault category number 13, representing parallel board (PMU) anomaly. This could be due to parallel board communication anomaly or parallel board malfunction. The solution is to unplug the battery pack and restart. If the problem persists, replace the controller.

Please refer to Fig. 35. In one embodiment, the display panel 920 is also equipped with a power adapter light 924 and a Bluetooth indicator light (not shown in the figure). The power adapter light 924 is used to detect whether the capacity of the battery pack 141 matches the gardening tool. When the battery pack 141 capacity does not match the gardening tool, it will light up or flash to serve as a warning. The Bluetooth indicator light is used to display the on/off status of the gardening tool's Bluetooth module. When the Bluetooth indicator light is on, it can correspond to connections with mobile phones, computers, or remote wireless networks. Users can achieve operation monitoring, fault query, and maintenance instructions.

In other embodiments, other modules can be added to the display panel 920 according to different customer needs, such as illumination light, power display, power output display, current display, rotation speed display, etc. Correspondingly, illumination indicator light, power indicator light, power output indicator light, current indicator light, rotation speed indicator light, etc., will be added to the display panel 920. One or more of the above-listed modules can be selected, specifically based on the actual needs of users.

Please refer to Fig. 35. The display modules on the display panel 920 can be concentrated on a single screen with independent light displays. At the same time, different colored lights can be used to indicate different operating states. Also, according to the model and user requirements, multiple screens or combined module displays can be set up, or independent displays and displays at different positions can be set for specific buttons/keys/toggles/touch activations, etc. There are no restrictions on this. The integration or multiple combinations and multiple units of control of the display panel 920 can be achieved through independent sensing and response, or through PCBA control programming display as needed. The specific control process can refer to the control programs in existing technology, which will not be described in detail here.

This invention of a power tool has the beneficial effects of improving heat dissipation effect, reducing power tool overheating protection, improving the positioning accuracy of oil pump installation, and facilitating display, etc. Therefore, this invention effectively overcomes some practical problems in existing technology, thus having high utilization value and practical significance.

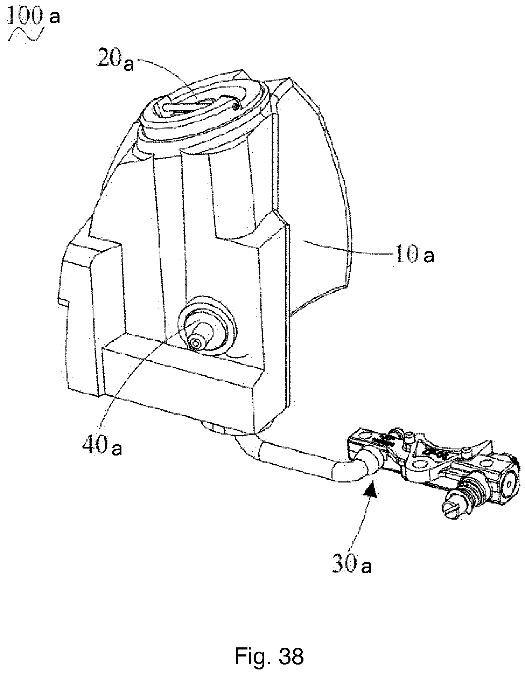

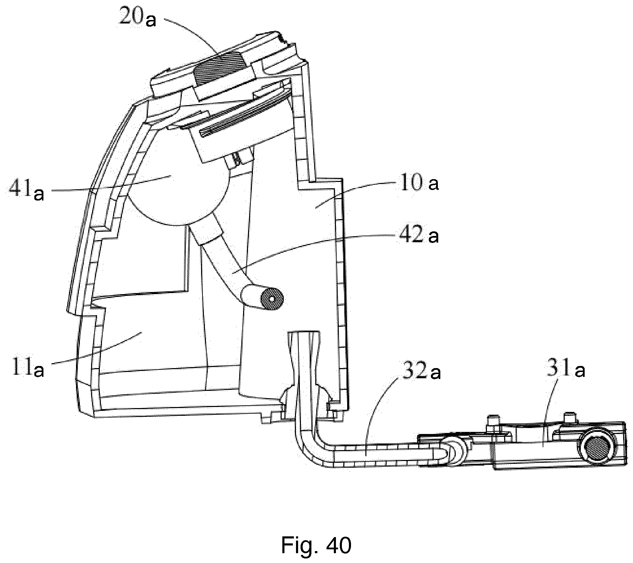

As shown in Fig. 38 to Fig. 40, this invention provides an anti-leak oil tank 100a that can be used for chainsaws. It includes an oil tank body 10a, a cover 20a, an oil pump assembly 30a, and a pressure balancing component 40a. The oil tank body 10a has an internal cavity 11a for storing oil (not shown). The cover 20a is detachably connected to the top of the oil tank body 10a to seal the cavity 11a. The oil pump assembly 30a is connected to the bottom of the oil tank body 10a and is configured to pump oil from the cavity 11a. The pressure balancing component 40a includes a deformable member 41a and a pipe 42a connected to it. One end of the pipe 42a is connected to the internal cavity of the deformable member 41a. The deformable member 41a is designed to deform when the pressure in the cavity 11a increases or decreases, thus balancing the pressure in the cavity 11a. In this embodiment, the deformable member 41a is placed inside the cavity 11a, with one end of the pipe 42a connected to its internal cavity and the other end connected to external air.

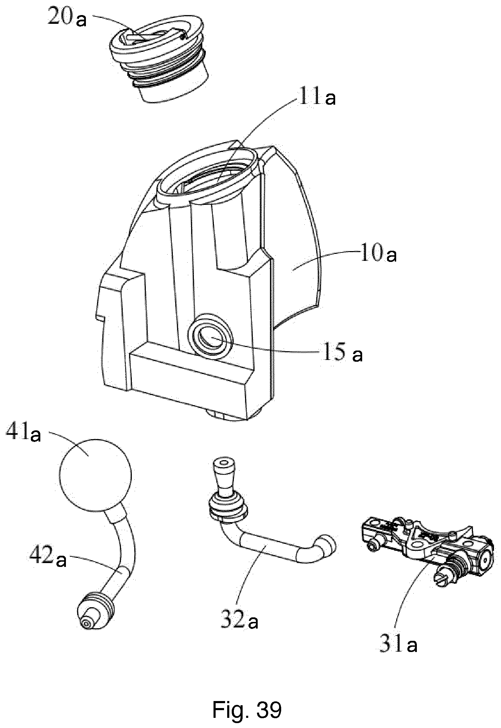

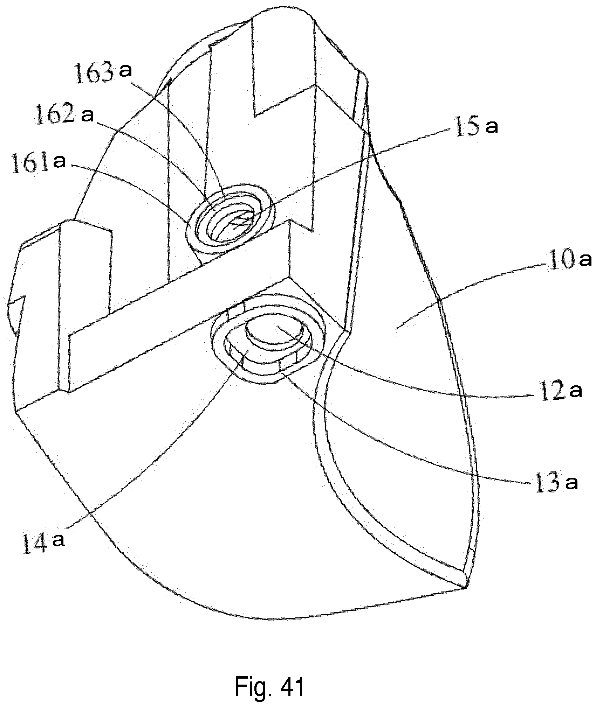

As shown in Fig. 39 to Fig. 42, the oil tank body 10a is roughly fan-shaped, with the bottom dimensions larger than the top. This design improves the stability of the oil tank body 10a. Of course, the shape and size of the oil tank body 10a can be designed according to actual needs without limitation.

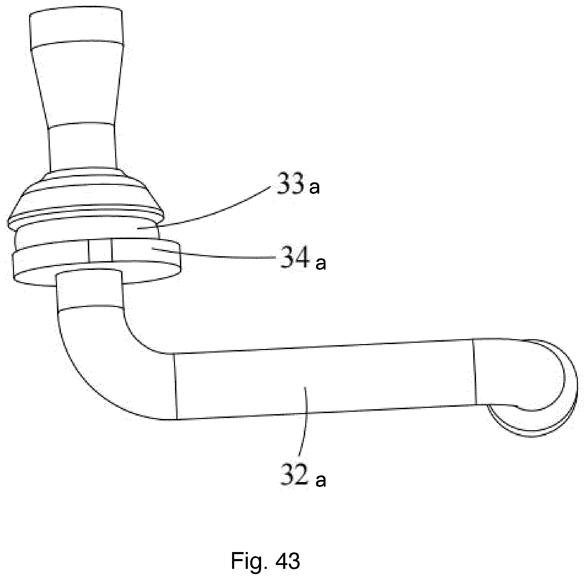

Referring to Fig. 43, the oil pump assembly 30a includes an oil pump 31a and a delivery channel 32a that extends from the bottom of the oil tank body 10a into its interior. A first installation hole 12a is made at the bottom of the oil tank body 10a. One end of the delivery channel 32a extends into the oil tank body 10a through this first installation hole 12a. A sealing ring 33a is fitted at this end of the delivery channel 32a, sealing it to the first installation hole 12a to prevent oil leakage from the oil tank body 10a through the first installation hole 12a.

A limiting block 13a is set at the bottom of the oil tank body 10a. This limiting block 13a is ring-shaped and surrounds the first installation hole 12a, forming a limiting cavity 14a on the outer side of the first installation hole 12a. The end of the delivery channel 32a also has a positioning block 34a. This positioning block 34a is flat and located below the sealing ring 33a. It serves to restrict the sealing ring 33a and works with the limiting block 13a to ensure stable connection between the oil pump assembly 30a and the bottom of the oil tank body 10a.

In this embodiment, the positioning block 34a is contained within the limiting cavity 14a for positioning. Of course, the positioning block 34a doesn't have to fill the entire limiting cavity 14a, which can reduce the weight of the anti-leak oil tank 100a and facilitate disassembly and maintenance. The height of the delivery channel 32a's insertion into the oil tank body 10a is lower than that of the pipe 42a, and both the delivery channel 32a and the pipe 42a are on the same side of the oil tank body 10a. This arrangement makes the installation structure of the delivery channel 32a and pipe 42a more compact within the oil tank body 10a. Of course, in other embodiments, the insertion height of the delivery channel 32a and the positions of the delivery channel 32a and pipe 42a on the oil tank body 10a can be adjusted according to actual needs without limitation.

A second installation hole 15a is made in the side wall of the oil tank body 10a. One end of the pipe 42a passes through this second installation hole 15a and is sealed to the oil tank body 10a. The other end of the pipe 42a extends into the cavity 11a and towards the top of the oil tank body 10a, positioning the deformable member 41a near the top of the oil tank body 10a. In this embodiment, the pipe 42a is a nitrile rubber hose, and the deformable member 41a is a hollow silicone rubber ball. This makes the pressure balancing component 40a lightweight, and the hollow silicone rubber ball can deform more easily. Of course, in other embodiments, different materials can be used for the pipe 42a and the deformable member 41a, and the deformable member 41a can have other shapes without limitation.

The second installation hole 15a is circular. The side wall of the oil tank body 10a has a first protrusion 161a and a second protrusion 162a, both with circular cross-sections. The first protrusion 161a connects to the outer periphery of the second protrusion 162a, with the first protrusion 161a extending further out than the second protrusion 162a, forming a step 163a between them. The second installation hole 15a passes through the second protrusion 162a.

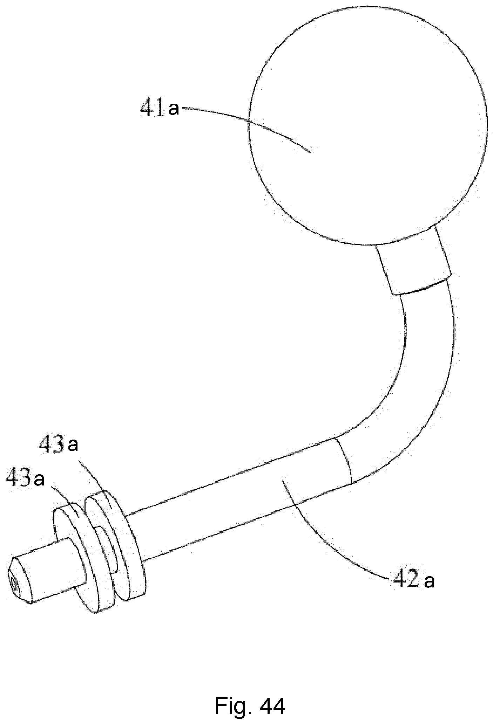

As shown in Fig. 44, the end of the pipe 42a that passes through the second installation hole 15a has two washers 43a. One washer 43a is inside the oil tank body 10a, while the other is contained within the step 163a. This arrangement allows the two washers 43a to work together to seal the second installation hole 15a, preventing oil leakage from the oil tank body 10a through this hole.

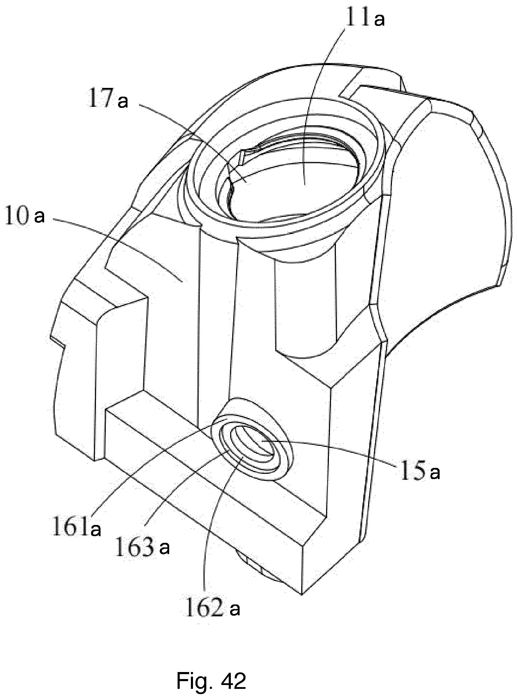

As shown in Fig. 42, both the first protrusion 161a and the second protrusion 162a are set at an incline. In other words, along the height of the oil tank body 10a, the protrusions on the right side extend less than those on the left side. This design allows the pipe 42a to fit more closely to the oil tank body 10a, improving the seal.

In another variation of this embodiment, the cavity 11a of the oil tank body 10a is configured to have a variable volume, allowing the pressure in the cavity 11a to remain balanced with external air pressure. This means the oil tank body 10a itself can deform, providing better pressure regulation in the cavity 11a.

Alternatively, one face of the oil tank body 10a could be made of a flexible membrane. This would allow the membrane to deform under pressure, maintaining balance between the pressure in the cavity 11a and external air pressure.

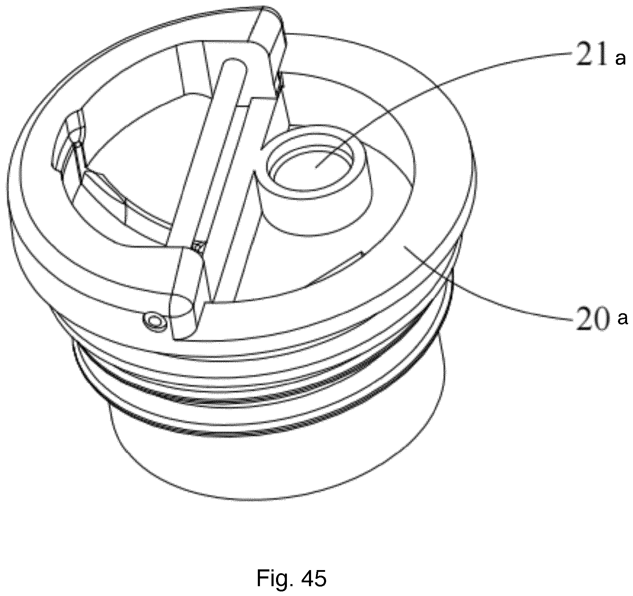

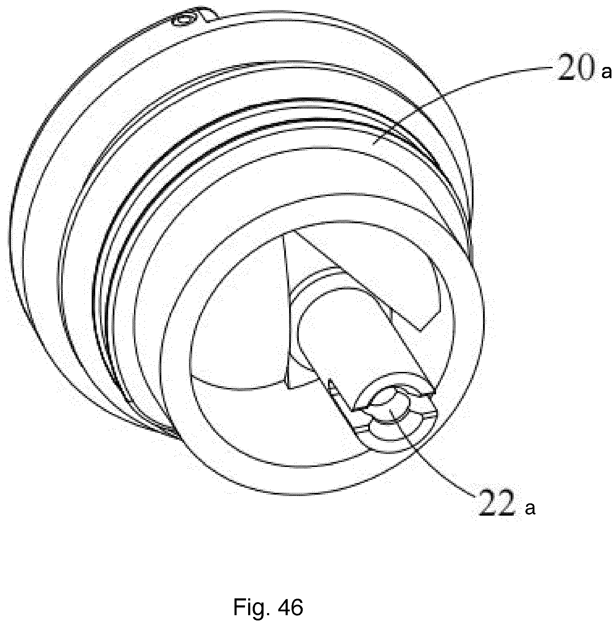

As shown in Fig. 42, Fig. 45, and Fig. 46, an installation hole 17a is made at the top of the oil tank body 10a. The cover 20a is screwed onto the oil tank body 10a through this installation hole 17a. The cover 20a has an oil filling port 21a and an oil filling pipe 22a extending downward from it. The oil filling port 21a is connected to the oil filling pipe 22a, allowing oil to be delivered into the cavity 11a of the oil tank body 10a through this system.

When using this anti-leak oil tank 100a, as the oil level in the oil tank body 10a gradually rises, the pressure in the cavity 11a increases. The gas in the internal cavity of the deformable member 41a is expelled through the pipe 42a to the external air, causing the volume of the deformable member 41a to gradually decrease. This achieves pressure balance within the oil tank body 10a. Preferably, the pressure inside the oil tank body 10a can be maintained between 0-0.2bar, though the specific value depends on the type and parameters of the oil pump 31a itself.

When the oil level in the oil tank body 10a gradually decreases, the pressure in the cavity 11a reduces. At this point, external air can enter the internal cavity of the deformable member 41a through the pipe 42a, causing the volume of the deformable member 41a to gradually increase, thus maintaining pressure balance within the oil tank body 10a.

Of course, when the oil level in the oil tank body 10a remains constant but the temperature inside rises, the pressure in the cavity 11a increases. The gas in the internal cavity of the deformable member 41a is expelled through the pipe 42a to the external air, causing the volume of the deformable member 41a to gradually decrease, maintaining pressure balance within the oil tank body 10a. In other words, when the oil tank body 10a is moved from a low-temperature environment to a high-temperature environment, the oil inside expands, increasing the internal pressure of the oil tank body 10a. The internal pressure of the oil tank body 10a compresses the deformable member 41a, reducing its volume and thus lowering the internal pressure of the oil tank body 10a, effectively preventing oil leakage.

When the temperature inside the oil tank body 10a decreases, the pressure in the cavity 11a gradually reduces. At this point, external air can enter the internal cavity of the deformable member 41a through the pipe 42a, causing the volume of the deformable member 41a to gradually increase, maintaining pressure balance within the oil tank body 10a. In other words, when the oil tank body 10a is moved from a high-temperature environment to a low-temperature environment, the internal pressure of the oil tank body 10a decreases. Under the influence of external atmospheric pressure, the deformable member 41a expands, increasing its volume and balancing the internal pressure of the oil tank body 10a, effectively preventing oil leakage.

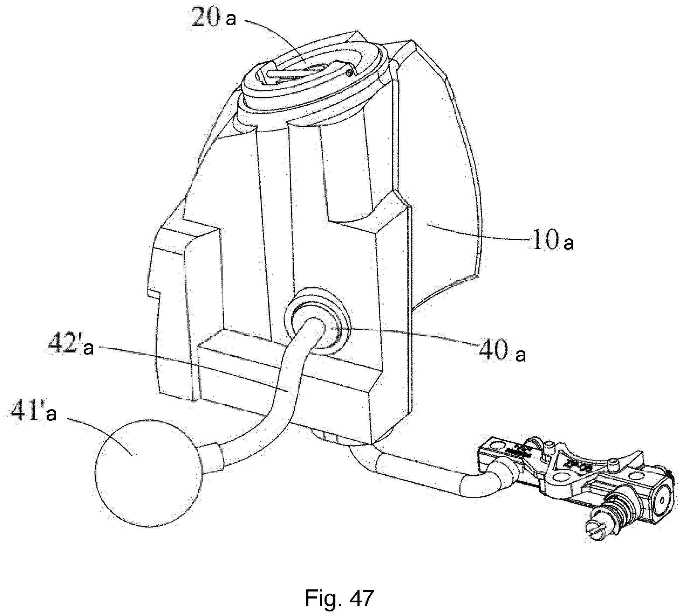

As shown in Fig. 47, in another embodiment of this invention, the deformable member 41a' is placed outside the cavity 11a. In this case, one end of the pipe 42a' is connected to the internal cavity of the deformable member 41a', while the other end is connected to the cavity 11a. With this arrangement, when the pressure in the cavity 11a gradually increases, the oil/gas in the cavity 11a can flow into the internal cavity of the deformable member 41a' through the pipe 42a'. This adjusts the pressure in the cavity 11a while increasing the volume of the oil tank body 10a, maintaining pressure balance within the oil tank body 10a. For example: when the oil level in the oil tank body 10a is higher than the end of the pipe 42a' connected to the cavity 11a, oil from the oil tank body 10a is forced into the deformable member 41a', or a mixture of oil and gas is forced in. When the oil level in the oil tank body 10a is lower than the end of the pipe 42a' connected to the cavity 11a, gas from the oil tank body 10a is forced into the deformable member 41a', or a mixture of oil and gas is forced in.

When the pressure in the cavity 11a gradually decreases, the oil/gas in the internal cavity of the deformable member 41a' can flow back into the cavity 11a through the pipe 42a', causing the volume of the deformable member 41a' to gradually decrease, maintaining pressure balance within the oil tank body 10a. For example: when the oil level in the deformable member 41a' is higher than the end of the pipe 42a' connected to the deformable member 41a', oil from the deformable member 41a' is forced into the cavity 11a, or a mixture of oil and gas is forced in. When the oil level in the deformable member 41a' is lower than the end of the pipe 42a' connected to the deformable member 41a', gas from the deformable member 41a' is forced into the cavity 11a, or a mixture of oil and gas is forced in.

Of course, a one-way valve could also be installed at the point where the pipe 42a' connects to the cavity 11a. This one-way valve would allow only gas to pass through, not oil, thus enabling only gas to flow back and forth.

In summary, the anti-leak oil tank 100a of this invention is equipped with a pressure balancing component 40a. This pressure balancing component 40a includes a deformable member 41a, 41a' and a pipe 42a, 42a' connected to it. One end of the pipe 42a, 42a' is connected to the internal cavity of the deformable member 41a, 41a'. This allows the deformable member 41a, 41a' to deform when the pressure in the cavity 11a increases or decreases, balancing the pressure in the cavity 11a and preventing oil leakage.

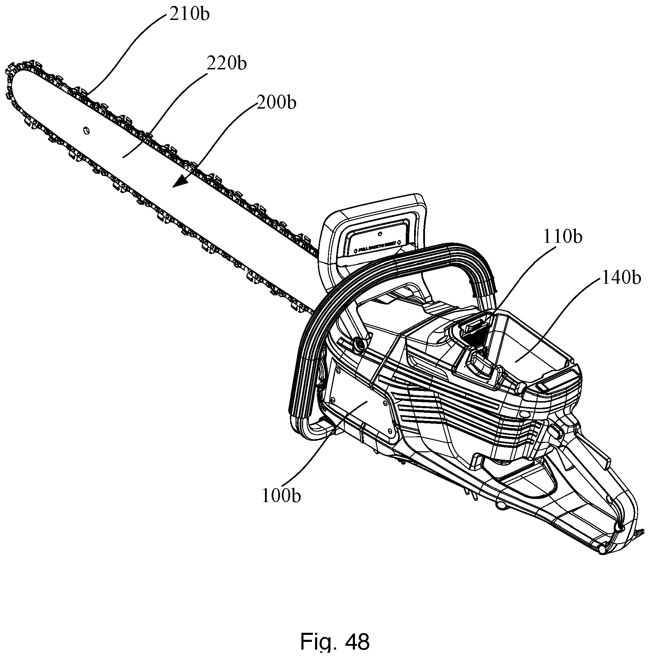

Fig. 48 to Fig. 51 show an electric chain saw of this application, including a housing 100b, a cutting tool 200b, a motor 300b, and a fan 400b. The housing 100b has a first air inlet 110b and a first air outlet 120b. Air flows into the housing 100b through the first air inlet 110b and out through the first air outlet 120b, cooling components inside the housing 100b. The cutting tool 200b is mounted on the housing 100b and includes a saw chain 210b supported by a guide bar 220b. The motor 300b is fixed inside the housing 100b to drive the cutting tool 200b. It includes a stator, rotor, and motor casing 310b. The motor 300b is an outer rotor type, with the motor casing 310b being part of the rotor. The fan 400b is fixed to the output shaft 320b of the motor 300b. When the motor 300b operates, it drives the fan 400b to rotate, expelling air from the housing 100b through the first air outlet 120b. The fan 400b includes fan blades 410b with an outer diameter larger than that of the motor casing 310b, improving the ratio of heat dissipation to heat generation and effectively controlling the motor's temperature rise.

In this electric chain saw, the motor casing 310b has an outer diameter range of 2575mm. The ratio of the fan blade 410b outer diameter to the motor casing 310b outer diameter is 1.22.0, preferably 1.3~1.5. This effectively improves heat dissipation while avoiding excessive power consumption by the fan 400b.

The fan 400b can be radial, axial, or a combination of both. The fan blades 410b can be forward-curved, straight, or backward-curved.

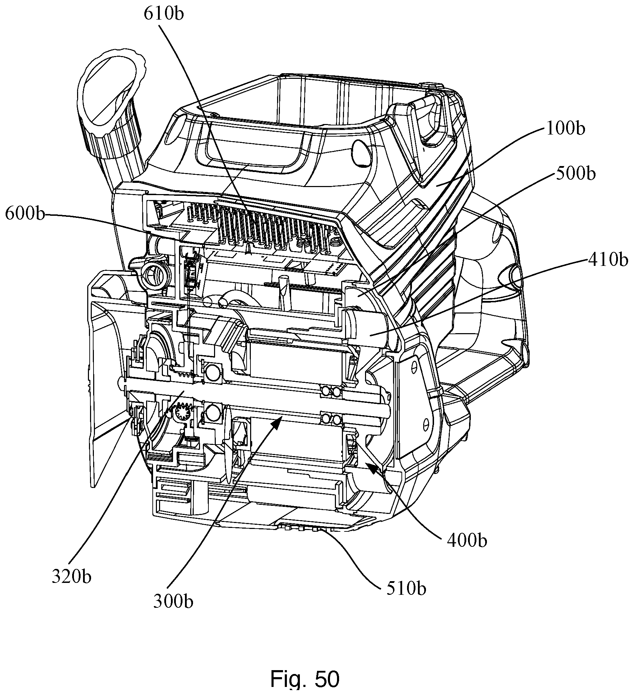

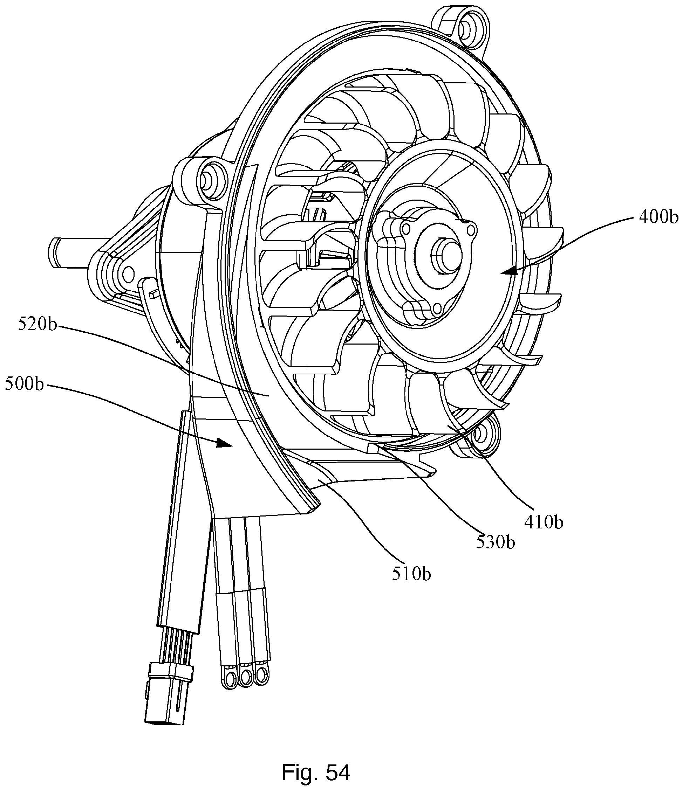

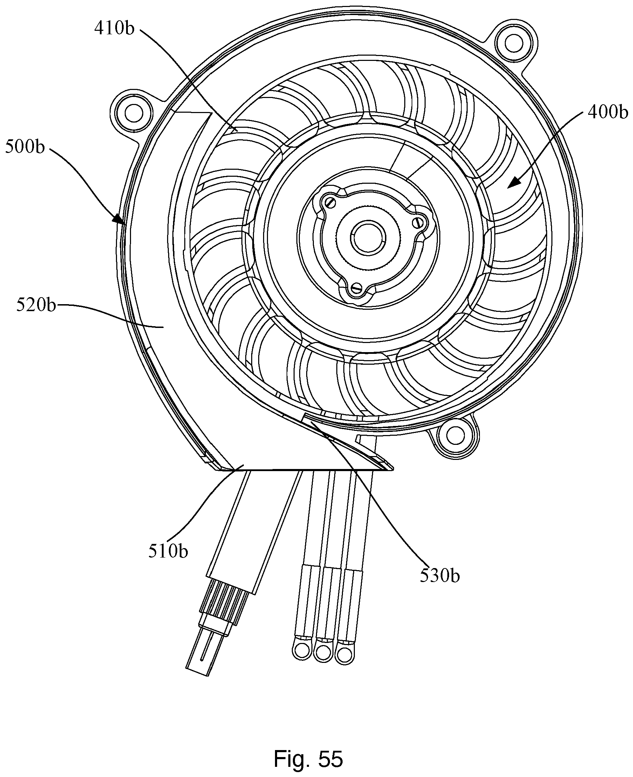

As shown in Fig. 50, Fig. 51, and Fig. 53 to Fig. 55, the electric chain saw also includes a volute casing 500b fitted around the fan 400b. The volute casing 500b has a second air outlet 510b aligned with the first air outlet 120b, guiding air from the fan blades 410b out of the housing 100b.

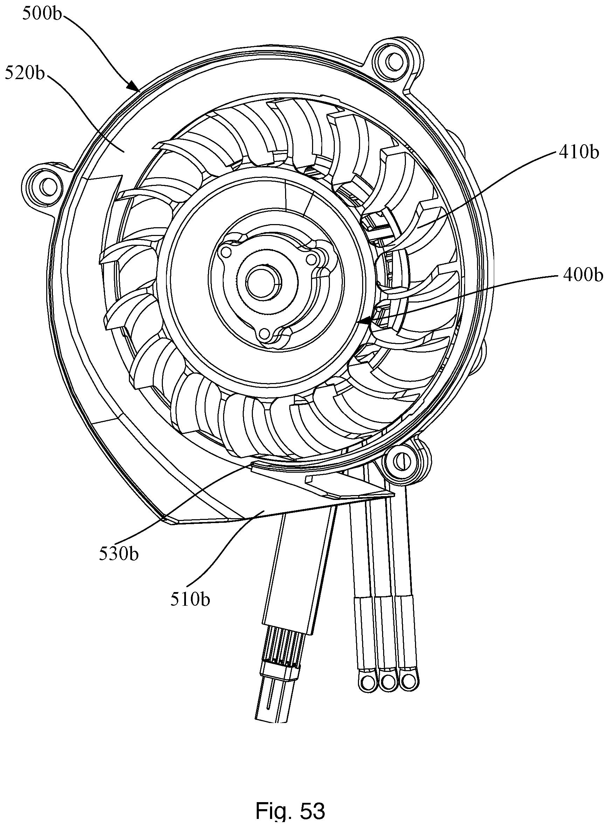

As shown in Fig. 53 to Fig. 55, the volute casing 500b has a spiral passage 520b. Preferably, the spiral passage 520b is a gradually expanding spiral that widens along the fan 400b rotation direction. This design facilitates air flow guidance and rapid exhaust of air driven by the fan blades 410b, enhancing heat dissipation capability.

In one embodiment, at least a portion of the spiral passage 520b gradually deepens towards the motor 300b along the fan 400b rotation direction, terminating at the second air outlet 510b. This design effectively increases the cross-sectional area of the second air outlet 510b, facilitating rapid air outflow and improving heat dissipation. Additionally, the deepening passage 520b creates a barrier between the fan blades 410b and the passage, reducing hot air recirculation and enhancing cooling efficiency.

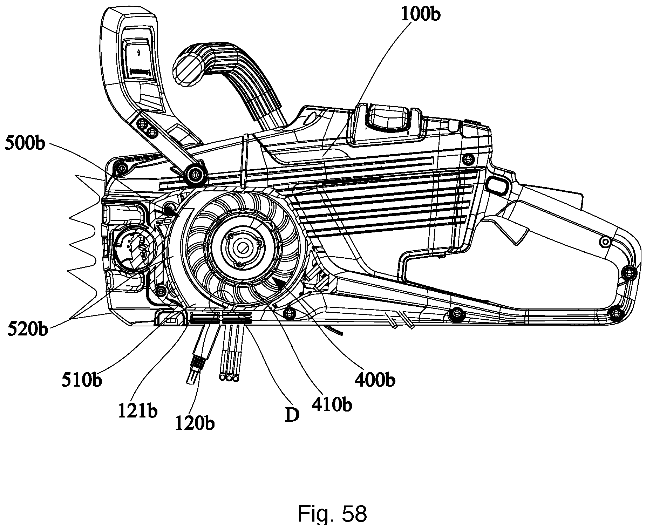

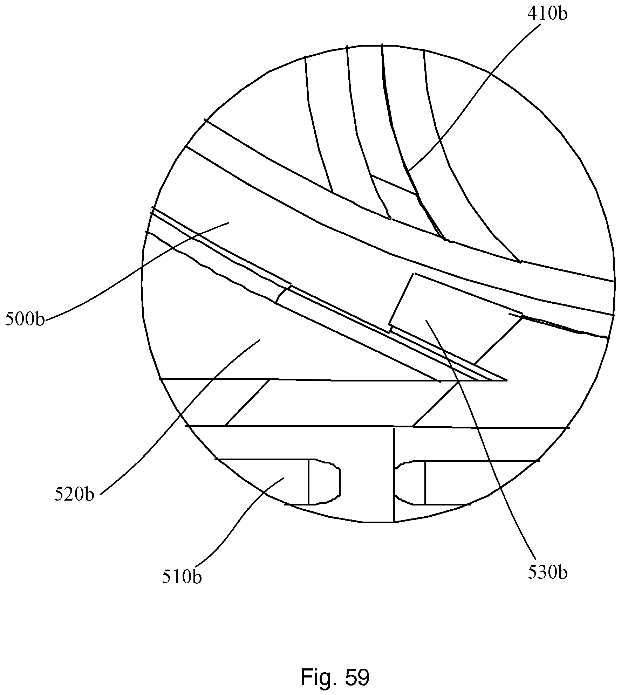

As shown in Fig. 53 to Fig. 55, Fig. 58, and Fig. 59, a wind closure plate 530b is provided at the second air outlet 510b. The wind closure plate 530b extends from the second air outlet 510b of the volute casing 500b in the opposite direction of the fan 400b rotation, reaching close to where it would be tangent to the fan blades 410b. This design reduces cooling air recirculation, thereby improving cooling capacity. The wind closure plate 530b extends towards the housing 100b until it contacts it, effectively isolating the spiral passage 520b at the second air outlet 510b from the fan blades 410b, further reducing hot air recirculation and enhancing cooling effectiveness.

In one embodiment, the gap between the end of the wind closure plate 530b and the outer diameter of the fan blades 410b is 1~8mm. This ensures effective air blocking while providing sufficient clearance to avoid interference due to manufacturing tolerances.

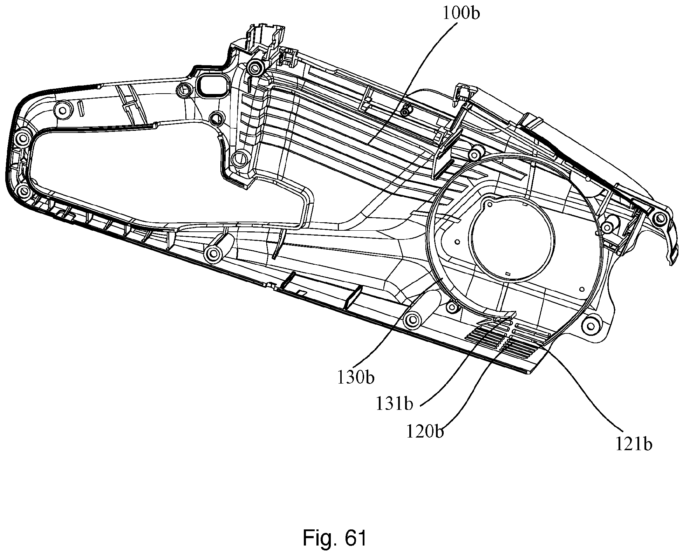

As shown in Fig. 61, the housing 100b is equipped with a closure part 130b that matches with the volute casing 500b, isolating the spiral passage 520b from other areas inside the housing 100b. This ensures that air driven by the fan 400b is effectively guided through the spiral passage 520b and out through the second air outlet 510b, preventing hot air from re-entering the housing 100b and compromising cooling effectiveness. The closure part 130b includes a wind closure section 131b that matches with the wind closure plate 530b, isolating the spiral passage 520b at the second air outlet 510b from the fan blades 410b, preventing air at the second air outlet 510b from being re-drawn by the fan 400b.

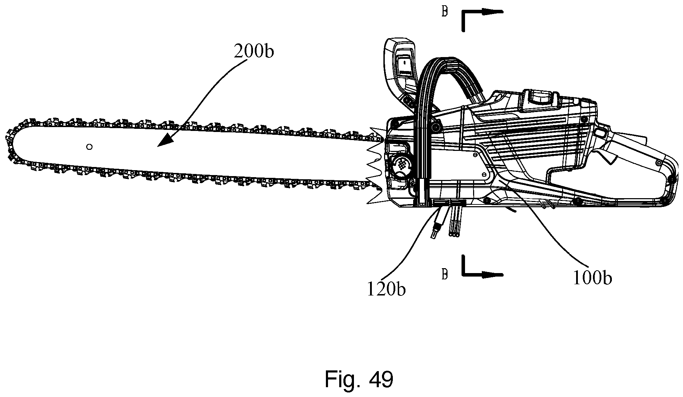

As shown in Fig. 48 and Fig. 49, the first air outlet 120b is located at the bottom of the housing 100b, away from the cutting tool 200b. This arrangement facilitates air flow from the front of the motor 300b to the rear near the fan 400b, enhancing motor cooling. The first air outlet 120b is equipped with multiple grilles 121b, allowing rapid air outflow while preventing debris from entering the housing 100b.

In one embodiment, the housing 100b includes a battery compartment 140b for housing a battery pack that powers various modules of the electric chain saw. The battery pack can be charged directly in the compartment or removed for charging, allowing for easy battery replacement and extended operation time.

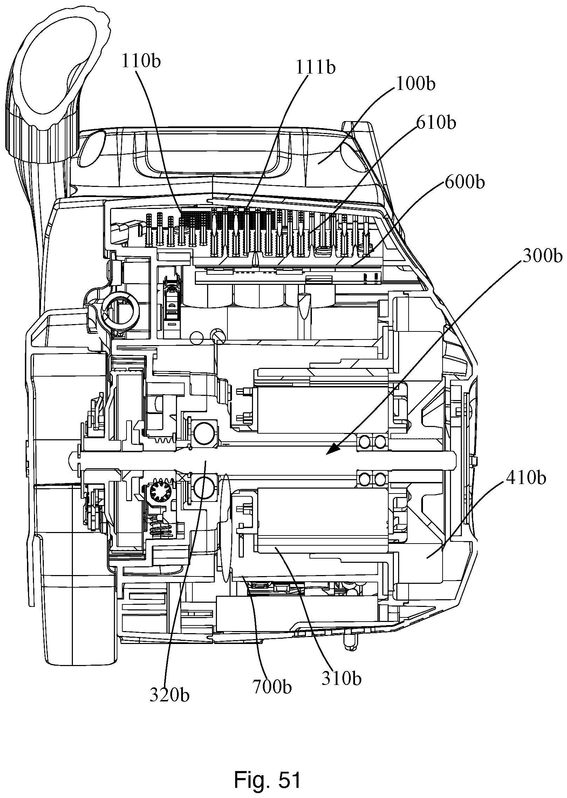

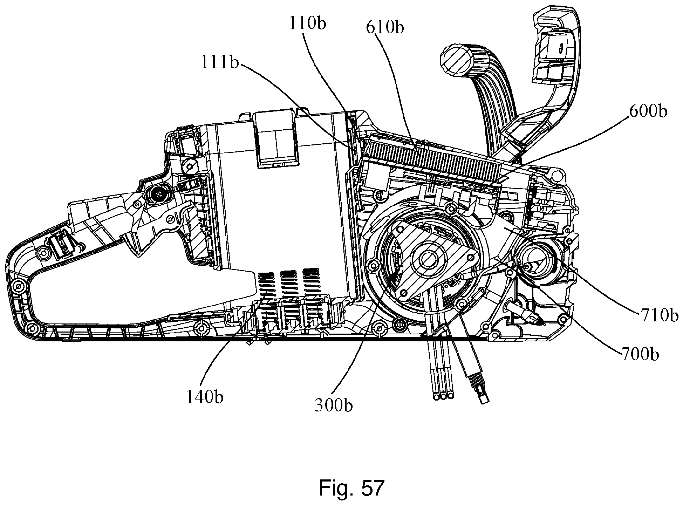

As shown in Fig. 51 and Fig. 57, a filter screen 111b is installed at the first air inlet 110b. This filter screen 111b effectively prevents dust and debris generated during cutting operations from entering the housing 100b through the first air inlet 110b. This reduces the risk of internal component contamination, motor air gap pollution, and air passage blockage, thereby extending the lifespan of the electric chain saw. The first air inlet 110b features a recess for easy insertion and removal of the filter screen 111b, facilitating maintenance and replacement.

In one embodiment, the first air inlet 110b is located within the battery compartment 140b. The battery compartment 140b has multiple ventilation holes connecting to the exterior. Air flows through these ventilation holes into the battery compartment 140b before entering the housing 100b through the first air inlet 110b. This arrangement allows for cooling of the battery pack in the compartment, controlling its temperature rise and preventing overheating shutdowns.

As shown in Fig. 50, Fig. 51, and Fig. 57, a control board 600b is installed inside the housing 100b near the first air inlet 110b. Cool air entering through the first air inlet 110b flows over the control board 600b first, effectively cooling it and preventing overheating failures. The control board 600b generates less heat than the motor 300b and is less heat-resistant, so prioritizing its cooling helps reduce the overall internal temperature of the housing 100b.

The control board 600b is equipped with several cooling pins 610b, which increase its heat dissipation surface area. Preferably, these cooling pins 610b are made of metal, such as aluminum or copper, with aluminum being the preferred choice for its excellent heat dissipation properties.

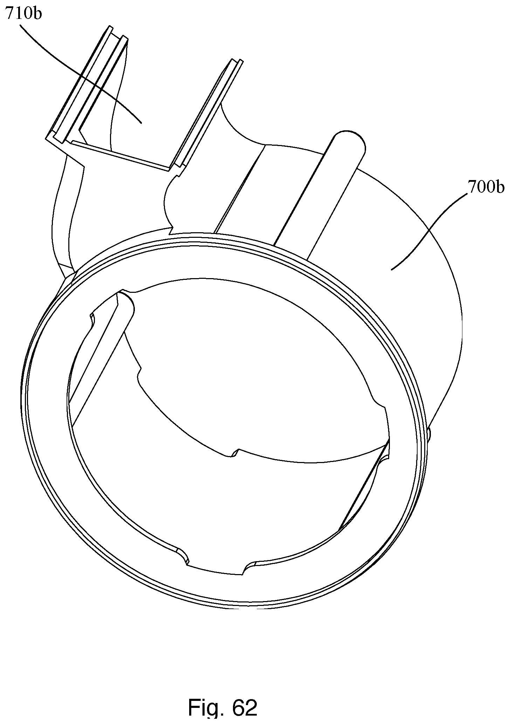

As shown in Fig. 57 and Fig. 62, the housing 100b also contains an air guide part 700b fitted around the motor 300b. This air guide part 700b has a second air inlet 710b, positioned on the opposite side of the control board 600b from the first air inlet 110b. Air entering through the first air inlet 110b flows over the control board 600b before entering the air guide part 700b through the second air inlet 710b. It then flows through the gap between the stator and rotor and through the stator coil spaces to reach the fan 400b. The fan 400b expels this air into the spiral passage 520b of the volute casing 500b, and it's finally discharged through the second air outlet 510b and the first air outlet 120b. This arrangement effectively guides air flow, reducing turbulence inside the housing 100b and improving cooling efficiency.

The electric chain saw may also include other components such as a handle and a display device, which are common in existing electric chain saws and are not elaborated upon in this application.

This application also provides a gardening tool that includes a housing, a working component, a motor, and a fan. The housing has a first air inlet and a first air outlet. The working component is mounted on the housing and is driven by the motor. The motor, fixed inside the housing, includes a stator, rotor, and motor casing. The fan is fixed to the output shaft of the motor and expels air from inside the housing through the first air outlet. The fan blades have an outer diameter larger than that of the motor casing. This design effectively improves the ratio of heat dissipation by the fan to heat generation by the motor, enhancing the cooling effect of the gardening tool and preventing overheating protection activation.

This utility model of an electric chain saw offers improved heat dissipation effects and reduces the likelihood of machine overheating protection activation. Therefore, this utility model effectively overcomes some practical problems in existing technology, demonstrating high utility value and practical significance.

In one example of this utility model, the fault alarm indicator light includes a fault warning sign and a fault category digital light. When the gardening tool has an operational fault, the fault warning sign flashes, and the fault category digital light displays the corresponding fault category number.

In one example of this utility model, the display panel also has other module indicator lights, including one or more of Bluetooth indicator light, battery level indicator light, power indicator light, current indicator light, and speed indicator light.

This utility model sets an integrated display module on the outside of the housing, and electrically connects the integrated display module and various functional modules of the gardening tool to the control board respectively. Through the control board, the usage status of each functional module is presented on the integrated display module. Users can quickly understand the functional status of the gardening tool through the integrated display module, achieving clearer product maintenance and faster information retrieval.

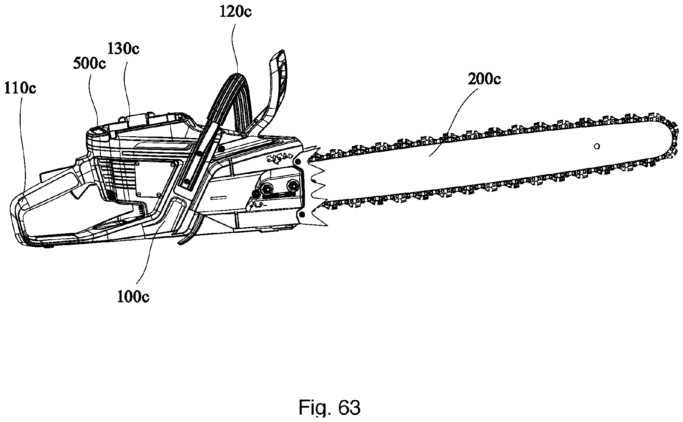

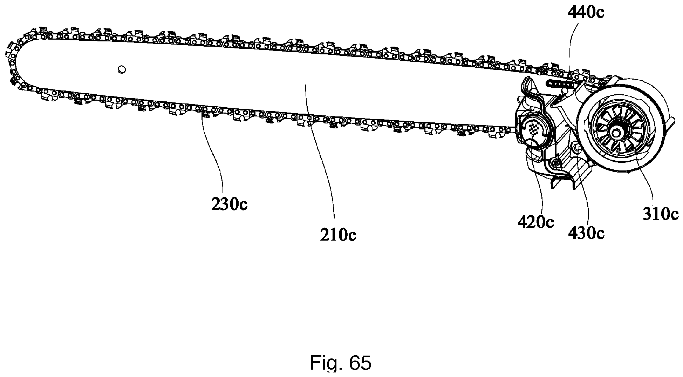

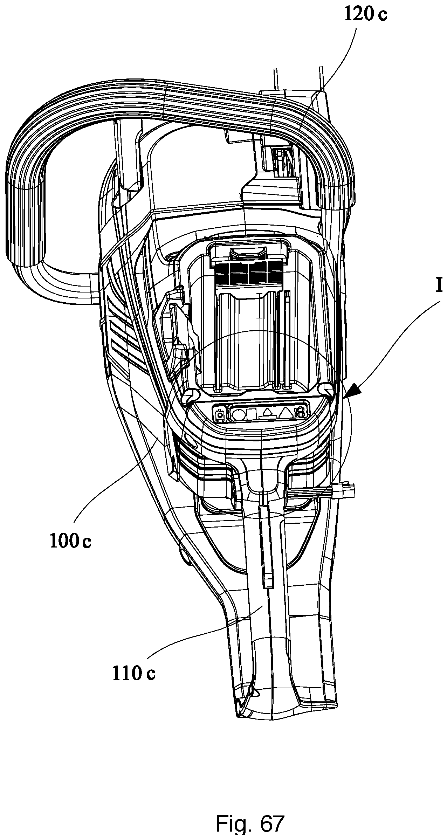

Please refer to Fig. 63 to Fig. 69, this utility model provides a gardening tool. By setting an integrated display module 500c on the housing 100c, and displaying the status of various functional modules of the gardening tool on the integrated display module 500c, users can understand the product's functional status through the integrated display module 500c, making subsequent product maintenance clearer.

Please refer to Fig. 63 to Fig. 66, the aforementioned gardening tool includes a housing 100c, a cutting assembly 200c, a drive device 300c, a battery pack 131c, a control board 132c, and an integrated display module 500c. The structure of the housing 100c is not limited and can take various forms. The housing 100c, as a basic component, can provide installation space for other parts. The drive device 300c, battery pack, and control board are all set inside the housing 100c. The integrated display module 500c is set on the outside of the housing 100c. The cutting assembly 200c is installed on the housing 100c and is connected to the drive device 300c. Part of the cutting assembly 200c is inside the housing 100c, with the main body extending to the outside of the housing 100c, to perform cutting operations under the action of the drive device 300c. After long periods of operation, the cutting assembly 200c will generate a large amount of heat due to friction. If not promptly dissipated, this will affect the service life of the cutting assembly 200c. Therefore, this embodiment sets up a lubrication device 400c inside the housing 100c, which can provide lubricating oil for the cutting assembly 200c to reduce the working temperature of the cutting assembly 200c and improve cutting effectiveness. The battery pack 131c is electrically connected to the drive device 300c to provide power support for the operation of the drive device 300c. The control board 132c is electrically connected to the drive device 300c, lubrication device 400c, battery pack, and integrated display module 500c respectively. The status of the drive device 300c, lubrication device 400c, and battery pack is presented on the integrated display module 500c through the control board 132c, facilitating user viewing.

Please refer to Fig. 63, Fig. 64, and Fig. 66. In one embodiment, the housing 100c includes two matching shells that form a housing 100c with a cavity through interlocking. The drive device 300c and lubrication device 400c are installed in the cavity of the housing 100c. One end of the cutting assembly 200c is inside the housing 100c, while the other end extends to the outside of the housing 100c. The end of the housing 100c away from the cutting assembly 200c is hollowed out to form a first handle 110c, with the length direction of the first handle 110c roughly parallel to the extension direction of the cutting assembly 200c. The housing 100c has a second handle 120c fixed at the position where the cutting assembly 200c extends out of the housing 100c. The arrangement of the first handle 110c and the second handle 120c ensures the convenience for operators to hold the tool, and holding with both hands ensures stability.

Please refer to Fig. 63 to Fig. 65. The drive device 300c can be any power component capable of providing power to the cutting assembly. In one embodiment, the drive device 300c includes a motor 310c and a transmission shaft 320c. The motor 310c is fixedly installed inside the housing 100c, with its output shaft set perpendicular to the extension direction of the cutting assembly 200c. In this embodiment, the output shaft of the motor 310c is the transmission shaft 320c of the drive device 300c. In other embodiments, the drive device 300c also includes a transmission gear set (not shown in the figure). The transmission gear set includes a driving gear, a driven gear, and a transmission shaft 320c. The driving gear is coaxially fixed with the output shaft of the motor 310c, the driven gear meshes with the driving gear, and the transmission shaft 320c is coaxially fixed with the driven gear. The output shaft of the motor 310c drives the driving gear to rotate synchronously. Due to the meshing of the driving gear and the driven gear, the driven gear and the transmission shaft 320c coaxially fixed with it are driven to rotate, thereby driving the cutting assembly 200c to operate.

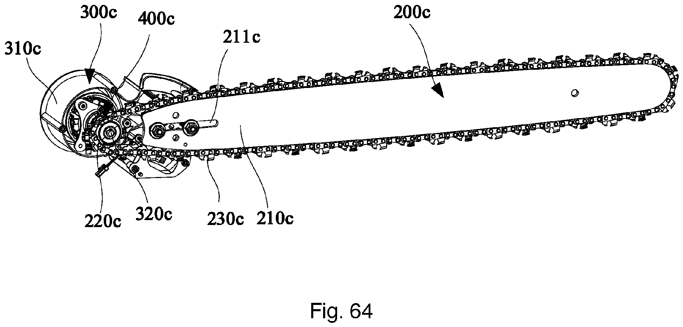

Please refer to Fig. 63 and Fig. 64. The cutting assembly 200c includes a guide plate 210c, a sprocket 220c, and a chain 230c. The sprocket 220c is coaxially fixed with the transmission shaft 320c. One end of the guide plate 210c is fixed on the housing 100c and is positioned near the sprocket 220c, while the other end of the guide plate 210c extends to the outside of the housing 100c. For example, a slot hole 211c is opened at the end of the guide plate 210c near the sprocket 220c. The length direction of the slot hole 211c is parallel to the length direction of the guide plate 210c. A bolt is used to pass through the slot hole 211c to fix the guide plate 210c on the housing 100c. The chain 230c is circumferentially arranged along the outer edge of the guide plate 210c, and part of the chain 230c meshes with the sprocket 220c. Under the drive of the sprocket 220c, the chain 230c can rotate at high speed to perform cutting operations.

Please refer to Fig. 64 to Fig. 66. The lubrication device 400c is used to provide cooling liquid for the cutting assembly 200c. The lubrication device 400c includes an oil pump 410c, an oil bottle 420c, an oil inlet pipe 430c, and an oil outlet pipe 440c. The oil pump 410c and oil bottle 420c are set inside the housing 100c. The oil bottle 420c is located on one side of the oil pump 410c and is connected to the oil pump 410c through the oil inlet pipe 430c. The oil pump 410c is connected to the cutting assembly 200c through the oil outlet pipe 440c. The oil bottle 420c is filled with lubricating oil or cooling oil or other cooling liquids, which enter the oil pump 410c through the oil inlet pipe 430c and then flow into the cutting assembly 200c through the oil outlet pipe 440c. In this embodiment, an oil supply hole (not shown in the figure) is opened on the guide plate 210c. The oil supply hole is opened at the end of the guide plate 210c connected to the housing 100c and is located near the side wall of the guide plate 210c. By connecting the oil outlet pipe 440c with the oil supply hole, the lubricating oil in the oil bottle 420c can flow into the oil supply hole 212c and then into the chain 230c, thus lubricating the chain 230c when it rotates at high speed. Preferably, the lubrication device 400c also includes an oil level sensor 421c. The oil level sensor 421c is set on the oil path of the oil bottle 220c to detect the oil level in the oil bottle 220c. The oil level sensor 421c is electrically connected to the control board 132c to feed back the oil level in the oil bottle 220c to the control board 132c.

It should be noted that in this embodiment, the oil pump 210c integrates its own liquid flow driving device with the motor 310c of the drive device 300c. That is, the worm gear inside the oil pump 210c is fixedly connected to the transmission shaft of the drive device 300c. The motor drives the normal operation of the oil pump. This structure can reduce the overall weight and volume of the gardening tool on one hand, and reduce the heat source inside the gardening tool on the other hand, thereby reducing the performance requirements for the heat dissipation device.

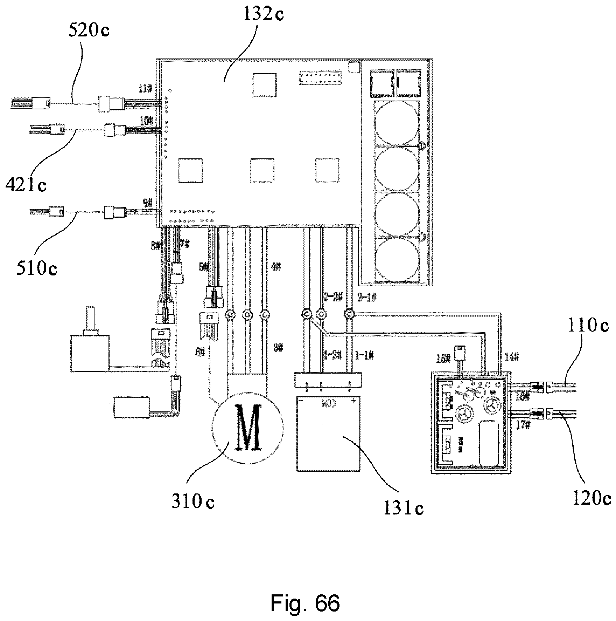

Please refer to Fig. 63 and Fig. 66. The housing 100c has a battery pack cavity 130c for accommodating the battery pack 131c. The battery pack 131c can be detachably installed in the battery pack cavity 130c. Multiple connection terminals (not shown in the figure) are installed at the bottom of the battery pack cavity 130c, and these connection terminals are electrically connected to the control board 132c. The battery pack 131c installed in the battery pack cavity 130c can be electrically connected to the control board 132c through the connection terminals. In addition, the battery pack cavity 130c is located behind the drive device 300c and between the first handle 110c and the second handle 120c. This way, the heavier battery pack 131c can balance with the cantilever chain on the other side of the cutting assembly 200c.

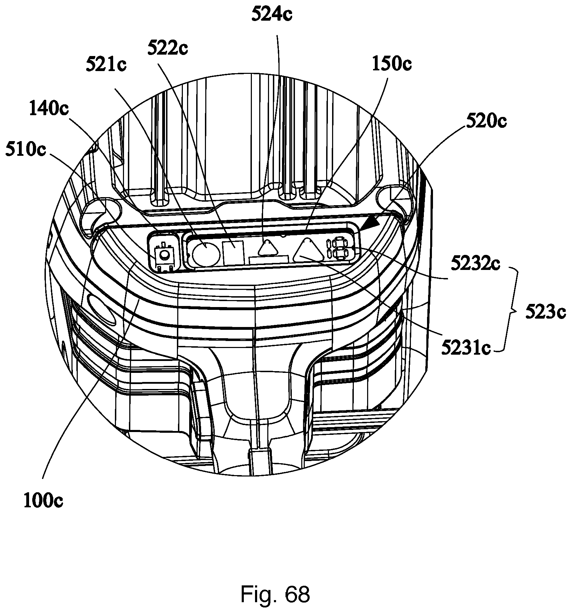

Please refer to Fig. 63 and Fig. 68. In one embodiment, the integrated display module 500c includes a handle heating switch 510c and a display panel 520c. The display panel 520c has multiple indicator lights for displaying various functional states of the gardening tool. Users can understand the various functional states of the gardening tool through the display panel 520c. For ease of operation and observation, the display panel 520c is set on the outer surface of the housing 100c between the battery pack cavity 130c and the first handle 110c. The handle heating switch 510c is a device used to control handle heating. It can be set at any convenient position on the housing 100c, such as on the first handle 110c or on the outer surface of the housing 100c between the battery pack cavity 130c and the first handle 110c, etc. Preferably, the handle heating switch 510c is set beside the display panel 520c for convenient synchronous operation with the display panel 520c. When the handle heating switch 510c is turned on, it can heat the first handle 110c and/or the second handle 120c.

Please refer to Fig. 63, Fig. 67, and Fig. 68. In one embodiment, the housing 100c has a first cavity 140c and a second cavity 150c corresponding to the position of the integrated display module 500c. The handle heating switch 510c is installed in the first cavity 140c, and the display panel 520c is installed in the second cavity 150c. The first cavity 140c and the second cavity 150c can be integrated together, that is, a chamber is set on the outer surface of the housing 100c, with installation positions for the handle heating switch 510c and the display panel 520c set inside the chamber. The first cavity 140c and the second cavity 150c can also be set independently, for example, arranged side by side on the housing 100c between the first handle 110c and the battery pack cavity 130c, or set at different positions on the housing 100c. The specific arrangement can be determined based on the installation positions of the handle heating switch 510c and the display panel 520c.

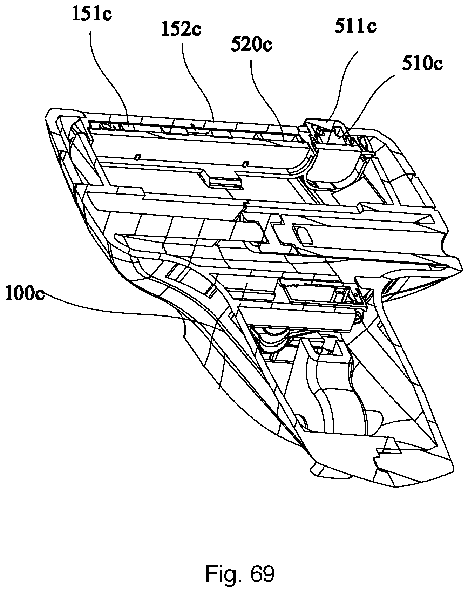

Please refer to Fig. 69. In one embodiment, the integrated display module 500c also includes a light shield 151c and a transparent cover 152c. The light shield 151c covers the outside of the display panel 520c to block external light sources and prevent the indicator lights on the display panel 520c from being unclear due to interference from external light. The transparent cover 152c is covered on the outside of the light shield 151c, providing some protection to prevent damage to the display panel 520c.

Please refer to Fig. 68. In one embodiment, to facilitate operator touch, the handle heating switch 510c is a button switch, with its switch button 511c having an elastic self-resetting feature. The switch button 511c can be in the form of a spherical surface, cylinder, or other button shapes. In this embodiment, the switch button 511c is a soft button. Pressing the switch button 511c can activate or deactivate handle heating. Furthermore, the handle heating switch 510c has a first position, a second position, and a third position. When the handle heating switch 510c is in the first position, it can heat the first handle 110c; when in the second position, it can heat the second handle 120c; when in the third position, it can heat both the first handle 110c and the second handle 120c simultaneously.

Preferably, the handle heating switch 510c also includes a heating indicator light (not shown in the figure). The heating indicator light can be set on the handle heating switch 510c or beside it, or it can be integrated into the display panel 520c. When the handle heating switch 510c is turned on, the heating indicator light illuminates. Furthermore, the heating indicator light can use different colored lights to correspond to different positions. For example, green light corresponds to the first position, yellow light to the second position, and red light to the third position, etc. With this setup, the position of the handle heating switch 510c can be known by observing the light color.

Please refer to Fig. 66 and Fig. 68. In one embodiment, the display panel 520c has a power indicator light 521c, an oil level indicator light 522c, and a fault alarm indicator light 523c. The power indicator light 521c is used to display the on/off status of the power supply (battery pack). When the power is on, this power indicator light 521c illuminates; when the power is off, it doesn't light up. The oil level indicator light 522c is used to display the oil level in the oil bottle 420c of the lubrication device 400c. The control board controls the on/off of the oil level indicator light 522c based on the oil level feedback from the oil level sensor 421c on the oil path of the oil bottle 420c. The oil level indicator light 522c can light up when oil is low, or when oil is not low, or it can display different colored lights when oil is low or not low. For example, when oil is low, the oil level indicator light 522c shows a red light; when oil is not low, it shows a green light. The fault alarm indicator light 523c is used to receive corresponding faults from the control board 132c and give alarms. The fault alarm indicator light 523c includes a fault warning light 5231c and a fault category digital light 5232c. When a fault occurs during product operation, the fault warning light 5231c flashes. The control board will self-check and issue the fault reason. At this time, the fault category digital light 5232c will display the fault category number. Users can refer to the manual to know the fault type corresponding to different numbers and maintain according to the fault type.

Please refer to Fig. 68. In one embodiment, the display panel 520 is also equipped with a power adapter indicator 524 and a Bluetooth indicator (not shown in the figure). The power adapter indicator 524 is used to detect whether the capacity of the battery pack 131 is compatible with the gardening tool. If the battery pack 131 is not compatible, the indicator will light up or flash to serve as a warning. The Bluetooth indicator is used to show the on/off status of the Bluetooth module of the gardening tool. When the Bluetooth indicator is on, it can be connected to a phone, computer, or remote wireless network, allowing the user to monitor operation, check for faults, and access maintenance instructions. In other embodiments, the display panel 520 can also be equipped with additional modules according to customer needs, such as a lighting indicator, battery level indicator, power indicator, current indicator, speed indicator, etc. Accordingly, lighting indicators, battery indicators, power indicators, current indicators, and speed indicators will be added to the display panel 520. The modules listed above can be chosen individually or in combination, depending on the actual needs of the user.

Please refer to Fig. 68. The display modules on the display panel 520 can either share a single screen with independent lighting indicators or light up in different colors to indicate different operating statuses. Additionally, multiple screens and module combinations can be configured according to the model and user requirements, or specific buttons, keys, switches, or touch activations can be independently displayed and shown in different positions. There are no restrictions here. The integrated or multi-combination, multi-unit control of the display panel 520 can be triggered by independent sensor responses or programmed to display on demand via PCBA control. The specific control process can refer to the control programs in existing technologies, and no further elaboration is necessary here.

It should be noted that any structures of the gardening tool not described in detail can be set according to conventional structures in the field, and no further elaboration is necessary.

The gardening tool of this utility model has an integrated display module on the outer side of the casing, and the integrated display module and the various functional modules of the gardening tool are electrically connected to the control board. Through the control board, the status of each functional module is displayed on the integrated display module, allowing the user to quickly understand the functional status of the gardening tool, making post-product maintenance clearer and information retrieval more convenient. This gardening tool has the advantages of good handling experience, high degree of intelligence, and easy fault alarm detection, improving the user experience. Therefore, this utility model effectively overcomes some practical issues in existing technologies, making it highly valuable and meaningful for use.

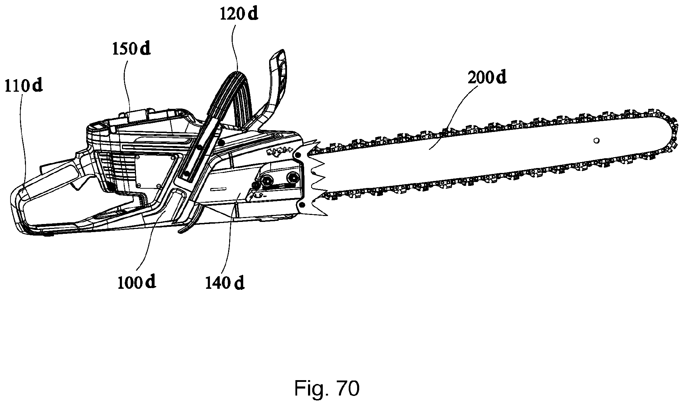

Please refer to Figs. 70 to 72. The utility model provides a power tool, which includes a housing 100d, a cutting assembly 200d, a drive device 300d, and a lubrication device 400d. The housing 100d serves as the basic component of the power tool, providing installation space for other parts; the drive device 300d is installed inside the housing 100d to provide power to the cutting assembly 200d. The cutting assembly 200d is transmission-connected to the drive device 300d, with part of the cutting assembly 200d located inside the housing 100d, while the main portion extends outside the housing 100d to perform cutting operations. The lubrication device 400d is set inside the housing 100d, providing lubricating oil to the cutting assembly 200d to reduce working temperatures and improve cutting performance.

Please refer to Figs. 70, 71, and 73. In one embodiment, the housing 100d includes two matching shells, forming a cavity when spliced together, inside which both the drive device 300d and lubrication device 400d are mounted. One end of the cutting assembly 200d is located within the housing 100d, while the other end extends outside. The far end of the housing 100d from the cutting assembly 200d is hollow, forming the main handle 110d, whose length direction is roughly parallel to the extension direction of the cutting assembly 200d. An auxiliary handle 120d is fixed at the point where the cutting assembly 200d extends from the housing 100d, ensuring ease of use and stability when operated with both hands.

Please refer to Figs. 70 to 72. The drive device 300d can be any power component capable of providing power to the cutting assembly 200d. In one embodiment, the drive device 300d includes a motor 310d, which is fixed inside the housing 100d. The output shaft of the motor 310d is aligned perpendicularly to the extension direction of the cutting assembly 200d. In this embodiment, the motor 310d's output shaft is also the transmission shaft 320d of the drive device 300d. In other embodiments, the drive device 300d also includes a transmission gear set (not shown in the drawings), which consists of a driving gear, a driven gear, and a transmission shaft 320d. The driving gear is coaxially fixed with the motor 310d's output shaft, while the driven gear meshes with the driving gear. The transmission shaft 320d is coaxially fixed with the driven gear. The output shaft of the motor 310d drives the driving gear to rotate synchronously, and due to the meshing of the driving gear and the driven gear, the driven gear and its coaxial transmission shaft 320d are driven to rotate, thereby driving the cutting assembly 200d to operate.

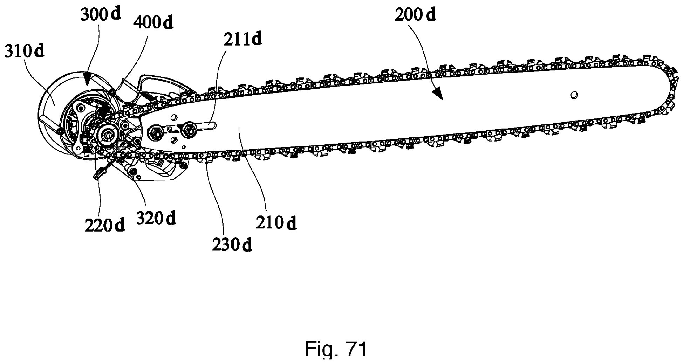

Please refer to Figs. 70 and 71. In one embodiment, the cutting assembly 200d includes a guide plate 210d, a sprocket 220d, and a chain 230d. The sprocket 220d is coaxially fixed to the transmission shaft 320d of the drive device 300d. One end of the guide plate 210d is fixed to the housing 100d, near the sprocket 220d, while the other end extends outside the housing 100d. For example, the guide plate 210d has a slotted hole 211d near the sprocket 220d, parallel to the length of the guide plate 210d, allowing a bolt to pass through and secure the guide plate 210d to the housing 100d. The chain 230d is arranged circumferentially around the outer edge of the guide plate 210d, with part of it meshing with the sprocket 220d. Under the driving force of the sprocket 220d, the chain 230d rotates at high speed to perform cutting tasks. Preferably, the housing 100d has a side cover 140d positioned where it connects to the guide plate 210d, ensuring the guide plate 210d is securely installed between the housing 100d and the side cover 140d.

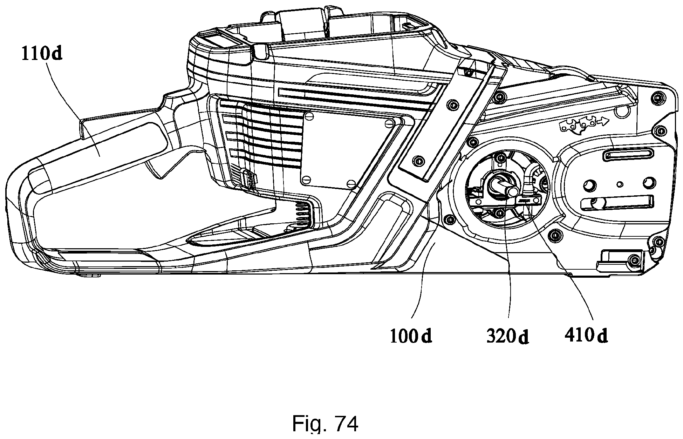

Please refer to Figs. 70 to 74. The lubrication device 400d can provide lubricating oil to the cutting assembly 200d, not only lubricating the chain 230d to reduce friction and heat but also carrying away part of the heat generated by the chain 230d, allowing for extended operation. The lubrication device 400d includes an oil pump 410d and an oil reservoir 420d. The oil pump 410d is installed inside the housing 100d. For example, one side of the housing 100d is recessed to form a cavity 130d to accommodate the oil pump 410d. The oil pump 410d is secured within this cavity. The oil reservoir 420d is mounted inside the housing 100d, positioned adjacent to the oil pump 410d. The oil reservoir 420d contains lubricating oil or other cooling fluids, and the oil pump 410d transports the lubricating oil from the oil reservoir 420d to the cutting assembly 200d for cooling or lubrication.

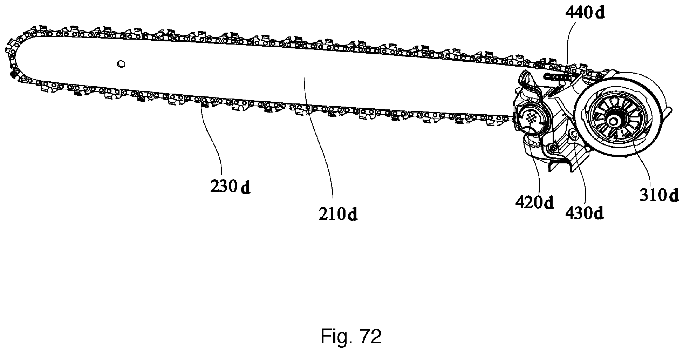

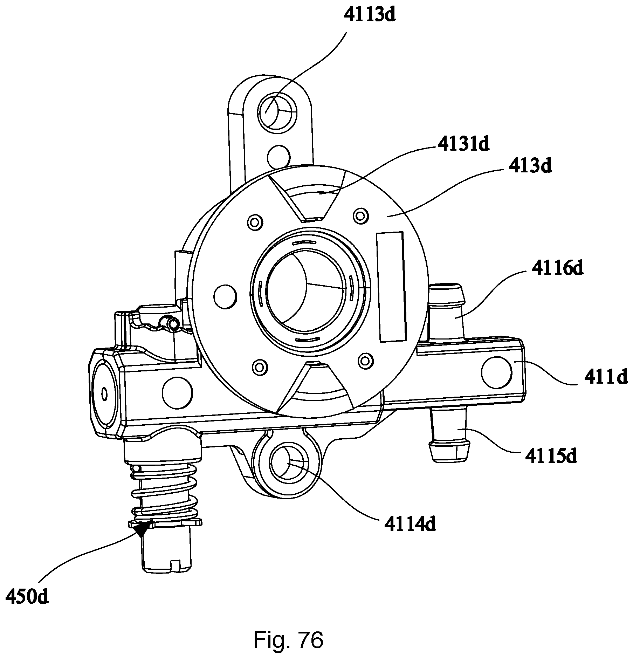

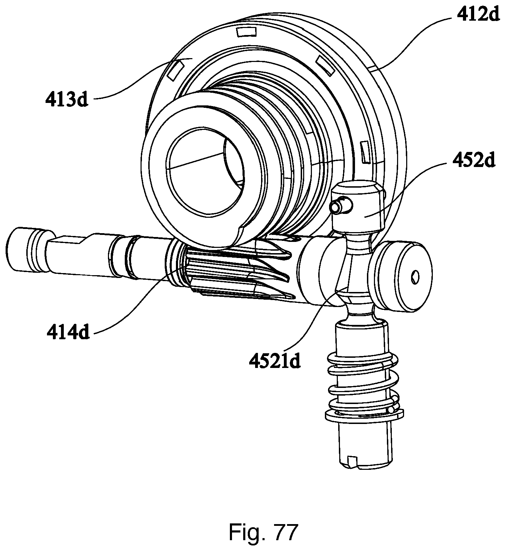

Please refer to Figs. 72, 75 to 78. Specifically, the oil pump 410d includes a pump body 411d, a drive disc 412d, and a worm gear 413d. The pump body 411d has an internal drive turbine 414d and is equipped with an oil inlet 4115d and an oil outlet 4116d, both of which are positioned on the same side of the pump body 411d and separated by the drive turbine 414d. The oil inlet 4115d is connected to the oil reservoir 420d via an oil inlet pipe 430d, while the oil outlet 4116d is connected to the cutting assembly 200d via an oil outlet pipe 440d. The drive disc 412d and worm gear 413d are coaxially mounted on the transmission shaft 320d. The drive disc 412d is fixedly connected to the transmission shaft 320d, while the worm gear 413d extends through the upper part of the pump body 411d's housing and meshes with the drive turbine 414d. A transmission device 415d is arranged between the drive disc 412d and the worm gear 413d to drive the worm gear 413d to rotate, so that the transmission shaft 320d drives both the drive disc 412d and the drive turbine 414d, transporting lubricating oil from the oil reservoir 420d to the cutting assembly 200d, thereby completing the oil pumping process.

This design, where the drive disc 412d is coaxially fixed to the transmission shaft 320d of the drive device 300d, allows the drive device 300d to power the oil pump 410d. This structure reduces the overall weight and volume of the power tool, lowering manufacturing costs. Furthermore, by removing the drive motor from inside the oil pump 410d, internal heat sources are reduced, lowering the cooling requirements of the power tool.

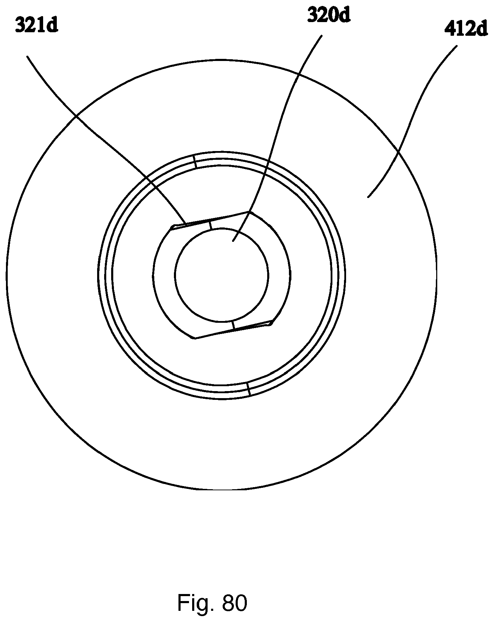

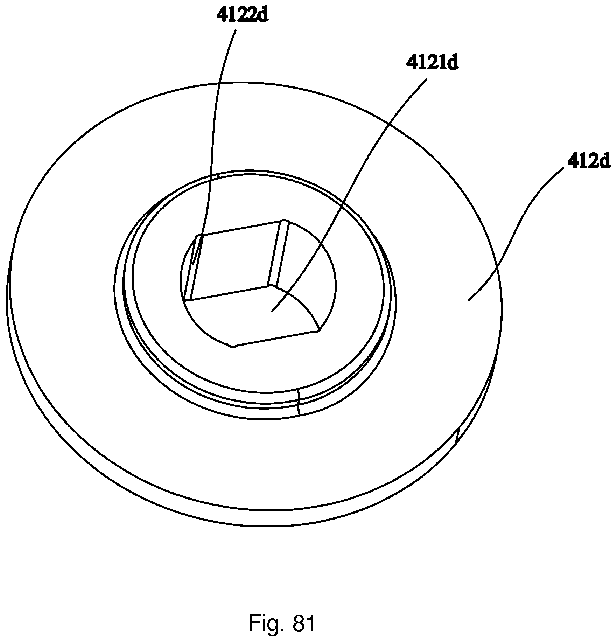

Please refer to Figs. 71, 78 to 81. In one embodiment, the drive disc 412d is positioned between the sprocket 220d and the motor 310d and is coaxially fixed to the transmission shaft 320d. For example, the connection between the transmission shaft 320d and the drive disc 412d features two flat mating surfaces 321d that are parallel to each other. The drive disc 412d has a matching connecting hole 4121d that aligns with the flat surfaces 321d, ensuring the transmission shaft 320d and the drive disc 412d are connected via flat surface transmission. Preferably, at the corners of the connecting hole 4121d, there is a curved transition surface 4122d that helps prevent slippage between the drive disc 412d and the transmission shaft 320d, ensuring synchronized rotation.

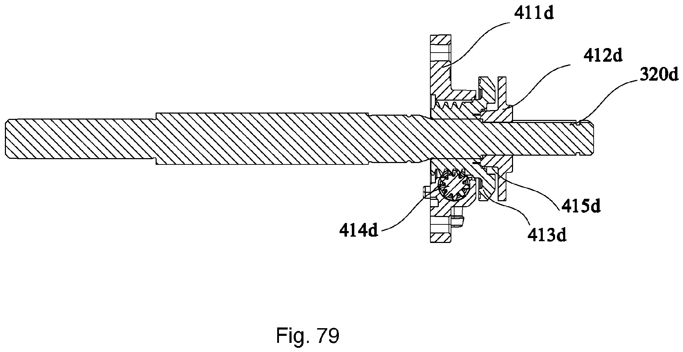

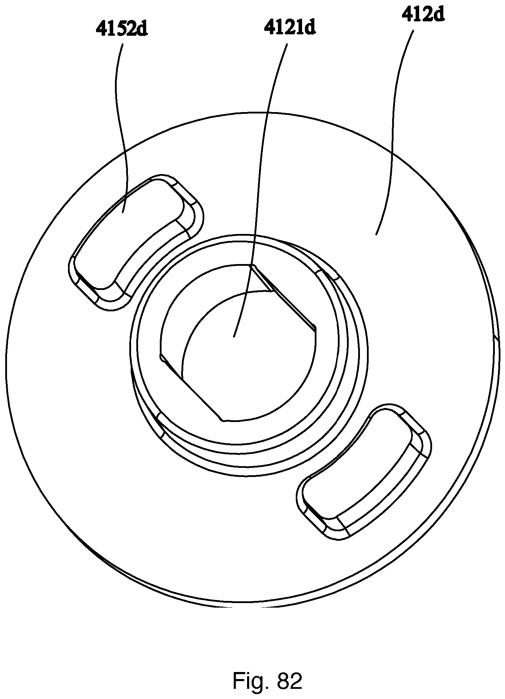

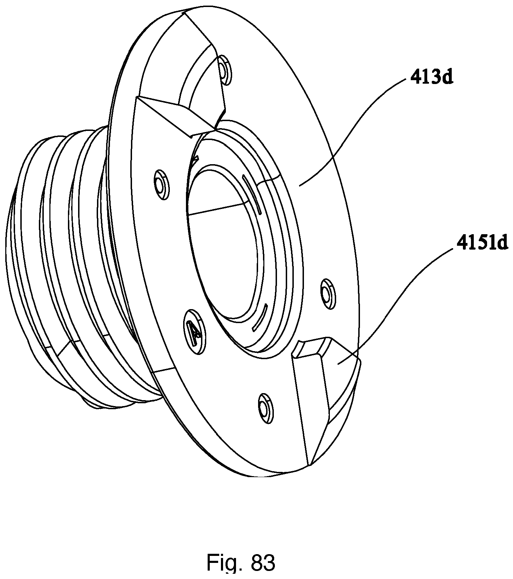

Please refer to Figs. 79, 82, and 83. In one embodiment, the transmission device 415d between the drive disc 412d and the worm gear 413d includes a first protrusion 4151d and a second protrusion 4152d. The first protrusion 4151d is located on the end face of the worm gear 413d, while the second protrusion 4152d is on the end face of the drive disc 412d. The two protrusions are arranged in an interlocking manner so that when the drive disc 412d rotates, the second protrusion 4152d drives the first protrusion 4151d, causing the worm gear 413d to rotate. The number of protrusions is not limited and may vary, as long as they are interlocked and cause the worm gear 413d to rotate when the drive disc 412d turns. In this embodiment, there are two first protrusions 4151d on the worm gear 413d and two second protrusions 4152d on the drive disc 412d, arranged in a cross-interlocking manner.

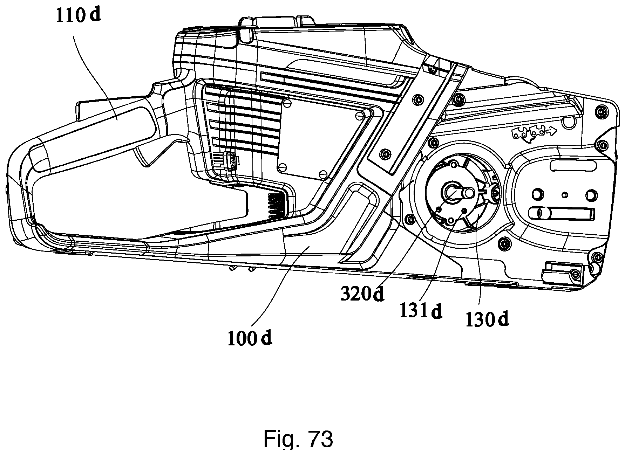

Please refer to Figs. 73, 77, and 78. To ensure the meshing accuracy of the worm gear 413d and the drive turbine 414d, positioning components are installed on the housing of the pump body 411d to accurately position the pump body 411d during installation.

In one embodiment, the housing of the pump body 411d includes a first positioning component 4111d and a second positioning component 4112d. The centerline between the first and second positioning components 4111d, 4112d is offset from the centerline of the pump body 411d, providing a more stable installation structure. Additionally, the first and second positioning components 4111d, 4112d are symmetrically distributed relative to the centerline of the worm gear 413d. These positioning components can be protruding pins on the pump body 411d that fit into matching positioning holes 131d in the cavity 130d, or recessed grooves that match with corresponding protrusions in the cavity 130d. Both configurations provide accurate positioning during installation.

In one embodiment, the housing of the pump body 411d is equipped with a first positioning component 4111d and a second positioning component 4112d. The centerline between the first and second positioning components 4111d, 4112d is offset from the centerline of the pump body 411d, meaning the two lines are not coincident. This design enhances the stability of the pump body 411d's installation structure. Furthermore, the first and second positioning components 4111d, 4112d are symmetrically distributed relative to the vertical centerline of the worm gear 413d and the pump body 411d.

The first and second positioning components 4111d, 4112d can be positioning pins protruding from the surface of the pump body 411d, which fit into corresponding positioning holes 131d in the cavity 130d. These positioning holes 131d can be either through holes or blind holes, with no limitation on the type. In other embodiments, the first and second positioning components 4111d, 4112d can be recesses in the pump body 411d, and matching protrusions in the cavity 130d ensure accurate positioning by fitting into these recesses.

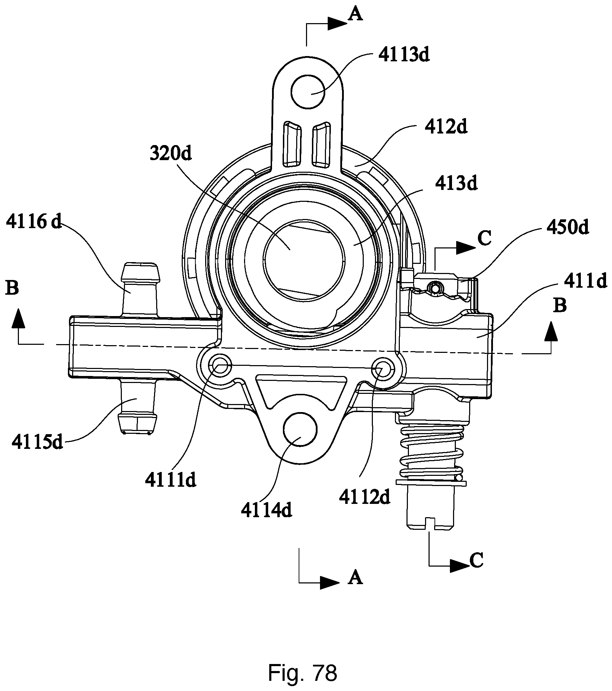

Refer to Fig. 78. The pump body 411d also includes at least one mounting hole to secure it within the cavity 130d. In this embodiment, the pump body 411d features a first mounting hole 4113d and a second mounting hole 4114d, symmetrically distributed relative to the centerline of the worm gear 413d. The symmetrical arrangement of the first and second mounting holes 4113d, 4114d, along with the first and second positioning components 4111d, 4112d, improves stability and reliability during installation, resolving issues related to asymmetric worm gear centers and enhancing durability.

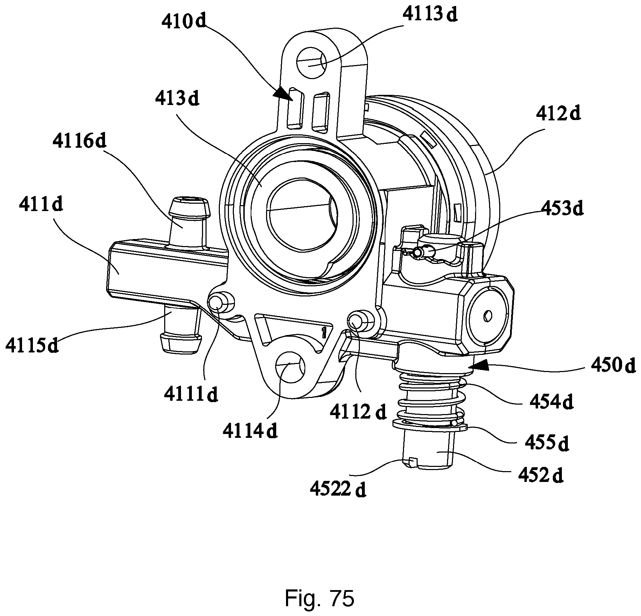

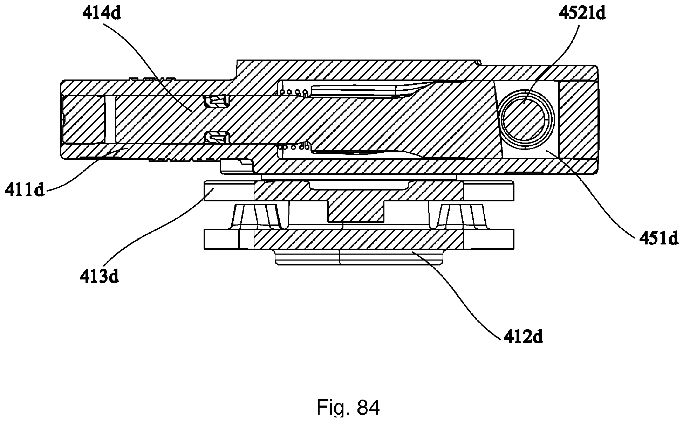

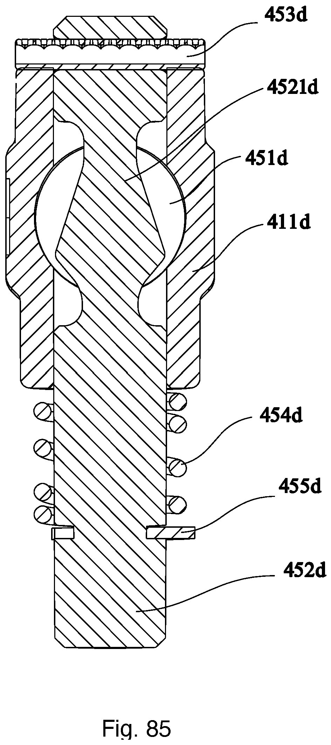

Refer to Figs. 75, 77, 84, and 85. In one embodiment, the oil pump 410d also includes an adjustment device 450d for regulating the oil output. The adjustment device 450d consists of an adjustment chamber 451d, an adjustment rod 452d, a limit rod 453d, and a limiting component. The adjustment chamber 451d is located on the side of the pump body 411d, opposite the oil inlet 4115d and oil outlet 4116d, and is connected to the internal cavity of the pump body 411d. The adjustment rod 452d extends vertically through the adjustment chamber 451d, and the adjustment rod 452d is equipped with a conical adjustment section 4521d. This conical adjustment section 4521d is positioned within the adjustment chamber 451d and can be blocked within the chamber. By rotating the adjustment rod 452d, the gap between the conical adjustment section 4521d and the chamber 451d can be adjusted, thereby regulating the oil output of the oil pump 410d.

The limit rod 453d passes through the upper end of the adjustment rod 452d and is blocked by the pump body 411d. Correspondingly, the upper surface of the pump body 411d features several limit slots arranged circumferentially around the adjustment rod 452d. Each time the limit rod 453d rotates, it locks into one of the limit slots, ensuring the adjustment rod 452d remains stable after being rotated.

The limiting component is installed at the end of the adjustment rod 452d, opposite the limit rod 453d. It consists of a limit ring 455d and an elastic element 454d. The limit ring 455d is fixed on the adjustment rod 452d, for example, within a circumferential groove along the adjustment rod 452d. The elastic element 454d is sleeved around the adjustment rod 452d and positioned against the limit ring 455d. The interaction between the limit ring 455d and the limit rod 453d forms an elastic limitation on the adjustment rod 452d, restricting it to rotational movement while preventing vertical displacement. This mechanism allows the adjustment rod 452d to control the oil output as required. When the adjustment rod 452d is rotated, the limit rod 453d rotates accordingly and locks into the slots on the upper surface of the pump body 411d, ensuring stability. The elastic force from the elastic element 454d further enhances this stability.

Refer to Fig. 75. To facilitate rotation, the lower end surface of the adjustment rod 452d is equipped with an adjustment slot 4522d. A matching adjustment component (not shown in the drawings), such as an adjustment knob, can be inserted into the adjustment slot 4522d to rotate the adjustment rod 452d. This greatly increases the turning force, making it easier for the user to adjust the oil output.

Refer to Figs. 70 and 71. The power tool also includes a power supply device (not shown in the drawings) to provide power to the drive device 300d. The power supply device includes a battery pack, and the housing 100d has a battery compartment 150d located between the main handle 110d and the cutting assembly 200d. The battery pack is removable and can be installed in the battery compartment 150d. The bottom of the battery compartment 150d contains multiple terminals that are electrically connected to the motor 310d of the drive device 300d, supplying power to the drive device 300d. Additionally, the battery compartment 150d is positioned behind the motor 310d and between the main handle 110d and the auxiliary handle 120d, allowing the heavier battery pack to balance the cantilevered chain on the opposite side of the cutting assembly 200d.

It should be noted that any structures of the power tool not described in detail here can be configured according to conventional designs in the field and are not elaborated further.

This utility model power tool features a pump body with a first positioning component and a second positioning component. During installation, the first and second positioning components enable precise positioning of the oil pump, preventing installation errors that could lead to significant meshing inaccuracies between the worm gear and turbine. The first and second positioning components are symmetrically arranged, and their centerlines are offset from the pump body's centerline, improving the stability of the oil pump installation. Furthermore, symmetrically distributed mounting holes around the center of the worm gear enhance the oil pump's stability and durability, increasing the product's professionalism and reliability. Therefore, this utility model effectively overcomes several practical issues present in the prior art, providing high utility and significance.

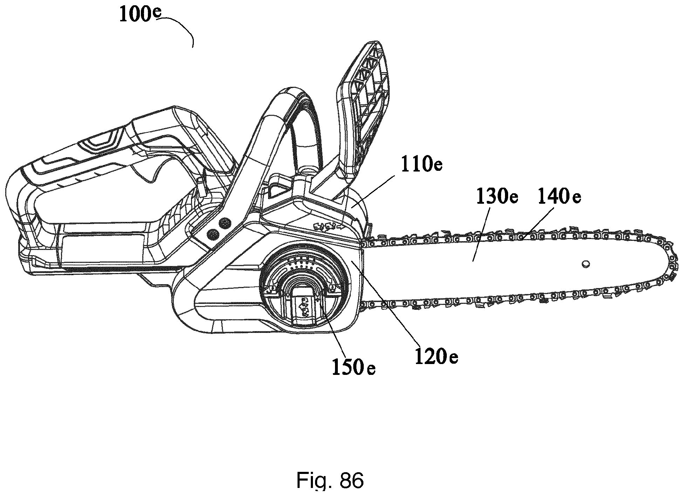

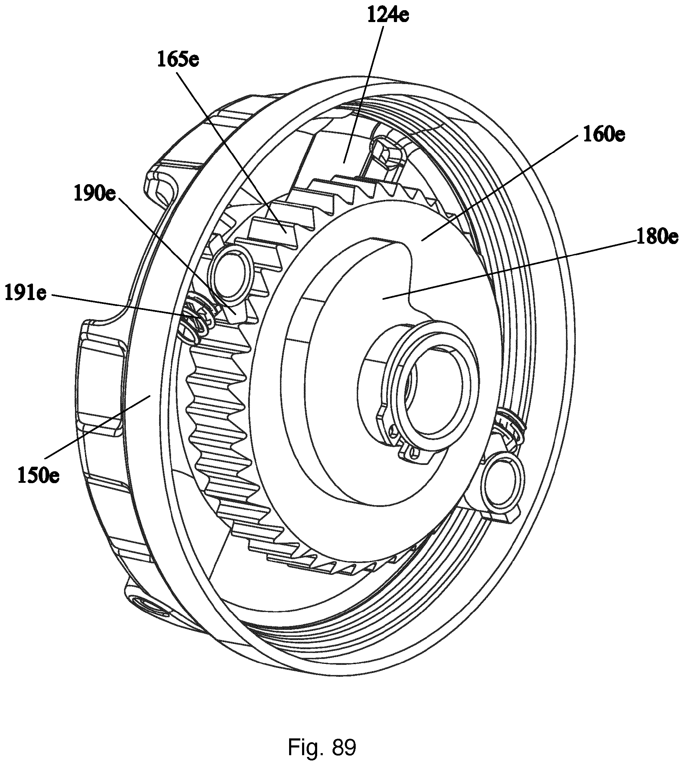

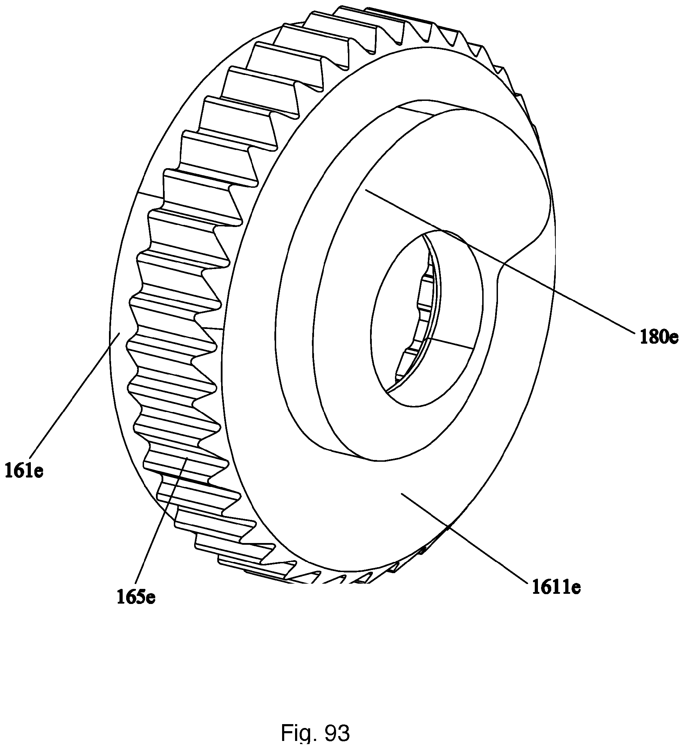

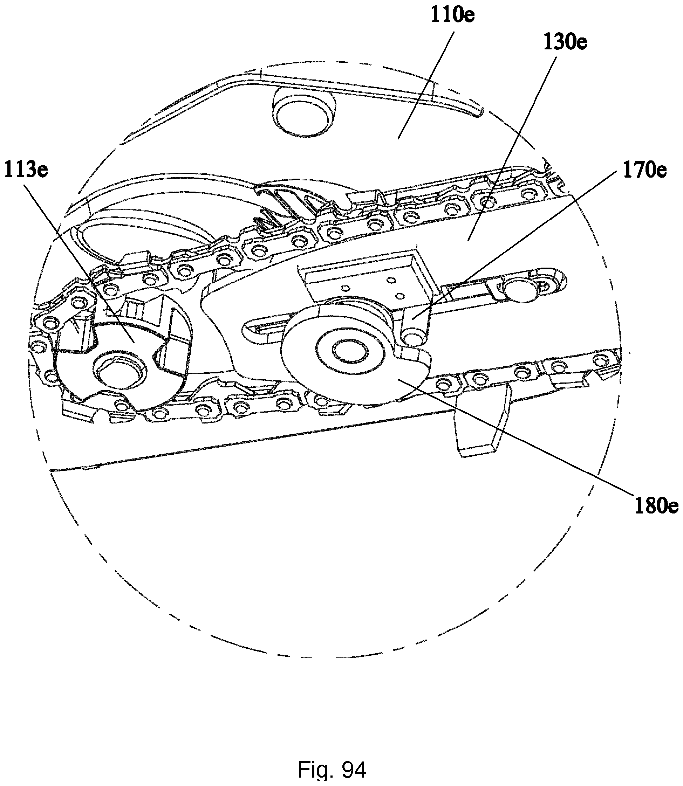

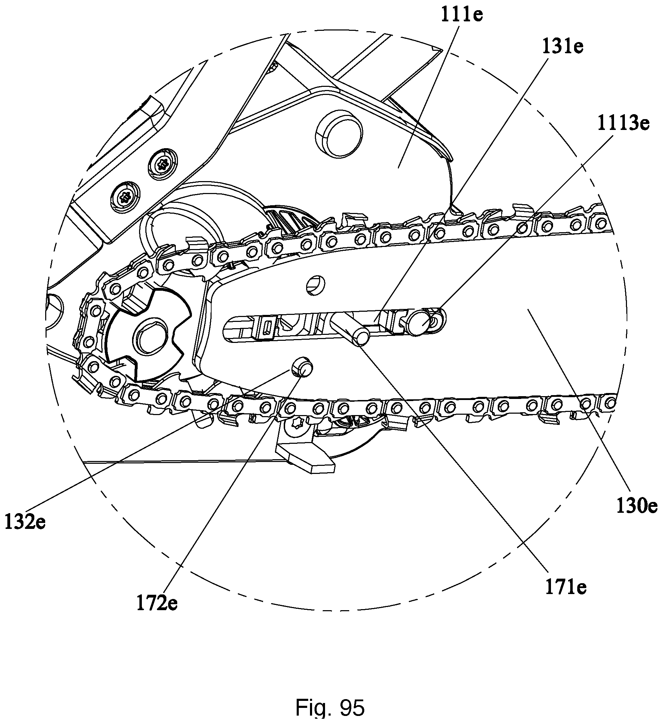

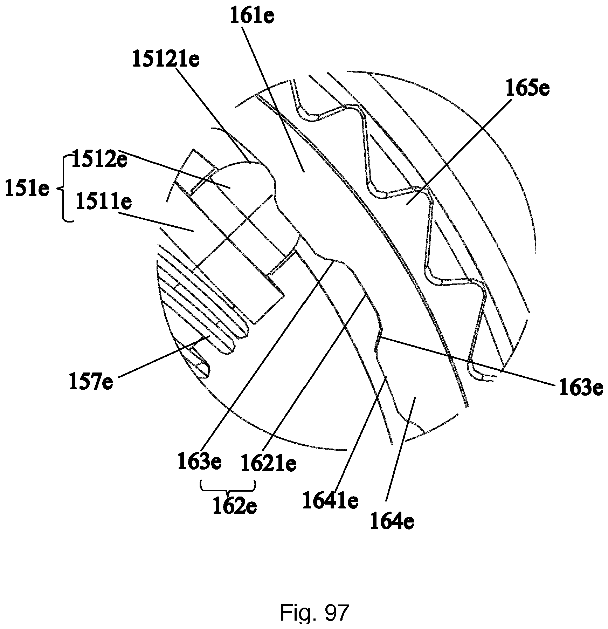

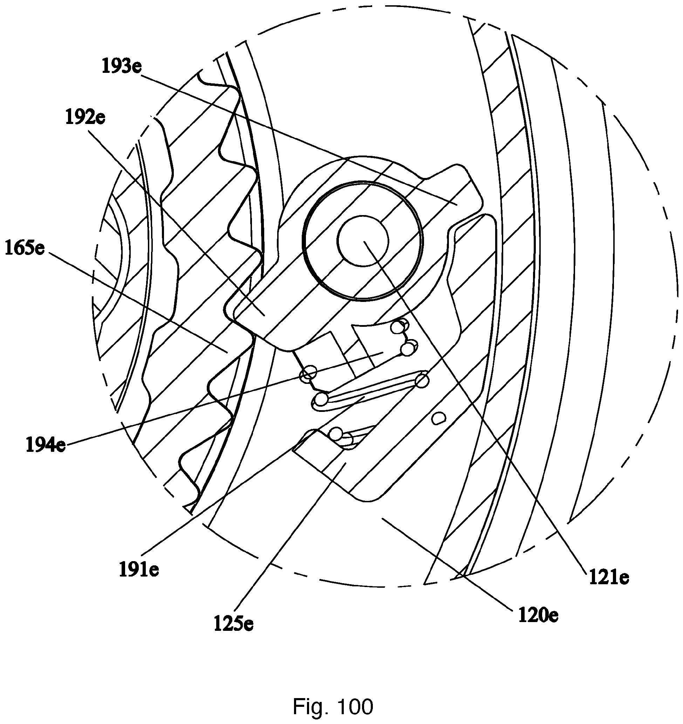

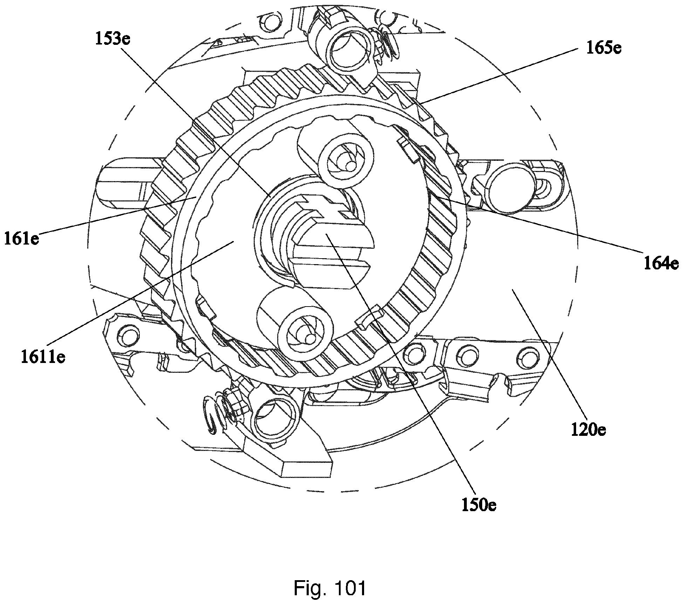

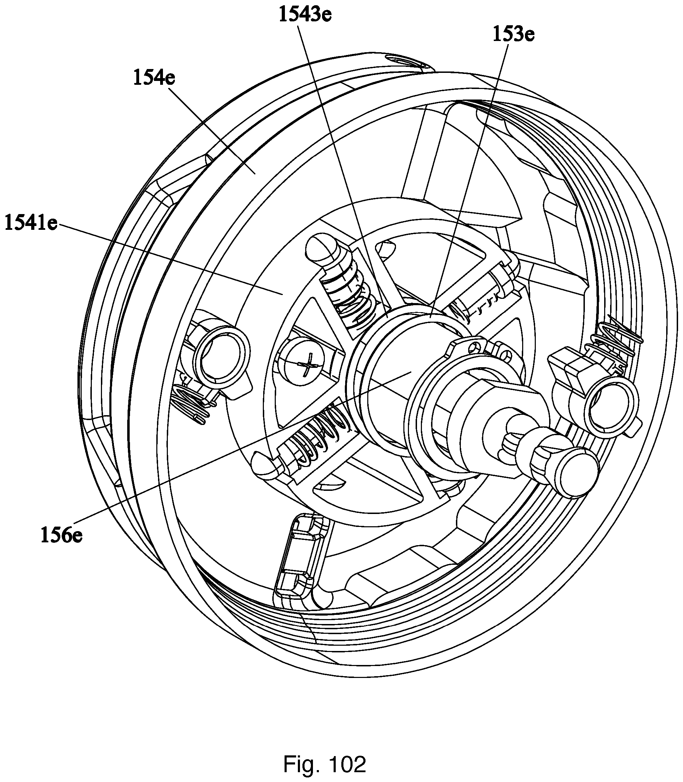

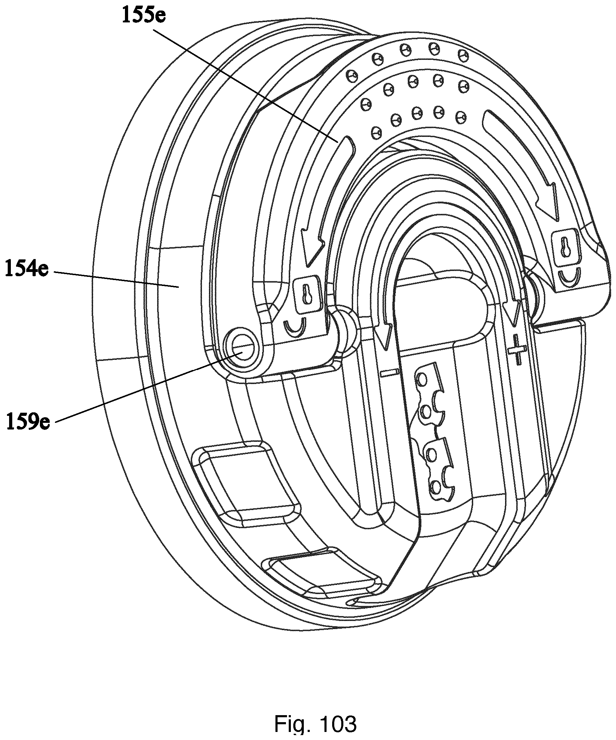

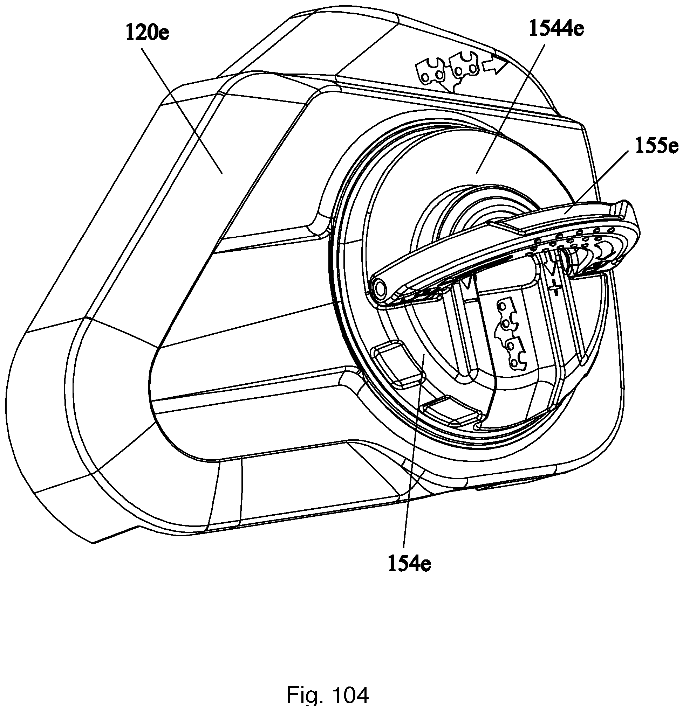

Please refer to Figs. 86 to 104. This utility model provides a cutting tool 100e with a two-in-one knob. The clutch member 160e has a first state in which it rotates synchronously with the drive member 150e and a second state in which it disengages from the drive member 150e. During the rotation driving of the drive member 150e, by switching the clutch member 160e between the first and second states, the tension adjustment of the saw chain 140e and the pressing installation of the cutter plate 130e on the housing 110e can be achieved with a single rotation of the drive member 150e. This method is simple and convenient to operate, facilitating quick tension adjustment of the saw chain 140e and precise positioning of the cutter plate 130e. Furthermore, since the cam 180e and clutch member 160e are integrated into a single piece, the assembly process between the cam 180e and clutch member 160e is eliminated, which not only improves the assembly efficiency of the cutting tool 100e but also helps to enhance the assembly precision of the cutting tool 100e.

Please refer to Figs. 86 to 91. In one example of the cutting tool 100e of this utility model, the cutting tool 100e includes: a housing 110e, a side cover plate 120e, a cutter plate 130e, a drive member 150e, a clutch member 160e, a tension block 170e, and a cam 180e. The housing 110e includes a first housing 111e and a second housing 112e, which are engaged together. The side cover plate 120e is detachably connected to the outer side wall of the first housing 111e, forming a first accommodating chamber 122e between the side cover plate 120e and the first housing 111e. The detachable connection method includes, but is not limited to, a bolt connection. A receiving chamber is formed between the first housing 111e and the second housing 112e, where a drive motor (not shown in the figures) is installed. The output shaft of the drive motor extends through the first housing 111e towards the interior of the first accommodating chamber 122e, and a sprocket 113e is fixedly connected to the output shaft of the drive motor, with the sprocket 113e located inside the first accommodating chamber 122e.

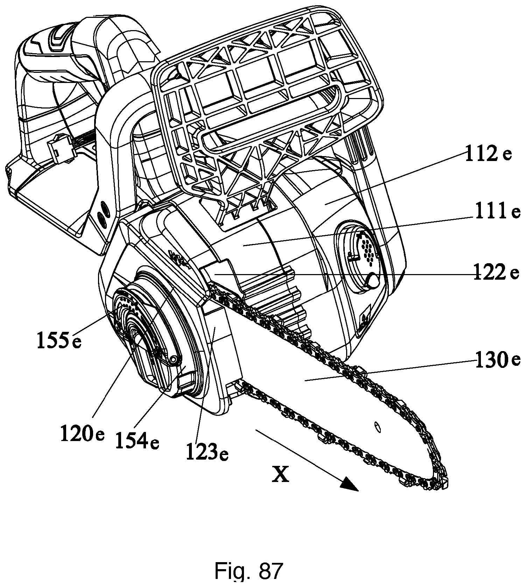

In the first direction (as indicated by the X-axis arrow in Fig. 87, the extension direction of the receiving chamber), the cutter plate 130e has a strip-shaped structure, with one end of the cutter plate 130e located inside the receiving chamber and clamped between the outer side wall of the first housing 111e and the side cover plate 120e. The other end of the cutter plate 130e extends along the first direction, away from the sprocket 113e, and further extends to the outside of the first accommodating chamber 122e. One end of the saw chain 140e meshes with the sprocket 113e, while the other end of the saw chain 140e surrounds the periphery of the cutter plate 130e. The drive motor operates to rotate the sprocket 113e, causing the saw chain 140e to rotate in a cutting motion under the driving action of the sprocket 113e and the supporting action of the cutter plate 130e, thereby completing the corresponding gardening cutting tasks.

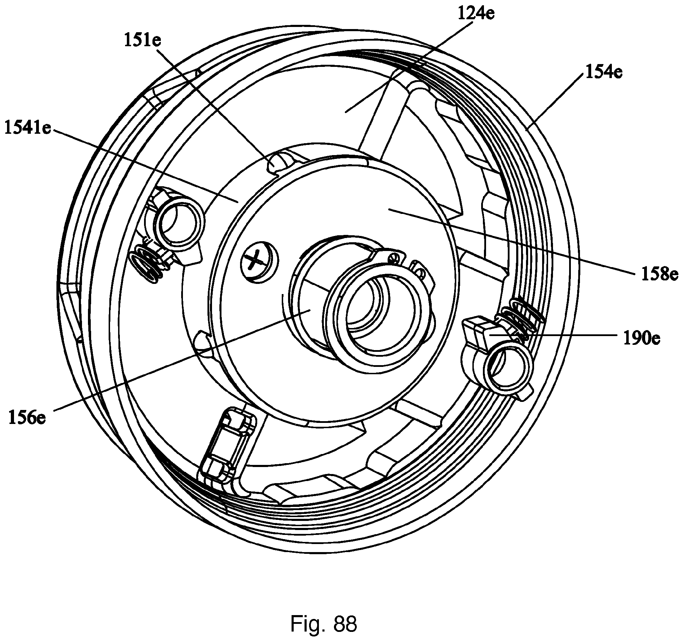

Please refer to Figs. 87 and 88. The drive member 150e includes a knob 154e and a second rotating shaft 156e. The knob 154e is fixedly connected to one end of the second rotating shaft 156e in the length direction. The fixed connection method can be an integrally molded connection or a bolt connection, without limitation. The knob 154e abuts the outer side wall of the side cover plate 120e. The other end of the second rotating shaft 156e penetrates through the side cover plate 120e and is fixedly connected to the first housing 111e via a threaded connection. Furthermore, along the thickness direction of the cutting tool, the side cover plate 120e has a pressing block 123e installed on the side facing the cutter plate 130e, and the pressing block 123e is arranged correspondingly to the cutter plate 130e. By rotating the knob 154e, the second rotating shaft 156e and the first housing 111e generate linear movement through thread transmission, causing the knob 154e to drive the side cover plate 120e to move toward the cutter plate 130e, thereby pressing the cutter plate 130e against the first housing 111e via the pressing block 123e.

Please refer to Figs. 88 to 90. The knob 154e has a hollow groove structure, forming a second accommodating chamber 124e between the knob 154e and the outer side wall of the side cover plate 120e. The clutch member 160e is housed within the second accommodating chamber 124e, and it is annularly arranged around the second rotating shaft 156e. One end of the second rotating shaft 156e, near the knob 154e, is provided with a locking structure. The clutch member 160e is sleeved on the second rotating shaft 156e and cooperates with the locking structure. The locking structure has a clamping state and a sliding state relative to the clutch member 160e. When the locking structure is in the clamping state, the clutch member 160e is in the first state, rotating synchronously with the locking structure. In this state, when the knob 154e rotates, the knob 154e drives the locking structure to rotate, which in turn drives the clutch member 160e to rotate. When the locking structure is in the sliding state, the clutch member 160e is in the second state, disengaged from the locking structure. In this state, when the knob 154e rotates, the knob 154e drives the locking structure to rotate, but the locking structure slides relative to the clutch member 160e, causing the clutch member 160e not to rotate with the knob 154e. The specific form of the locking structure is not limited, as long as it meets the requirement of switching between the first and second states of the clutch member 160e and the knob 154e.

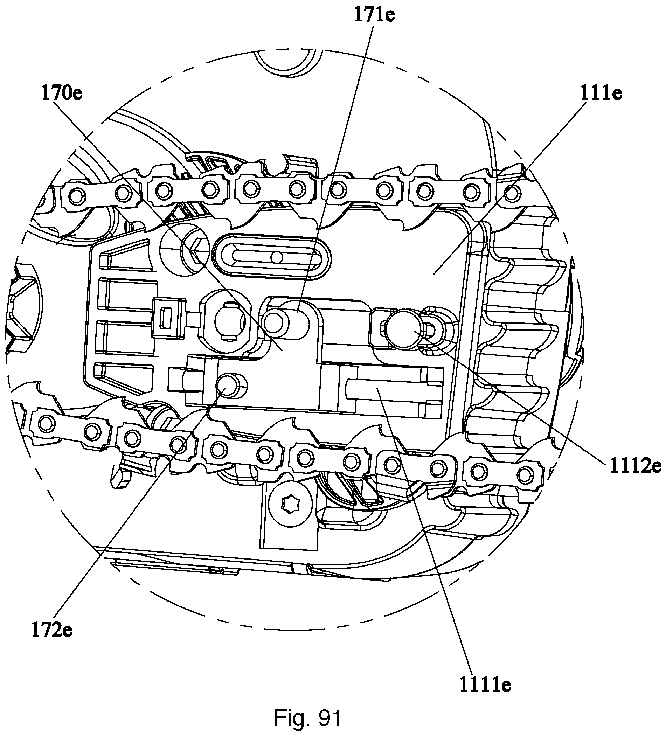

Please refer to Figs. 91, 94, and 95. A recessed cavity is formed on the side of the first housing 111e facing the cutter plate 130e, and the tension block 170e is housed within the recessed cavity. Inside the recessed cavity, there is a first guide shaft 1111e, which extends parallel to the cutter plate 130e and along the first direction. The tension block 170e is slidably connected to the first guide shaft 1111e. Further, the tension block 170e is generally "L"-shaped, and the recessed cavity is generally " 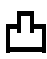 "-shaped to facilitate the sliding of the tension block 170e along the first guide shaft 1111e while limiting its sliding distance. On the side of the tension block 170e facing the cutter plate 130e, there are a second protrusion 171e and a third protrusion 172e, which are staggered in height. The cutter plate 130e is positioned and mounted on the first housing 111e via the second protrusion 171e and the third protrusion 172e. The cutter plate 130e has a sliding groove 131e corresponding to the second protrusion 171e and a positioning hole 132e corresponding to the third protrusion 172e. The sliding groove 131e is a waist-shaped slot extending along the first direction, and the positioning hole 132e is a through-hole corresponding to the third protrusion 172e. The second protrusion 171e extends through the cutter plate 130e, with a longer extension length than the third protrusion 172e.

Additionally, a positioning pin 1112e is fixedly installed on the side of the first housing 111e facing the cutter plate 130e. The positioning pin 1112e is engaged with the sliding groove 131e and is located on the side of the second protrusion 171e away from the sprocket 113e. The sliding groove 131e slides along the first direction under the guiding action of the positioning pin 1112e.

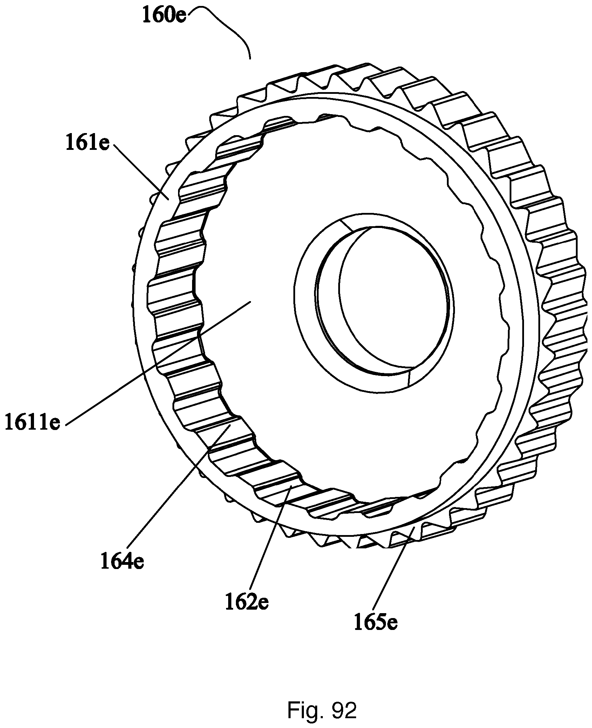

Please refer to Figs. 92 to 94. On the side of the clutch member 160e facing the cutter plate 130e, a cam 180e is fixedly connected. The second protrusion 171e extends to the cam 180e, and the contour surface of the cam 180e abuts against the second protrusion 171e. When the cam 180e rotates, it drives the second protrusion 171e to move along the first direction or in the opposite direction of the first direction, thereby adjusting the tension of the saw chain 140e. In this embodiment, the cam 180e and the clutch member 160e are an integrated piece. The integrated piece can include a one-piece molded part or an assembled part. For example, in some embodiments, the integrated piece can be a cast part, a forged part, or a welded assembly. In other embodiments, the integrated piece can also be an assembled part, where the cam 180e and the clutch member 160e are two separate components fixed together by bolts or other means.

This configuration not only facilitates the fixed installation of the cam 180e and the clutch member 160e on the housing 110e, improving the overall assembly efficiency of the cutting tool 100e, but also enhances the assembly precision between the cam 180e and the clutch member 160e, which further improves the overall assembly precision of the cutting tool 100e. Preferably, in this embodiment, the integrated piece is a one-piece molded part. This eliminates the installation process between the cam 180e and the clutch member 160e, further improving the assembly efficiency of the cutting tool 100e. Additionally, a higher connection strength between the cam 180e and the clutch member 160e can be achieved, increasing the durability of both components.

In this utility model embodiment, the slack state of the saw chain 140e is set as the initial state. At this point, rotating the knob 154e causes the knob 154e to drive the second rotating shaft 156e to move toward the cutter plate 130e. The knob 154e presses the side cover plate 120e, which in turn causes the pressing block 123e to move toward the cutter plate 130e. The locking structure is in the clamping state, so the knob 154e drives the locking structure to rotate, which drives the clutch member 160e to rotate synchronously. The clutch member 160e drives the cam 180e to rotate, and the cam 180e causes the second protrusion 171e to move in the first direction. The second protrusion 171e drives the cutter plate 130e to move in the same direction, thereby tightening the saw chain 140e on the cutter plate 130e.

At this point, continuing to rotate the knob 154e switches the locking structure to the sliding state. The knob 154e continues to rotate, but the locking structure slides relative to the clutch member 160e, meaning the clutch member 160e no longer rotates with the knob 154e. As the knob 154e continues to rotate, the pressing block 123e presses the cutter plate 130e against the first housing 111e, and the knob 154e rotation is stopped when the cutter plate 130e is fully pressed.

Thus, the installation of the cutter plate 130e onto the housing 110e is completed. From the above process, it can be understood that the cutting tool 100e in this application allows both the tension adjustment of the saw chain 140e and the pressing installation of the cutter plate 130e onto the housing 110e to be achieved with just a single rotation of the knob 154e. This design simplifies operation and facilitates quick tension adjustment of the saw chain 140e and secure positioning of the cutter plate 130e.

Please refer to Figs. 92, 93, 96, and 97. In one example of the cutting tool 100e of this utility model, the clutch member 160e includes a first ring portion 161e, which is coaxially arranged with the second rotating shaft 156e. Along the circumferential direction of the first ring portion 161e, the inner ring wall of the first ring portion 161e is provided with multiple first slots 162e. These first slots 162e may be arranged at equal intervals or unequal intervals. Each first slot 162e includes a slot bottom wall 1621e and guide slopes 163e connected to both sides of the slot bottom wall 1621e. Along the circumferential direction of the first ring portion 161e, the guide slopes 163e are symmetrically arranged on both sides of the slot bottom wall 1621e, and the guide slopes 163e are inclined outward from the slot bottom wall 1621e. The cross-sectional shape of the first slot 162e can vary, for example, it may have a trapezoidal or triangular cross-section.

On the side of the knob 154e facing the cutter plate 130e, a boss 1541e is provided. The boss 1541e can be fixedly connected to the knob 154e or integrally formed with it. The boss 1541e can have various shapes, such as a circular disk or rectangular structure. In this embodiment, the boss 1541e is a circular disk structure coaxially arranged with the second rotating shaft 156e. A second slot 1542e is formed on the boss 1541e, extending in the radial direction of the boss 1541e. A first protrusion 151e is slidably installed in the second slot 1542e, and an elastic connection is established between the first protrusion 151e and the second slot 1542e. The elastic connection can be achieved by using a spring or other elastic material. In this embodiment, a compression spring 157e is provided between the first protrusion 151e and the second slot 1542e, with both ends of the compression spring 157e abutting against the first protrusion 151e and the second slot 1542e, respectively. Under the action of the spring force of the compression spring 157e, the first protrusion 151e abuts against the inner ring wall of the first ring portion 161e.

When the clutch member 160e is in the first state, the first protrusion 151e engages with the first slot 162e, and the first protrusion 151e abuts against at least one of the guide slopes 163e. For example, the first protrusion 151e may abut against both the slot bottom wall 1621e and one side of the guide slope 163e, or it may abut against the slot bottom wall 1621e and both guide slopes 163e simultaneously, without specific limitation. The symmetric arrangement of the guide slopes 163e on both sides of the first slot 162e serves two purposes. First, it provides a guiding buffer effect when the first protrusion 151e disengages from the first slot 162e, reducing vibration felt at the knob 154e end and improving the user experience. Second, when the knob 154e rotates in either direction relative to the clutch member 160e, it encounters the same resistance, ensuring that the wear between the first protrusion 151e and the clutch member 160e is uniform, thereby further enhancing the smoothness of the knob 154e rotation.

Although the distribution method of multiple first slots 162e on the first ring portion 161e is not limited, preferably, please refer to Figs. 92, 96, and 97. In one example of the cutting tool 100e of this utility model, multiple first slots 162e are circumferentially arranged along the first ring portion 161e in an array. Under the premise of meeting the engagement requirements of the first protrusion 151e, the specific number of first slots 162e is not limited. This arrangement ensures that when the first protrusion 151e slides from one first slot 162e to another adjacent first slot 162e, the rotation angle of the knob 154e remains consistent, thereby further enhancing the smoothness of the rotation process of the knob 154e, resulting in a better operational feel.

Please refer to Figs. 92, 96, and 97. In one example of the cutting tool 100e of this utility model, a first tooth portion 164e is provided between adjacent first slots 162e. The first tooth portion 164e includes a tooth top surface 1641e, which can be an arc surface, a flat surface, or an inclined surface. In this embodiment, the tooth top surface 1641e is an arc surface coaxially arranged with the first ring portion 161e. The first protrusion 151e includes a guide portion 1511e and an engaging portion 1512e, with the extension direction of the guide portion 1511e being consistent with the radial direction of the first ring portion 161e. Specifically, the guide portion 1511e passes through the compression spring 157e and is engaged in the second slot 1542e. One end of the guide portion 1511e faces the axis of the second rotating shaft 156e, while the other end is connected to the engaging portion 1512e. The engaging portion 1512e extends or retracts relative to the second slot 1542e under the action of the compression spring 157e.

The side of the engaging portion 1512e facing the inner ring wall of the first ring portion 161e has a hemispherical structure 15121e. When the clutch member 160e is in the second state, the engaging portion 1512e slides out of the first slot 162e, passes over the tooth top surface 1641e, and slides into the adjacent first slot 162e. This configuration allows the engaging portion 1512e to tangentially contact the tooth top surface 1641e when passing over it, resulting in smoother sliding between the engaging portion 1512e and the tooth top surface 1641e. Additionally, because the engaging portion 1512e slides out of the first slot 162e and passes over the tooth top surface 1641e before entering the next first slot 162e, the tooth top surface 1641e provides a cushioning effect. This reduces vibrations when the engaging portion 1512e slides in and out between the first slots 162e, further enhancing the operational feel of the knob 154e.

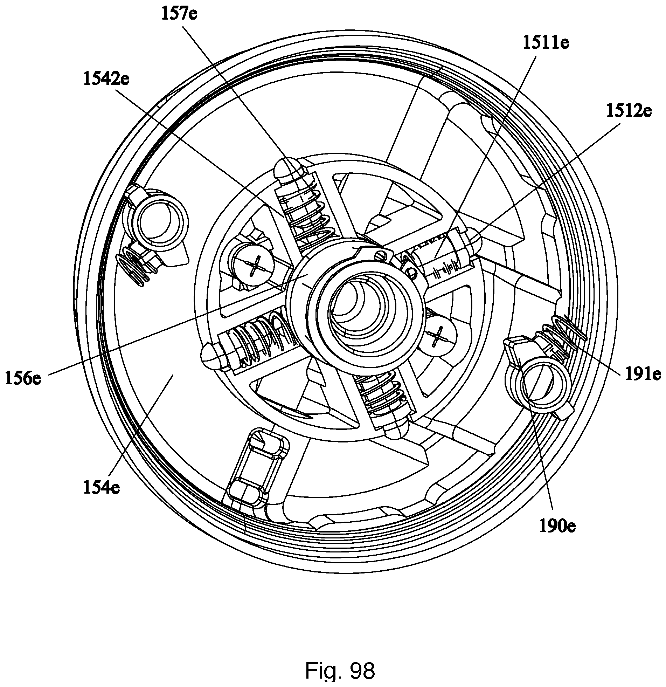

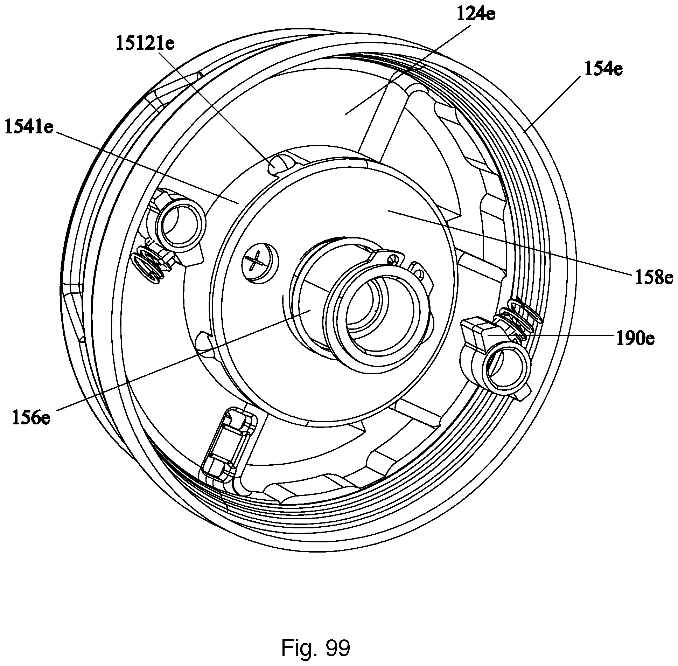

It should be noted that the boss 1541e may be provided with one second slot 1542e or multiple slots. Preferably, in this embodiment, please refer to Figs. 98 and 99. Four second slots 1542e are uniformly distributed in the circumferential direction of the boss 1541e, and each second slot 1542e is provided with one first protrusion 151e and one compression spring 157e. When the clutch member 160e is in the first state, the four first protrusions 151e respectively engage in different first slots 162e. This configuration further enhances the engagement force between the clutch member 160e and the knob 154e, reducing the likelihood of slippage between them. Additionally, since the first protrusions 151e are paired with the first slots 162e, the clutching direction of the clutch member 160e is along the radial direction, resulting in a more uniform force distribution between the clutch member 160e and the knob 154e, which improves the user's experience.

Please refer to Figs. 92, 93, and 97. In one example of the cutting tool 100e of this utility model, along the thickness direction of the first ring portion 161e, the first tooth portion 164e is set with a uniform cross-section. Specifically, the cross-section of the first tooth portion 164e is approximately trapezoidal, and both sides of the tooth top surface 1641e are connected to the guide slopes 163e on the side facing away from the slot bottom wall 1621e. This arrangement ensures that the first slot 162e also has a uniform cross-sectional structure along the height direction of the first ring portion 161e, facilitating the positioning between the engaging portion 1512e and the first slot 162e in the height direction of the first ring portion 161e. This improves the repeatable installation and positioning accuracy of the engaging portion 1512e relative to the first slot 162e. Additionally, it simplifies the processing of the first tooth portion 164e and the first slot 162e, thereby reducing the manufacturing cost of the clutch member 160e.

With this setup, when the knob 154e starts to rotate, the first protrusion 151e engages with the first slot 162e or the first tooth portion 164e on the clutch member 160e, thereby driving the clutch member 160e to rotate. The cam 180e moves the cutter plate 130e along the first direction to tighten the saw chain 140e. When the tension force on the saw chain 140e exceeds the elastic force of the compression spring 157e acting on the first protrusion 151e, continuing to rotate the knob 154e causes the first protrusion 151e to slide within the first ring portion 161e, and the clutch member 160e no longer rotates with the knob 154e. This continues until the cutter plate 130e is pressed, at which point the knob 154e stops rotating.

Please refer to Figs. 92, 93, 96, 98, and 100. In one example of the cutting tool 100e of this utility model, a second tooth portion 165e is annularly arranged on the outer ring wall of the first ring portion 161e. The tooth profile of the second tooth portion 165e adopts a slanted locking tooth structure, and the second tooth portion 165e extends along the axial direction of the first ring portion 161e. There are multiple second tooth portions 165e, and they are arranged in an array along the outer ring wall of the first ring portion 161e. At least one pawl 190e is provided on the side cover plate 120e, and the pawl 190e is equipped with a second engaging portion 192e. The second engaging portion 192e meshes with the second tooth portion 165e to achieve unidirectional rotation of the clutch member 160e relative to the side cover plate 120e, thereby locking the reverse rotation of the clutch member 160e.

In this embodiment, two pawls 190e are symmetrically arranged on the outer ring wall of the first ring portion 161e. A first rotating shaft 121e is provided on the side cover plate 120e, and the first rotating shaft 121e can be integrally connected with the side cover plate 120e or fixedly connected by a bolt, with no limitation on the specific connection method.

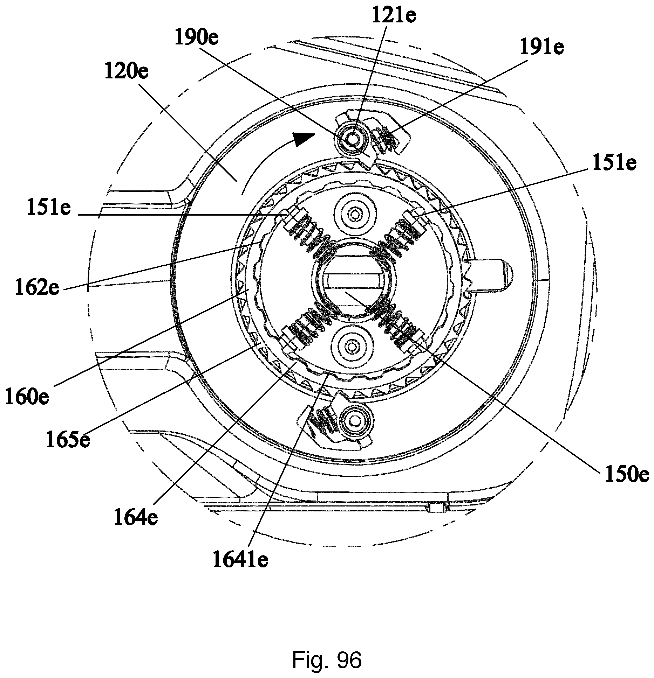

The pawl 190e is provided with a mounting hole, and the pawl 190e is rotatably installed on the first rotating shaft 121e through this mounting hole. Additionally, a first stopper 125e is arranged on the side cover plate 120e. A first elastic member 191e is positioned between the first stopper 125e and the pawl 190e. This first elastic member 191e provides an elastic force to the second engaging portion 192e, pressing it towards the second tooth portion 165e. When the clutch member 160e rotates clockwise relative to the side cover plate 120e (as indicated by the rotational arrow in Fig. 96), the second engaging portion 192e, via the compression and release of the first elastic member 191e, avoids contact with the second tooth portion 165e, allowing the clutch member 160e to rotate in one direction relative to the side cover plate 120e.

Additionally, the pawl 190e is equipped with a second stopper 193e, located on the side opposite the second engaging portion 192e. When the clutch member 160e rotates counterclockwise relative to the side cover plate 120e, the second stopper 193e abuts the first stopper 125e, thereby locking the reverse rotation of the clutch member 160e relative to the side cover plate 120e. This structure, after locking the drive member 150e, prevents the cutter plate 130e from being affected by external force impacts during cutting operations. Such impacts could cause the clutch member 160e and cam 180e to rotate in reverse, potentially leading to the loosening or detachment of the saw chain 140e, resulting in failure.

It should be noted that the first elastic member 191e may be a spring, torsion spring, or other elastic material without limitation. However, preferably in this embodiment, the first elastic member 191e is a spring.

In another embodiment of this utility model, the pawl 190e can also be rotatably connected to the drive member 150e via the first rotating shaft 121e. Specifically, the first rotating shaft 121e may be fixedly connected to the inner wall of the knob 154e, with the pawl 190e rotatably connected to the first rotating shaft 121e. In some other embodiments, the pawl 190e can also be rotatably connected to the first housing 111e through the first rotating shaft 121e. This arrangement achieves the same beneficial effects as in the previously described embodiments.

It should be noted that in another embodiment, please refer to Fig. 99, the pawl 190e is also provided with a fourth protrusion 194e. The first elastic member 191e is sleeved on the fourth protrusion 194e, allowing the first elastic member 191e to expand and contract along the fourth protrusion 194e. The setting of the fourth protrusion 194e serves as a guiding mechanism for the expansion and contraction of the first elastic member 191e, thereby reducing the probability of the first elastic member 191e detaching from the pawl 190e.

In one example of the cutting tool 100e of this utility model, both the clutch member 160e and the pawl 190e are made of metal. This gives the clutch member 160e and pawl 190e high hardness and good wear resistance, thus extending their service life. In another embodiment, the clutch member 160e and the pawl 190e are made of plastic materials. The plastic material can be polypropylene, polyethylene, or any other material with a certain degree of hardness and wear resistance. Using plastic materials for the clutch member 160e and pawl 190e facilitates mass production through injection molding, which helps reduce the production cost of the parts.

In other embodiments, the clutch member 160e and pawl 190e can also be made from a combination of metal and plastic. For example, plastic material can be embedded on the outer surface of metal parts. This configuration ensures that the core of the parts has good fatigue life while providing better friction performance at the meshing parts, thereby improving the effectiveness of reverse locking.

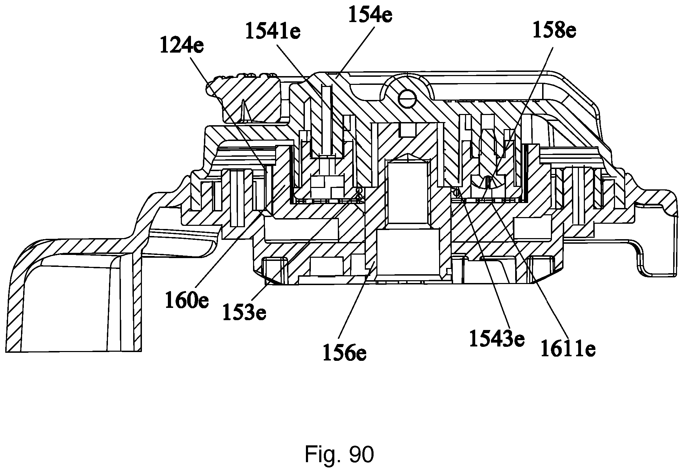

Please refer to Figs. 90, 92, 101, and 102. In one example of the cutting tool 100e of this utility model, the first ring portion 161e also includes a first bottom wall 1611e, which seals the side of the first ring portion 161e that faces the cutter plate 130e. Inside the boss 1541e, a cavity is formed. A cover plate 158e is provided on the side of the boss 1541e facing the first bottom wall 1611e. The cover plate 158e is fixedly connected to the knob 154e by bolts, securing the first protrusion 151e within the boss 1541e, thereby fixing the first protrusion 151e to the knob 154e. The second rotating shaft 156e passes sequentially through the cover plate 158e and the first bottom wall 1611e, and is then threadably connected to the first housing 111e.

The boss 1541e is also provided with a first abutment portion 1543e. A second elastic member 153e is positioned between the first bottom wall 1611e and the first abutment portion 1543e. The second elastic member 153e can be a spring, torsion spring, or other elastic body, without limitation. However, in this embodiment, the second elastic member 153e is preferably a spring. The second elastic member 153e is sleeved around the second rotating shaft 156e, with one end of the second elastic member 153e abutting the first bottom wall 1611e, and the other end passing through the cover plate 158e and abutting the first abutment portion 1543e.

With the second elastic member 153e in place, during the rotation of the knob 154e, the boss 1541e moves closer to the first bottom wall 1611e. Due to the presence of the second elastic member 153e, the first bottom wall 1611e does not come into direct contact with the end surface of the cover plate 158e. This prevents the clutch member 160e and the boss 1541e from getting stuck during their relative rotational movement. At the same time, the elastic force generated by the second elastic member 153e provides a degree of anti-loosening effect on the threaded connection between the second rotating shaft 121e and the housing 110e, further enhancing the stability of the pressing action on the cutter plate 130e.

Please refer to Figs. 87, 103, and 104. In one example of the cutting tool 100e of this utility model, the outer side of the knob 154e is further equipped with a handle 155e. The handle 155e is flip-connected to the knob 154e. The specific shape of the handle 155e is not limited. It could be a semicircular ring structure, a semi-rectangular ring structure, or a triangular ring structure, among others. Preferably, in this embodiment, the handle 155e is a semicircular ring structure. The outer side wall of the knob 154e is provided with an annular groove 1544e that matches the handle 155e. Both ends of the handle 155e in the length direction are rotatably connected to a third rotating shaft 159e, which is fixedly connected to the outer side wall of the knob 154e. The rotational direction of the third rotating shaft 159e is perpendicular to that of the second rotating shaft 156e.

When it is necessary to rotate the knob 154e, the handle 155e is flipped upward, allowing it to disengage from the annular groove 1544e. After the knob 154e is rotated to the desired position, the handle 155e is flipped downward again, causing it to re-engage with the annular groove 1544e. This configuration effectively reduces the overall size of the cutting tool and prevents accidental operation of the knob 154e during use of the cutting tool 100e.

The cutting tool 100e with a two-in-one knob provided by this utility model requires only a single rotation of the knob 154e to achieve both tension adjustment of the saw chain 140e and pressing installation of the cutter plate 130e on the housing 110e. This design is simple and convenient to operate, facilitating quick tension adjustment of the saw chain 140e and secure positioning of the cutter plate 130e. Additionally, in the embodiments of this application, the cam 180e and the clutch member 160e are integrated into a single piece, making the installation of the cam 180e and the clutch member 160e on the housing 110e easier. This not only improves the assembly efficiency of the cutting tool 100e but also enhances the assembly precision of the tool.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

## Claims

1. A power tool apparatus, comprising:
a housing, wherein the housing has a battery pack cavity, wherein the battery pack cavity is configured to install a battery pack;
a control board, wherein the control board is disposed within the housing;
a working part, wherein the working part is disposed on the housing;
a motor, wherein the motor is disposed within the housing, wherein the motor drives the working part to operate;
an air duct, wherein the air duct is disposed within the housing, wherein the air duct is configured for heat dissipation of the power tool apparatus; and
a fan, wherein the fan is fixedly connected to an output shaft of the motor, wherein the fan is configured to drive air to flow along the air duct when rotating;
wherein the housing has at least two air inlets and at least one first air outlet, wherein the air duct is disposed between the air inlets and the first air outlet.

2. The power tool apparatus of claim 1, wherein the air duct has a confluence opening, wherein air flows from at least two of the air inlets converge into the confluence opening.

3. The power tool apparatus of claim 2, wherein the confluence opening is disposed between the battery pack cavity and the control board.

4. The power tool apparatus of claim 3, wherein heat dissipation columns are disposed on the back side of the control board, wherein a first air guide plate is disposed below the confluence opening, wherein a second air guide plate is disposed on the side of the control board near the confluence opening, wherein the second air guide plate extends in a direction away from the heat dissipation columns, wherein both the first air guide plate and the second air guide plate direct air flow towards the heat dissipation columns.

5. The power tool apparatus of claim 2, wherein a filtering device is disposed at the air inlets.

6. The power tool apparatus of claim 2, wherein a guiding part covering the motor is disposed within the housing, wherein the guiding part is disposed between the confluence opening and the first air outlet of the air duct.

7. The power tool apparatus of claim 6, wherein the guiding part has a guiding inlet, wherein the guiding inlet and the confluence opening are disposed on opposite sides of the control board.

8. The power tool apparatus of claim 1, wherein the housing includes a first housing, a second housing, and an upper housing, wherein the upper housing is disposed above the battery pack cavity, wherein the air inlets comprises a first air inlet disposed on the side wall of the housing, a second air inlet disposed at the bottom of the battery pack cavity, a third air inlet disposed at the connection between the first housing and the upper housing, a fourth air inlet disposed at the connection between the second housing and the upper housing, and a fifth air inlet disposed at the top of the side wall of the battery pack cavity.

9. The power tool apparatus of claim 8, wherein a recessed groove that dents inward to the housing is disposed at the connection between the first housing and the upper housing, wherein the third air inlet is disposed at the inner top of the recessed groove.

10. The power tool apparatus of claim 1, wherein the housing includes a first housing and a second housing, wherein the power tool apparatus has several wire connecting parts for connecting wire harnesses, wherein all the wire connecting parts are disposed on a visible surface of the power tool apparatus when the first housing is removed.

11. The power tool apparatus of claim 10, wherein the battery pack cavity is fixed on the housing, wherein the wire connecting parts are disposed on the side wall of the battery pack cavity near the second housing.

12. The power tool apparatus of claim 1, wherein the motor has a motor housing, wherein the fan has fan blades, wherein the outer diameter of the fan blades is larger than the outer diameter of the motor housing.

13. The power tool apparatus of claim 12, wherein the power tool apparatus further includes a volute casing, wherein the volute casing is fitted over the fan, wherein the volute casing has a spiral passage, wherein the spiral passage gradually widens along the rotation direction of the fan, wherein the volute casing has a second air outlet, wherein the second air outlet is disposed at the first air outlet.

14. The power tool apparatus of claim 13, wherein a wind-closing plate is disposed at the second air outlet, wherein the wind-closing plate extends from the second air outlet of the volute casing in the direction opposite to the fan's rotation direction.

15. The power tool apparatus of claim 14, wherein a perpendicular line passing through the end face of the wind-closing plate passes through the center of the fan.

16. The power tool apparatus of claim 1, wherein the working part includes a cutting assembly; wherein the power tool apparatus further comprises: a lubrication device disposed within the housing, wherein the lubrication device includes an oil pump and an oil bottle, wherein one end of the oil pump is connected to the oil bottle and the other end is connected to the cutting assembly; wherein the oil pump includes a pump body, wherein the pump body has a first positioning member and a second positioning member, wherein a center line connecting the first positioning member and the second positioning member is offset from the center line of the pump body; wherein the pump body also has at least one mounting hole.

17. The power tool apparatus of claim 16, wherein the first positioning member and the second positioning member are positioning pins protruding from the surface of the pump body, wherein corresponding positioning holes that mate with the positioning pins are disposed on the housing.

18. The power tool apparatus of claim 16, wherein the oil pump further includes a transmission piece and a worm, wherein the transmission piece is coaxially fixed with the output shaft of the motor, wherein the worm is coaxially arranged with the transmission piece and is meshed with a driving turbine inside the pump body, wherein a transmission device for driving the worm to rotate is disposed between the worm and the transmission piece.

19. The power tool apparatus of claim 18, wherein the first positioning member and the second positioning member are symmetrically distributed with respect to the perpendicular line of the center of the worm to the center line of the pump body.

20. The power tool apparatus of claim 1, wherein the ratio of the total cross-sectional area of the air inlets to the total cross-sectional area of the first air outlet is 0.8~2.0.
